# EUROPÄISCHE PATENTANMELDUNG

(11) **EP 4 793 004 A2**
(43) Veröffentlichungstag der Anmeldung: **19.08.2026**
(21) Anmeldenummer: 26177008.5
(22) Anmeldetag: 02.04.2025
(51) Int. Cl.: B25J 21/00

(54) **BARRIERESYSTEM, BAUTEIL, SYSTEM UND VERFAHREN**

(30) Priorität: 04.04.2024 DE 102024109449
(62) Dokumentnummer(n) der früheren Anmeldung(en) nach Art. 76 EPÜ: 25716693.4 / 4 788 508
(71) Anmelder: GRONINGER & CO. GMBH, 74564 Crailsheim (DE)
(72) Erfinder: Schneider, Matthias, 74597 Stimpfach-Rechenberg (DE); Rettner, Eike, 74564 Crailsheim (DE); Borkmann, Denis, 74589 Satteldorf (DE); Merz, Armin, 73479 Ellwangen (DE); Weinzierl, Benedikt, 94327 Bogen (DE)
(74) Vertreter: Witte, Weller & Partner Patentanwälte mbB

(57) **Zusammenfassung**

Die vorliegende Erfindung betrifft ein Barrieresystem, insbesondere Isolatorsystem (10), wobei das Barrieresystem (10) eine Umgebung mit beschränktem Zugang, insbesondere einen Isolator (12); ein Transfersystem (16) mit einer Zuführvorrichtung (24) zum Zuführen zumindest eines Bauteils (32) für ein Verarbeitungssystem (30) in die Umgebung (12); eine in der Umgebung (12) angeordnete Station (36) und eine in der Umgebung (12) angeordnete Handhabungseinrichtung (46), vorzugsweise ein Handhabungsroboter, aufweist, wobei die Handhabungseinrichtung (46) dazu eingerichtet ist, ein mittels der Zuführvorrichtung (24) in die Umgebung (12) zugeführtes Bauteil (32) aufzunehmen und zwischen der Zuführvorrichtung (24) und der Station (36) zu transferieren und das Bauteil (32) mit der Station (36) zu koppeln, um das Bauteil (32) einzubauen, oder ein Bauteil (32) von der Station (36) zu entkoppeln, um das Bauteil (32) auszubauen, wobei die Handhabungseinrichtung (46) einen Endeffektor (50) aufweist, wobei der Endeffektor (50) zumindest zwei, voneinander beabstandete Aufnahmeelemente (52) aufweist, wobei die Handhabungseinrichtung (46) dazu eingerichtet ist, den Endeffektor (50) derart zu bewegen, dass die Aufnahmeelemente (52) in die Gegenstücke (34) des Bauteils (32) eingreifen, um das Bauteil (32) aufzunehmen und den Endeffektor (50) derart zu bewegen, dass die Aufnahmeelemente (52) und die Gegenstücke (34) des Bauteils (32) voneinander getrennt werden, um das Bauteil (32) freizugeben. Des Weiteren betrifft die vorliegende Erfindung ein Bauteil, ein System und mehrere Verfahren.

## Beschreibung

Die vorliegende Erfindung betrifft ein Barrieresystem, insbesondere Isolatorsystem mit einer Umgebung mit beschränktem Zugang, einem Transfersystem mit einer Zuführvorrichtung zum Zuführen zumindest eines Bauteils für ein Verarbeitungssystem in die Umgebung und eine in der Umgebung angeordnete Handhabungseinrichtung, die dazu eingerichtet ist, ein zugeführtes Bauteil aufzunehmen und zwischen der Zuführvorrichtung und einer Station innerhalb der Umgebung zu transferieren und das Bauteil mit der Station zu koppeln, um das Bauteil einzubauen, oder ein Bauteil von der Station zu entkoppeln, um das Bauteil auszubauen. Des Weiteren betrifft die vorliegende Erfindung ein Bauteil für ein Verarbeitungssystem eines Barrieresystems. Des Weiteren betrifft die vorliegende Erfindung System mit einem Barrieresystem und zumindest einem Bauteil. Des Weiteren betrifft die vorliegende Erfindung ein Verfahren zum Bereitstellen eines Verarbeitungssystems eines Barrieresystems in einer Umgebung mit beschränktem Zugang. Des Weiteren betrifft die vorliegende Erfindung Verfahren zum Koppeln eines Bauteils eines Verarbeitungssystems innerhalb einer Umgebung mit beschränktem Zugang. Des Weiteren betrifft die vorliegende Erfindung ein Verfahren zum Initiieren einer Handhabung zumindest eines Bauteils für ein Verarbeitungssystem eines Barrieresystems in einer Umgebung mit beschränktem Zugang.

Unter einem Barrieresystem ist ein System zu verstehen, das eine physikalische und aerodynamische Barriere, z.B. mittels Luftüberdruck, zwischen einer externen Umgebung, beispielsweise einer externen Reinraumumgebung, und einem Arbeitsprozess bietet. Insbesondere wird mittels eines Barrieresystems eine Umgebung mit beschränktem Zugang bereitgestellt, in der der Arbeitsprozess durchgeführt werden kann. Im Stand der Technik sind verschiedene Barrieresysteme bekannt. Ein Barrieresystem kann beispielsweise einen Isolator oder eine Barriere mit eingeschränktem Zugang, ein sogenanntes RABS, "Restricted Area Barrier System", aufweisen. Das RABS kann ein offenes RABS oder ein geschlossenes RABS sein.

Die vorliegende Erfindung beschäftigt sich in erster Linie mit aseptischen Isolatoren als Barrieresysteme. Die vorliegende Erfindung kann aber auch Anwendung in anderen Barrieresystemen, wie beispielsweise in einem offenen oder geschlossenen RABS, finden.

Unter dem Begriff "Isolator" ist allgemein ein Behälter zu verstehen, der gegenüber dem umgebenden Arbeitsraum hermetisch und gasdicht abgeschlossen ist. Innerhalb eines Isolators kann eine definierte Atmosphäre zur Bearbeitung empfindlicher oder gefährlicher Produkte erzeugt werden.

In diesem Kontext werden Isolatoren üblicherweise in der biopharmazeutischen Prozesstechnik, beispielsweise als Teil einer Füllanlage mit mehreren Prozess- und Verarbeitungsstationen, verwendet, um eine hochreine oder sterile, sprich keimfreie Umgebung zu schaffen.

In derartigen Füllanlagen können beispielsweise Behälter, z.B. Vials, Karpulen, Fläschchen, Spritzen, Petrischalen, Verbrauchsgüter und/oder dergleichen, oftmals automatisiert in den Isolator eingebracht und mit einem Produkt, z.B. einem pharmazeutischen oder kosmetischen Produkt, insbesondere einer Flüssigkeit oder einem Pulver, befüllt und dann mit einem Verschlusselement, z.B. einem Stopfen oder einer Bördelkappe, verschlossen werden.

Zum Zuführen, bzw. Einbringen von Behältern oder Verbrauchsgütern in den Isolator können Zuführvorrichtungen innerhalb des Isolators verwendet werden. Beispielsweise können die Behälter oder Verbrauchsgüter in einer Transferschleuse bzw. einem Bereitstellungsbehälter, z.B. ein Beta-Behälter, außerhalb des Isolators bereitgestellt werden. Dieser Bereitstellungsbehälter kann dann von Außen an einen Port, z.B. einem Alpha-Beta-Port, des Isolators gekoppelt werden und anschließend unter Beibehaltung der Integrität der definierten Atmosphäre des Isolators in den Isolator eingebracht werden.

Zum Handhaben der Behälter oder Verbrauchsgüter können in dem Isolator eine oder mehrere Handhabungseinrichtungen, z.B. Handhabungsroboter, angeordnet sein.

Zum Verarbeiten der pharmazeutischen oder kosmetischen Produkte kann ein Verarbeitungssystem im inneren des Isolators eingesetzt werden. Das Verarbeitungssystem kann entsprechend der beabsichtigten Arbeitsschritte unterschiedliche Verarbeitungsstationen aufweisen. Beispielsweise kann zum Füllen der Behälter in dem Isolator eine Füllstation vorgesehen sein. Zum Verschließen der Behälter können in dem Isolator eine oder mehrere Verschließstationen, z.B. eine Stopfensetzstation und/oder eine Bördelstation, angeordnet sein.

Für andere Arbeitsschritte kann es erforderlich sein, Filter oder Filterpakete, sowie Begasungsglocken, oder Handhabungssysteme wie beispielsweise Transferrohre oder Zuführplatten zum Sammeln und Transferieren und/oder Zuführen von zu verarbeitenden Behältern oder Verbrauchsgütern, in das Verarbeitungssystem zu integrieren.

Das Einbringen und Handhaben von, insbesondere steriler, Komponenten, bzw. Bauteile solcher Verarbeitungsstationen des Verarbeitungssystems ist grundsätzlich mit den Mitteln zum Einbringen und Handhaben der Behälter oder Verbrauchsgütern möglich. So können die Komponenten, bzw. Bauteile der Verarbeitungsstationen mittels eines Portsystems oder einer Zuführvorrichtung in den Isolator eingebracht und mittels einer Handhabungseinrichtung in dem Isolator gehandhabt werden. Auf diese Weise kann ein Rüstsystem bereitgestellt werden, dass ein automatisches Rüsten des Verarbeitungssystems innerhalb des Isolators ermöglicht.

Derartige Rüstsysteme sind im Stand der Technik bekannt.

Beispielsweise zeigt die Druckschrift WO 2020/225838 A1 eine Vorrichtung und ein Verfahren für die automatisierte Verwaltung des Aufbaus einer Maschine zur Verarbeitung und/oder Verpackung von pharmazeutischen Produkten in einer isolierten Verarbeitungskammer mit kontrollierter Atmosphäre. Die Vorrichtung umfasst einen Transportbehälter, der ein oder mehrere Bauelemente aufnehmen und diese in die Verarbeitungskammer einbringen kann. Die Vorrichtung umfasst auch eine Handhabungsvorrichtung und ein Greifwerkzeug zum Handhaben der Bauelemente.

Die bekannten Isolatorsysteme und Verfahren zum automatisierten Rüsten der Verarbeitungssysteme in Isolatoren lassen aber noch Raum für Verbesserungen, insbesondere hinsichtlich der Handhabung der Bauteile.

Vor diesem Hintergrund ist es eine Aufgabe der vorliegenden Erfindung eine verbessertes Barrieresystem, insbesondere Isolatorsystem, sowie ein verbessertes Verfahren zum Bereitstellen eines Verarbeitungssystems eines Barrieresystems in einer Umgebung mit beschränktem Zugang bereitzustellen, insbesondere in dem die Handhabung der Bauteile verbessert ist.

Gemäß einem ersten Aspekt der vorliegenden Erfindung wird ein Barrieresystem, insbesondere Isolatorsystem, bereitgestellt, wobei das Barrieresystem eine Umgebung mit beschränktem Zugang, insbesondere einen Isolator; ein Transfersystem mit einer Zuführvorrichtung zum Zuführen zumindest eines Bauteils für ein Verarbeitungssystem in die Umgebung; eine in der Umgebung angeordnete Station und eine in der Umgebung angeordnete Handhabungseinrichtung, vorzugsweise ein Handhabungsroboter, aufweist, wobei die Handhabungseinrichtung dazu eingerichtet ist, ein mittels der Zuführvorrichtung in die Umgebung zugeführtes Bauteil aufzunehmen und zwischen der Zuführvorrichtung und der Station zu transferieren und das Bauteil mit der Station zu koppeln, um das Bauteil einzubauen, oder ein Bauteil von der Station zu entkoppeln, um das Bauteil auszubauen, wobei die Handhabungseinrichtung einen Endeffektor aufweist, wobei der Endeffektor zumindest zwei, voneinander beabstandete Aufnahmeelemente aufweist, wobei die Handhabungseinrichtung dazu eingerichtet ist, den Endeffektor derart zu bewegen, dass die Aufnahmeelemente in Gegenstücke des Bauteils eingreifen, um das Bauteil aufzunehmen und den Endeffektor derart zu bewegen, dass die Aufnahmeelemente und die Gegenstücke des Bauteils voneinander getrennt werden, um das Bauteil freizugeben.

Gemäß einem zweiten Aspekt der vorliegenden Erfindung wird ein Bauteil für ein Verarbeitungssystem eines Barrieresystems, insbesondere Isolatorsystems, bereitgestellt, wobei das Bauteil Gegenstücke zum Eingreifen von Aufnahmeelementen eines Endeffektors einer Handhabungseinrichtung des Barrieresystems aufweist, wobei die Gegenstücke des Bauteils als Aussparungen in dem Bauteil oder als Aussparungen in einem Adapter, der an dem Bauteil fixiert oder fixierbar ist, ausgebildet sind, wobei eine erste Aussparung eine im Wesentlichen halbkreisförmige Aussparung mit einem Kreisdurchmesser ist und die einen ersten Mittelpunkt definiert und eine radiale Öffnung aufweist, deren Breite mindestens dem Kreisdurchmesser der ersten Aussparung entspricht und eine zweite, insbesondere im Wesentlichen halbkreisförmige, Aussparung einen zweiten Mittelpunkt definiert, wobei der zweite Mittelpunkt von dem ersten Mittelpunkt in einem Abstand beabstandet ist, wobei die zweite, insbesondere halbkreisförmige, Aussparung einen ersten Bereich der zweiten Aussparung darstellt und wobei die zweite Aussparung einen zweiten Bereich aufweist, der mit dem ersten Bereich verbunden ist, und wobei der zweite Bereich dazu eingerichtet ist, eine Bewegung eines der Aufnahmeelemente, innerhalb der zweiten Aussparung, entlang einer Bahn von dem zweiten Bereich in den ersten Bereich zu ermöglichen, wobei sich der zweite Bereich entlang eines Abschnitts der Bahn erstreckt, insbesondere wobei die zweite Aussparung in dem zweiten Bereich eine größere Breite aufweist als im ersten Bereich und wobei das Bauteil des Weiteren dazu eingerichtet ist, mit einer in einem Isolator des Barrieresystems angeordneten Station des Barrieresystems koppelbar zu sein.

Das Bauteil nach dem zweiten Aspekt eignet sich insbesondere für den Einsatz in dem Barrieresystem nach dem ersten Aspekt.

Gemäß einem dritten Aspekt der vorliegenden Erfindung wird ein System mit einem Barrieresystem nach dem ersten Aspekt und zumindest einem Bauteil nach dem zweiten Aspekt bereitgestellt.

Gemäß einem vierten Aspekt der vorliegenden Erfindung wird ein Verfahren zum Bereitstellen eines Verarbeitungssystems eines Barrieresystems, insbesondere Isolatorsystems, in einer Umgebung mit beschränktem Zugang des Barrieresystems, insbesondere einem Isolator, bereitgestellt, wobei das Verfahren die folgenden Schritte aufweist: Zuführen zumindest eines Bauteils, insbesondere nach dem zweiten Aspekt, für das Verarbeitungssystem in die Umgebung mittels einer Zuführvorrichtung des Barrieresystems; Aufnehmen des zumindest einen Bauteils mittels einer in der Umgebung angeordneten Handhabungseinrichtung des Barrieresystems, vorzugsweise einem Handhabungsroboter; Transferieren des zumindest einen aufgenommen Bauteils innerhalb der Umgebung zwischen der Zuführvorrichtung und einer in der Umgebung angeordneten Station des Barrieresystems mittels der Handhabungseinrichtung; Koppeln des zumindest einen Bauteils mit der Station mittels der Handhabungseinrichtung , um das Bauteil einzubauen; und Freigeben des zumindest einen Bauteils mittels der Handhabungseinrichtung, wobei der Schritt des Aufnehmens einen Schritt des Einführens eines Endeffektors der Handhabungseinrichtung umfasst, wobei der Endeffektor zumindest, zwei voneinander beabstandete Aufnahmeelemente aufweist, wobei die Handhabungseinrichtung dazu eingerichtet ist, den Endeffektor derart zu bewegen, dass die Aufnahmeelemente in Gegenstücke des Bauteils eingreifen, um das Bauteil aufzunehmen; und der Schritt des Freigebens einen Schritt des Ausführens des Endeffektors umfasst, wobei die Handhabungseinrichtung dazu eingerichtet ist, den Endeffektor derart zu bewegen, dass die Aufnahmeelemente und die Gegenstücke des Bauteils voneinander getrennt werden, um das Bauteil freizugeben.

Gemäß einem fünften Aspekt der vorliegenden Erfindung wird ein Verfahren zum Koppeln eines Bauteils für ein Verarbeitungssystem eines Barrieresystems, insbesondere Isolatorsystems, in einer Umgebung mit beschränktem Zugang, insbesondere in einem Isolator, des Barrieresystems, bereitgestellt, wobei das Verfahren die folgenden Schritte aufweist: Steuern eines Aktors einer Station des Barrieresystems mittels einer Steuereinrichtung des Barrieresystems, sodass zumindest eine Befestigungsvorrichtung der Station in eine zum Koppeln mit dem Bauteil vordefinierte Position bewegt wird; und Koppeln des Bauteils mit der Station mittels einer Bewegung einer Handhabungseinrichtung des Barrieresystems, wobei die Handhabungseinrichtung das Bauteil aufgenommen hat.

Gemäß einem sechsten Aspekt der vorliegenden Erfindung wird ein Verfahren zum Koppeln eines Bauteils für ein Verarbeitungssystem eines Barrieresystems, insbesondere Isolatorsystems, in einer Umgebung mit beschränktem Zugang, insbesondere in einem Isolator, des Barrieresystems, bereitgestellt, wobei das Verfahren die folgenden Schritte aufweist: Lösen einer Arretierungseinrichtung einer ersten Station des Barrieresystems mittels einer Bewegung eines Aktors einer zweiten Station und/oder mittels einer Bewegung eines Aktors der ersten Station des Barrieresystems, um das Koppeln des Bauteils mit der ersten Station zu ermöglichen; Koppeln des Bauteils mit der ersten Station mittels einer Bewegung einer Handhabungseinrichtung des Barrieresystems, wobei die Handhabungseinrichtung das Bauteil aufgenommen hat; und anschließend Arretieren der Arretierungseinrichtung mittels einer Bewegung des Aktors der zweiten Station und/oder mittels einer Bewegung der ersten Station, um das Koppeln des Bauteils mit der ersten Station zu sichern.

Gemäß einem siebten Aspekt der vorliegenden Erfindung wird ein Verfahren zum Initiieren einer Handhabung zumindest eines Bauteils für ein Verarbeitungssystem eines Barrieresystems, insbesondere Isolatorsystems, in einer Umgebung mit beschränktem Zugang, insbesondere einem Isolator, des Barrieresystems, bereitgestellt, wobei das Verfahren die folgenden Schritte aufweist: Definieren einer Ausgangsposition des zumindest einen Bauteils, relativ zu einer Handhabungseinrichtung und relativ zu einer Station des Barrieresystems, indem eine Koordinateninitiierungseinrichtung des Barrieresystems mit einer Zuführvorrichtung des Barrieresystems wechselwirkt.

Die Verfahren gemäß dem vierten, fünften, sechsten und siebten Aspekt können insbesondere in dem Barrieresystem nach dem ersten Aspekt oder in dem System nach dem dritten Aspekt durchgeführt werden, wobei es sich bei dem Bauteil um ein Bauteil nach dem zweiten Aspekt handeln kann.

Die Verfahren gemäß dem vierten, fünften, sechsten und siebten Aspekt können insbesondere um zumindest einen Verfahrensschritt nach einem oder mehreren der jeweils anderen Verfahren gemäß dem vierten und/oder fünften und/oder sechsten und/oder siebten Aspekt ergänzt werden.

Das Barrieresystem ist insbesondere ein Isolatorsystem. Das Isolatorsystem kann vorzugsweise Teil einer Füllanlage mit mehreren Prozess- und Verarbeitungsstationen sein. Die Füllanlage kann beispielsweise eine Anlage zum Füllen und Verschließen von Behältern mit einer pharmazeutischen oder kosmetischen Substanz sein. Das Barrieresystem ist dazu eingerichtet, automatisch rüstbar zu sein. Das bedeutet, dass mittels eines Rüstvorgangs das Verarbeitungssystem in dem Isolator des Barrieresystems bereitgestellt werden kann. Der Rüstvorgang kann insbesondere mittels dem Verfahren nach dem vierten Aspekt erfolgen.

Der Isolator kann einen Innenraum aufweisen. Der Isolator ist vorzugsweise ein aseptischer Isolator. Ein aseptischer Isolator weist eine hochreine oder sterile, sprich keimfreie, Umgebung in dem Innenraum auf. In dem Isolator, insbesondere in dem Innenraum des Isolators, sind die Handhabungseinrichtung und die (zumindest eine) Station angeordnet. Des Weiteren kann die Zuführvorrichtung in dem Isolator angeordnet sein. Des Weiteren ist das Verarbeitungssystem in dem Isolator angeordnet, wenn das Verarbeitungssystem durch Einbauen des zumindest einen Bauteils bereitgestellt ist.

Das Verarbeitungssystem kann ein Teil der Füllanlage sein. Das Verarbeitungssystem kann eine Prozess- oder Verarbeitungsstation, wie beispielsweise eine Abfüll- und/oder Verschließstation zum Füllen und Verschließen von Behältern mit einer pharmazeutischen oder kosmetischen Substanz aufweisen. Das Verarbeitungssystem kann in dem Isolator bereitgestellt werde, indem das zumindest eine Bauteil durch Kopplung mit der Station eingebaut wird. Auf diese Weise wird das Verarbeitungssystem in dem Isolator des Barrieresystems eingebaut. Im eingebauten Zustand weist das Verarbeitungssystem mindestens ein Bauteil auf. Im eingebauten Zustand kann das Verarbeitungssystem auch mehrere Bauteile aufweisen, insbesondere wobei die Bauteile mit mehreren Stationen gekoppelt sind. Insbesondere können mehrere Bauteile miteinander verbunden werden, wenn diese zusammenwirken und/oder eine gemeinsame Funktion bereitstellen. Beispielsweise können mehrere Bauteile miteinander verbunden werden, um eine Verarbeitungsstation bereitzustellen.

Die, insbesondere zumindest eine, Station ist dazu eingerichtet, zumindest ein Bauteil aufzunehmen und in zumindest einer definierten Position zu fixieren, um das Verarbeitungssystem bereitzustellen. Die Station kann vorzugsweise an einem Boden des Isolators befestigt sein. Insbesondere kann die Station an einer Wand oder an einer Decke des Isolators befestigt sein. Die Station kann mittels einer Montagevorrichtung befestigt sein. Hierbei kann es sich beispielsweise um einen Bolzen oder andere herkömmliche Befestigungsmittel handeln. Die Station kann einen Aktor aufweisen. Insbesondere kann ein bewegbarer, bzw. aktuierbarer Teil des Aktors mit dem Bauteil koppelbar sein. Dieser Teil kann eine Befestigungsvorrichtung der Station sein. Die Befestigungsvorrichtung dient zum Aufnehmen, bzw. Befestigen, bzw. Koppeln des Bauteils. Die Befestigungsvorrichtung ist beispielsweise eine Aufnahme für eine zylindrisches Gegenstück. Der Aktor kann im gekoppelten Zustand das Bauteil bewegen. Der Aktor kann beispielsweise ein ausfahrbarer und/oder drehbarer und/oder schwenkbarer Zylinder sein. Der Aktor kann die Befestigungsvorrichtung in eine erste Position und zumindest in eine zweite Position verbringen. Die erste Position kann eine vordefinierte Position zum Koppeln mit dem Bauteil sein. In der vordefinierten Position ist das Bauteil in besonders einfacher Weise mit der Befestigungsvorrichtung koppelbar. Die vordefinierte Position kann für die Handhabungseinrichtung besonders einfach erreichbar sein. Bei der zweiten Position kann es sich um eine Betriebsposition handeln. Insbesondere kann der Aktor von der Steuereinrichtung mittels des Schritts des Steuerns gesteuert werden. Insbesondere kann die Station eine Arretierungseinrichtung aufweisen. Die Arretierungseinrichtung kann Teil der Befestigungsvorrichtung sein, oder in diese integriert sein. Weist das Barrieresystem mehrere Stationen auf, können diese baugleich oder unterschiedlich ausgestaltet sein. Beispielsweise können sie sich in Hinblick auf einen Bewegungsbereich des Aktors unterscheiden. Der Bewegungsbereich ist der Bereich innerhalb des Isolators, den der Aktor mit dem bewegbaren Teil erreichen kann.

Das Steuern kann insbesondere mittels der Steuereinrichtung nach dem fünften Aspekt durchgeführt werden.

Die Arretierungseinrichtung kann eine Erhöhung der Sicherheit dienen, indem die Kopplung eines eingebauten Bauteils gesichert wird, sodass ein Entkoppeln des Bauteils während des Betriebs des Verarbeitungssystems vermeiden wird. Des Weiteren ermöglicht eine Arretierungseinrichtung das Einbauen eines Bauteils in komplexen Einbausituationen, beispielsweise über Kopf, indem das Bauteil mittels der Arretierungseinrichtung gegen ein Entkoppeln von der Station gesichert wird. Die Arretierungseinrichtung kann ein üblicher Mechanismus zum Arretieren zweier miteinander gekoppelter Elemente sein. Mittels der Arretierungseinrichtung kann die Kopplung des Bauteils mit der Station bei festgestellter Arretierung gesichert werden, sodass die Kopplung nicht gelöst werden kann. Bei gelöster Arretierung kann auch die Kopplung des Bauteils mit der Station gelöst werden. Insbesondere kann sowohl das Bauteil als auch die Station miteinander korrespondierende Teile der Arretierungseinrichtung aufweisen, die ineinandergreifen können, um die Arretierung zu bewirken. Insbesondere weist die Arretierungseinrichtung einen zugänglichen Schalter auf. Der Schalter schaltet den Zustand der Arretierungseinrichtung zwischen einem arretierten Zustand und einem gelösten Zustand.

Die Arretierungseinrichtung kann insbesondere mit dem Schritt des Lösens nach dem sechsten Aspekt gelöst werden. Insbesondere kann dabei der Schalter den Zustand der Arretierungseinrichtung in den gelösten Zustand schalten. In diesem Zustand können die Koppelpartner gekoppelt oder getrennt werden, um das Koppeln oder das Entkoppeln zu realisieren.

Die Arretierungseinrichtung kann insbesondere mit dem Schritt des Arretierens nach dem sechsten Aspekt arretiert werden. Insbesondere kann dabei der Schalter den Zustand der Arretierungseinrichtung in den arretierten Zustand schalten. In diesem Zustand können gekoppelte Koppelpartner nicht getrennt werden und nicht gekoppelte Koppelpartner nicht gekoppelt werden. Mit anderen Worten ist dann der Zustand der Arretierungseinrichtung gesichert.

Die Steuereinrichtung kann dazu eingerichtet sein, den Aktor und/oder die Handhabungseinrichtung zu steuern. Es kann aber auch jeweils eine Steuereinrichtung zum Steuern des Aktors und der Handhabungseinrichtung geben, insbesondere wobei die Steuereinrichtungen in Datenaustausch stehen. Insbesondere können auf diese Weise Bewegungen der Handhabungseinrichtung und des Aktors aufeinander abgestimmt werden.

Das Bauteil ist mit der Station koppelbar. Das bedeutet, dass das Bauteil an der Station reversibel befestigt und in zumindest einer definierten Position fixiert werden kann. Hierzu kann das Bauteil insbesondere ein Koppelelement zum Koppeln mit der Befestigungsvorrichtung oder der Arretierungseinrichtung aufweisen. Das Bauteil ist im eingebauten Zustand, bzw. im mit der Station gekoppelten Zustand fixiert. Das Bauteil ist im eingebauten Zustand Bestandteil des Verarbeitungssystem. Insbesondere kann das Bauteil im eingebauten Zustand der einzige Bestandteil des Verarbeitungssystems sein. Das Bauteil kann auch als Funktionselement für das Verarbeitungssystem bezeichnet werden. Jedes Bauteil stellt eine Funktion des Verarbeitungssystems bereit. Beispielsweise kann ein Bauteil ein Filter oder ein Filterpacket sein. In diesem Fall stellt das Bauteil eine Filterfunktion bereit. Beispielsweise kann ein Bauteil ein Transferrohr sein. In diesem Fall stellt das Bauteil eine Transferfunktion, bspw. für Verbrauchsgüter bereit. Beispielsweise kann ein Bauteil eine Objektplatte oder eine Zuführplatte sein. In diesem Fall stellt das Bauteil eine Sammel- oder eine Zuführfunktion für Objekte, bspw. Verschlusskappen, bereit. Die Art und Funktion des Bauteils kann entsprechend der gewünschten Funktionen des Verarbeitungssystem gewählt werden. Ein Bauteil kann auch ein Stützelement sein. In diesem Fall stellt das Bauteil eine Stützfunktion, insbesondere für ein anderes Bauteil bereit. Ein Bauteil, das alle Funktionen des Verarbeitungssystems aufweist, kann als das Verarbeitungssystem bezeichnet werden.

Das Transfersystem dient dazu, die Bauteile in den Isolator einzubringen. Mittels des Transfersystems können Bauteile in den Isolator eingebracht werden, ohne die Integrität der definierten Atmosphäre des Isolators zu beeinträchtigen. Das Transfersystem kann beispielsweise eine Isolatoröffnung aufweisen. Die Isolatoröffnung kann mittels einer Tür verschließbar sein. An die Isolatoröffnung kann von außen eine Transferschleuse gekoppelt werden. In der Transferschleuse können die Bauteile angeordnet sein. Die Transferschleuse kann dazu eingerichtet sein, die Zuführvorrichtung aufzunehmen. Vorzugsweise wird die Transferschleuse bei geschlossener Tür an die Isolatoröffnung gekoppelt und die Tür erst im gekoppelten Zustand geöffnet. Beispielsweise kann das Transfersystem dazu als ein Portsystem, insbesondere als ein Alpha-Beta-Portsystem, ausgebildet sein. Das Portsystem kann einen Port, auch Alpha-Port genannt, aufweisen, der in den Isolator integriert ist. Der Alpha-Port kann die Isolatoröffnung und die Tür aufweisen. Die Transferschleuse kann entsprechend als Beta-Port oder Beta-Behälter ausgebildet sein, welcher mit dem Alpha-Port gekoppelt werden kann. Der Beta-Port oder Beta-Behälter kann beispielsweise ein Sterilbeutel oder ein starrer Transportbehälter, z.B. ein Edelstahlbehälter, ein Kunststoffbehälter oder Aluminiumbehälter, sein. Insbesondere kann das Transfersystem von der Steuereinrichtung oder einer weiteren Steuereinrichtung gesteuert werden.

Die Zuführvorrichtung dient zum Zuführen von Bauteilen in den Isolator. Mit anderen Worten bringt die Zuführvorrichtung die Bauteile in den Isolator ein und stellt die Bauteile für die Bereitstellung eines Verarbeitungssystems in dem Isolator bereit. Die Zuführvorrichtung kann in der Transferschleuse beweglich angeordnet sein, um die Bauteile aus der Transferschleuse mittels des Ports in den Innenraum des Isolators einzubringen und in dem Innenraum bereitzustellen. Es versteht sich von selbst, dass die Zuführvorrichtung auch dazu genutzt werden kann, um ausgebaute Bauteile aus dem Isolator auszuführen. Insbesondere kann die Zuführvorrichtung von der Steuereinrichtung oder einer weiteren Steuereinrichtung gesteuert werden. Bei der Zuführvorrichtung kann es sich um einen Schlitten oder eine Schublade handeln. Insbesondere kann die Zuführvorrichtung auf Schienen oder Führungen geführt werden. Insbesondere kann die Zuführvorrichtung mittels Räder oder Rollen verfahrbar sein. Die Zuführvorrichtung kann insbesondere Halterungen zum Halten der Bauteile aufweisen. Die Halterungen können dazu eingerichtet sein, die Bauteile in einer definierten Position und Lage in der Zuführvorrichtung zu halten. Durch Wechselwirken einer Koordinateninitiierungseinrichtung mit der Zuführvorrichtung kann die Ausgangsposition des Bauteils in der Zuführvorrichtung relativ zu der Handhabungseinrichtung und relativ zu der Station des Barrieresystems bestimmt werden. Auf diese Weise kann die Ausgangsposition des Bauteils in dem Innenraum des Isolators definiert werden.

Das Zuführen kann insbesondere mittels der Zuführvorrichtung durchgeführt werden. Der Schritt des Zuführens wird derart durchgeführt, dass die Integrität der definierten Atmosphäre des Isolators nicht verletzt wird.

Die Ausgangsposition des zumindest einen Bauteils kann eine Position und/oder eine Lage in einem definierten Koordinatensystem sein. Unter der Lage kann eine Orientierung des Bauteils relativ zu dem Koordinatensystem verstanden werden. Das Koordinatensystem kann beispielsweise den Raum in dem Isolator mittels Raumkoordinaten definieren. In dem Koordinatensystem können des Weiteren jeweils eine Position und/oder eine Lage, bzw. Orientierung weiterer Komponenten des Barrieresystems definiert sein. Die Ausgangsposition kann mittels des Schritts des Definierens definiert werden.

Das Definieren kann insbesondere erfolgen, indem die Koordinateninitiierungseinrichtung die genaue Position der Zuführvorrichtung im Isolator, bzw. im Innenraum durch Wechselwirken mit der Zuführvorrichtung bestimmt. Wenn außerdem die genaue Position und Lage des Bauteils in der Zuführvorrichtung bekannt ist, kann die Ausgangsposition des Bauteils im Isolator definiert werden. Insbesondere kann das durch eine Koordinatentransformation realisiert werden, wobei zumindest ein bekannter Punkt an dem Bauteil in einem Koordinatensystem in der Zuführvorrichtung definiert ist und zumindest ein bekannter Punkt an der Zuführvorrichtung in einem Koordinatensystem im Isolator mittels der Koordinateninitiierungseinrichtung bestimmt wurde. Wenn außerdem beispielsweise die Position der Handhabungseinrichtung oder der Station im Koordinatensystem des Isolators bekannt ist, kann die Ausgangsposition des Bauteils relativ zu diesen Positionen definiert werden. Grundsätzlich ist es auch möglich, dass die Koordinateninitiierungseinrichtung unmittelbar mit dem Bauteil wechselwirkt, um dessen Ausgangsposition direkt, insbesondere unabhängig von der Position der Zuführvorrichtung, insbesondere in dem Koordinatensystem des Isolators zu bestimmen.

Die Koordinateninitiierungseinrichtung kann eine taktile Koordinatenmesseinheit sein. Die Koordinateninitiierungseinrichtung kann eine laserbasierte oder kamerabasierte Koordinatenmesseinheit sein. Insbesondere kann die Koordinateninitiierungseinrichtung die Zuführvorrichtung anheben, sodass die Zuführvorrichtung in einer, vorzugsweise mechanisch bestimmten, definierten Auflagersituation mit bekannter Lage und Orientierung der Zuführvorrichtung relativ zu der Koordinateninitiierungseinrichtung ausgerichtet ist.

Die Handhabungseinrichtung dient zum Handhaben der Bauteile in dem Isolator. Somit dient die Handhabungseinrichtung dazu, die zugeführten Bauteile zwischen der Zuführvorrichtung und der Station zu transferieren und die Bauteile einzubauen, indem die Handhabungseinrichtung das Bauteil mit der Station koppelt. Dazu kann die Handhabungseinrichtung die zugeführten, insbesondere die mittels der Zuführvorrichtung bereitgestellten, Bauteile aufnehmen und im Isolator bewegen und orientieren, bzw. ausrichten, um die Bauteile in einer vorgesehenen Orientierung mit der Station zu koppeln. Durch das Koppeln der Bauteile mit der Station kann die Handhabungseinrichtung das Verarbeitungssystem in dem Isolator bereitstellen. Es versteht sich von selbst, dass die Handhabungseinrichtung auch dazu genutzt werden kann, die Bauteile auszubauen, bzw. von der Station zu entkoppeln und anschließend auf der Zuführvorrichtung zu platzieren.

Das Transferieren kann insbesondere mittels der Handhabungseinrichtung nach dem ersten Aspekt durchgeführt werden. Das Transferieren erfordert, dass das Bauteil von der Handhabungseinrichtung, insbesondere mittels des Schritts des Aufnehmens, aufgenommen wurde.

Das Koppeln des Bauteils mit der Station bewirkt eine Fixierung des Bauteils an der Station vorzugsweise durch Formschluss. Hierzu können das Bauteil und die Station sich einander entsprechende Elemente als Koppelpartner aufweisen, die vorzugsweise formschlüssig ineinandergreifen. Beispielsweise kann das Bauteil ein stangenförmiges Koppelelement als Koppelpartner aufweisen, der zum Koppeln in einen entsprechenden als Aufnahme ausgestalteten Koppelpartner der Station eingeführt werden kann. Das Koppeln kann derart erfolgen, dass das Bauteil in einer definierten Lage und Ausrichtung relativ zu der Station ausgerichtet und fixiert ist. Das Koppeln kann des Weiteren derart erfolgen, dass im gekoppelten Zustand die Freiheitsgrade des Bauteils definiert sind. Das Koppeln kann insbesondere mittels der Handhabungseinrichtung nach dem ersten Aspekt durchgeführt werden. Der Schritt des Koppelns weist ein Bewegen des Bauteils mittels der Handhabungseinrichtung auf, sodass das Bauteil mit seinem Koppelpartner mit dem Koppelpartner der Station, vorzugsweise formschlüssig, zusammenwirkt, um eine Fixierung des Bauteils an der Station zu realisieren. Nach dem Schritt des Koppelns ist das Bauteil eingebaut. Bei dem Schritt des Koppelns nach dem vierten, fünften und sechsten Aspekt kann es sich in einer Ausgestaltung ebenfalls um diesen Schritt handeln.

Die Handhabungseinrichtung ist vorzugsweise als Handhabungsroboter ausgestaltet. Die Handhabungseinrichtung weist zumindest einen mehrachsigen Arm und einen Endeffektor auf. Zur Bewegung des Arms kann beispielsweise eine Antriebseinrichtung vorgesehen sein. Die Handhabungseinrichtung weist einen Bewegungsbereich auf. Der Bewegungsbereich ist der Bereich, in dem die Handhabungseinrichtung das Bauteil handhaben, insbesondere transferieren, orientieren und positionieren, kann. Die Handhabungseinrichtung kann auch mehrere Handhabungsroboter aufweisen. Insbesondere überlappen sich dann die Bewegungsbereiche der Handhabungsroboter. Insbesondere kann die Handhabungseinrichtung von der Steuereinrichtung oder einer weiteren Steuereinrichtung gesteuert werden.

Der Endeffektor dient zum Aufnehmen, bzw. Koppeln, des Bauteils mit der Handhabungseinrichtung. Der Endeffektor ist an einem Ende des Arms angeordnet. Der Endeffektor ist mit dem Arm bewegungsgekoppelt. Der Endeffektor ist mittels des Arms bewegbar. Insbesondere kann der Endeffektor von dem Arm zu jeder Raumkoordinate in dem Bewegungsbereich der Handhabungseinrichtung bewegt werden. Der Endeffektor kann um mindestens eine Rotationsachse relativ zum Arm rotiert werden. In Kombination mit der Rotation um die Rotationsachse kann der Endeffektor während der Bewegung durch den Arm im Isolator definiert im Raum ausgerichtet werden. Beispielsweise kann der Endeffektor während des Transferierens in einer waagrechten Orientierung gehalten werden. Wenn das Bauteil von dem Endeffektor aufgenommen ist, kann das Bauteil von der Handhabungseinrichtung definiert bewegt werden. Mit anderen Worten ist dann das Bauteil mit dem Arm bewegungsgekoppelt. Der Endeffektor weist zum Aufnehmen, bzw. Koppeln, mit dem Bauteil zumindest zwei, voneinander beabstandete Aufnahmeelemente auf.

Das Aufnehmen erfolgt durch ein Einführen des Endeffektors in das Bauteil. Das Einführen erfolgt durch Eingreifen der Aufnahmeelemente in das Bauteil. Das Aufnehmen kann insbesondere mittels der Handhabungseinrichtung nach dem ersten Aspekt durchgeführt werden.

Die Aufnahmeelemente wirken mit Gegenstücken des Bauteils zusammen, um ein Koppeln zwischen dem Endeffektor und dem Bauteil zu ermöglichen. Die Aufnahmeelemente können zumindest abschnittsweise zylindrisch ausgestaltet sein und sich stabförmig in eine axiale Richtung, bzw. Längserstreckungsrichtung erstrecken. Die Aufnahmeelemente sind mit ihrem einen Ende an dem Endeffektor befestigt oder befestigbar und können an ihrem anderen Ende einen Endabschnitt aufweisen, der dazu eingerichtet ist, in das Gegenstück eines Bauteils einzugreifen. Mit anderen Worten kann das Aufnahmeelement, bzw. der Endabschnitt mit dem Gegenstück eine Kopplung bewirken. Die Aufnahmeelemente greifen, insbesondere mit den Endabschnitten, in die Gegenstücke ein, um das Bauteil aufzunehmen und das Bauteil während des Handhabens mittels der Handhabungseinrichtung an dem Endeffektor lösbar zu fixieren. Zumindest eines der Aufnahmeelemente weist einen rotationssymmetrischen Abschnitt, insbesondere Endabschnitt, auf, der dazu eingerichtet ist, in dem Gegenstück drehbar aufgenommen zu werden. Die Aufnahmeelemente sind positionsfest an dem Endeffektor angeordnet. Jedes Aufnahmeelement ist starr mit dem Endeffektor verbunden. Die Aufnahmeelemente sind somit mit dem Endeffektor bewegungsgekoppelt und sind mittels des Arms bewegbar. Bewegungsgekoppelt bedeutet in diesem Kontext, dass sich eine Bewegung des Endeffektors, bzw. des Arms direkt auf die Aufnahmeelemente überträgt. Sind die Aufnahmeelemente mit den Gegenstücken im Eingriff, bedeutet dies, dass sich eine Bewegung des Endeffektors, bzw. des Arms direkt auf das Bauteil überträgt.

Die Gegenstücke dienen während des Eingreifens als Aufnahme für die Aufnahmeelemente. Die Gegenstücke des Bauteils sind als Aussparungen in dem Bauteil oder als Aussparungen in einem Adapter, der an dem Bauteil fixiert oder fixierbar ist, ausgebildet. Die Aussparungen sind im Wesentlichen nutförmig und entsprechend einer Außenkontur des Aufnahmeelements, bzw. des Endabschnitts. Das bedeutet, dass jede Aussparung einen ersten Bereich aufweist, der dazu eingerichtet ist, ein Aufnahmeelement in definierter Weise in Kontakt mit dem Gegenstück zu bringen. Des Weiteren kann jede Aussparung einen zweiten Bereich aufweisen, der dazu eingerichtet ist, ein Hineingleiten des Aufnahmeelements in die Aussparung, insbesondere in den zweiten Bereich, und von dort aus in den ersten Bereich zu ermöglichen. Hierzu kann die Aussparung im zweiten Bereich eine Öffnung in einer Seite der nutförmigen Aussparung aufweisen oder einen Abschnitt mit einer größeren Breite der nutförmigen Aussparung aufweisen. Auf diese Weise ist jedes Gegenstück dazu eingerichtet, dass jeweils eines der Aufnahmeelemente, insbesondere mit dem Endabschnitt, von einer ersten Position, in der das Aufnahmeelement nicht mit dem Gegenstück in Eingriff ist, mittels translatorischer und/oder Rotatorischer Bewegungen, in eine zweite Position geführt werden kann, in der sich das Aufnahmeelement mit dem Gegenstück in Eingriff befindet. Die Bewegung der Aufnahmeelemente erfolgt von der jeweiligen ersten zu der jeweiligen zweiten Position entlang einer Bahn.

Das Eingreifen der Aufnahmeelemente in die Gegenstücke des Bauteils erfolgt durch eine Bewegung des Endeffektors mittels der Handhabungseinrichtung. Insbesondere kann die Handhabungseinrichtung hierzu durch die Steuereinrichtung oder eine weitere Steuereinrichtung gestreut werden. Da die Aufnahmeelemente starr miteinander verbunden sind, bewirkt die Bewegung des Endeffektors immer eine gleichzeitige Bewegung der zumindest zwei Aufnahmeelemente. Die Bahnen der Gegenstücke sind so gewählt, dass beide Aufnahmeelemente gleichzeitig entlang der jeweiligen Bahn geführt werden können. Die Bahnen können gleich oder unterschiedlich ausgestaltet sein. Die Bahnen können gradlinig oder zumindest abschnittsweise gekrümmt ausgestaltet sein. In Abhängigkeit der Bahnen können die Aufnahmeelemente entweder mittels nur einer Bewegung, oder mittels einer Bewegungsabfolge des Endeffektors von der ersten in die zweite Position bewegt werden. Die Bewegungsabfolge kann translatorischen und/oder rotatorischen Bewegungen des Endeffektors aufweisen. In der ersten Position haben die Aufnahmeelemente keinen Kontakt mit den Gegenstücken. In der zweiten Position kommen die Aufnahmeelemente in den Gegenstücken zur Anlage und sind in Kontakt mit dem Gegenstück. Durch den Kontakt befinden sich die Aufnahmeelemente und die Gegenstücke mittels Formschluss im Eingriff miteinander. Der Formschluss wirkt derart, dass jedes Aufnahmeelement in mindestens eine Richtung durch Kontakt mit dem Gegenstück mit diesem bewegungsgekoppelt ist. Sind die Aufnahmeelemente in der ersten Position angeordnet, ist das Bauteil freigegeben. Sind die Aufnahmeelemente in der zweiten Position angeordnet, ist das Bauteil aufgenommen. Sind die Aufnahmeelemente in der zweiten Position angeordnet, kann der Endeffektor mittels der Aufnahmeelemente in jede Richtung eine Bewegung auf das Bauteil übertragen, in der die Aufnahmeelemente mit den Gegenstücken durch Kontakt bewegungsgekoppelt sind. Auf diese Weise werden der Endeffektor und das Bauteil lösbar miteinander verbunden, bzw. gekoppelt.

Das Freigeben erfolgt durch das Ausführen des Endeffektors aus dem Bauteil. Das Ausführen erfolgt, indem die Aufnahmeelemente von dem Bauteil getrennt werden. Insbesondere erfolgt das Trennen in umgekehrter Weise wie das Eingreifen. Insbesondere kann das Trennen erfolgen, indem die Bewegung oder Bewegungsabfolge umgekehrt erfolgt und die Aufnahmeelemente von der zweiten Position in die erste Position geführt werden. Das Freigeben kann insbesondere mittels der Handhabungseinrichtung nach dem ersten Aspekt durchgeführt werden.

Es ist grundsätzlich möglich, Bauteile mit einem Greifersystem, das mit einer Handhabungsvorrichtung verbunden ist, zu handhaben. Greifersystem greifen Objekte mit einer Zustellbewegung von zumindest zwei Greifelementen relativ zueinander. Ein Greifersystem erfordert somit das Vorhandensein einer höheren Anzahl beweglicher Teile in dem Isolator. Zudem erfordern Greifersysteme zumindest einen zusätzlichen Aktor zum Aktuieren der Zustellbewegung. Insbesondere kann des Weiteren eine Sensorik erforderlich sein, wenn hohe Anforderungen an die Genauigkeit der Greifersysteme gestellt werden. Bewegliche Teile unterliegen der Abnutzung durch Verschleiß. Verschleiß kann Abrieb kleinster Partikel der beweglichen Teile oder ihrer Lagerstellen bewirken. Solche Partikel können den Innenraum des Isolators kontaminieren und in Produkte gelangen, die in dem Isolator verarbeitet werden. Außerdem bedingen bewegliche Teile aufgrund der höheren mechanischen Komplexität gegenüber unbeweglichen Teilen, einen erhöhten Wartungsaufwand. Gleiches gilt für zusätzliche Aktoren oder Sensorik, da jeder Aktor oder Sensor Verschleiß und einer gewissen Ausfallwahrscheinlichkeit unterliegt. In einem Isolator bedingt eine Wartung in der Regel das Verletzen der Integrität der definierten Atmosphäre des Isolators, wenn der Isolator geöffnet werden muss. Ein Öffnen des Isolators bedingt für die Wiederinbetriebnahme in der Regel eine H2O2-Dekontamination des Isolator-Innenraums und aller darin befindlichen Komponenten. Des Weiteren birgt ein Öffnen des Isolators Gesundheitsrisiken für das Wartungspersonal, falls gesundheitsgefährliche Stoffe in dem Isolator verarbeitet werden. Gleiches gilt für eine Wartung mittels Handschuhsystemen, mittels derer Wartungspersonal mit Handschuhen, die in eine Außenwand des Isolators integriert sind, in den Innenraum des Isolators greifen können. Bei solchen Handschuhsystemen besteht die Gefahr, dass eine Beschädigung der Handschuhe unbemerkt bleibt und ein Nutzer mit dem Inhalt des Isolators in Kontakt gerät.

Erfindungsgemäß ist die Handhabungseinrichtung dazu eingerichtet, den Endeffektor derart zu bewegen, dass die Aufnahmeelemente in die Gegenstücke des Bauteils eingreifen und eine Kopplung bewirken, um das Bauteil aufzunehmen und den Endeffektor derart zu bewegen, dass die Aufnahmeelemente und die Gegenstücke des Bauteils voneinander getrennt, bzw. entkoppelt werden, um das Bauteil freizugeben. Durch das Eingreifen der Aufnahmeelemente in die Gegenstücke entsteht ein Formschluss. Hierdurch sind der Endeffektor und das Bauteil bewegungsgekoppelt, sodass das Bauteil von der Handhabungseinrichtung definiert bewegt werden kann.

Dadurch kann auf Greifersysteme zum Handhaben der Bauteile verzichtet werden. Die Handhabung wird hierdurch vereinfacht und verbessert. Des Weiteren werden der Wartungsaufwand und Ausfallzeiten des Barrieresystems reduziert. Des Weiteren werden Gesundheitsrisiken für das Wartungspersonal reduziert.

Ein weiterer Vorteil nach dem fünften Aspekt besteht darin, dass die Handhabung der Bauteile verbessert wird, indem die Befestigungsvorrichtung der Station in eine zum Koppeln mit dem Bauteil vordefinierte Position bewegt wird. Hierdurch kann die Befestigungsvorrichtung in den Bewegungsbereich der Handhabungseinrichtung gebracht werden, wodurch eine Distanz reduziert wird, über die ein Bauteil mittels der Handhabungseinrichtung transferiert werden muss. Auf diese Weise werden Stationen erreichbar, die nicht im Bewegungsbereich der Handhabungseinrichtung angeordnet sind.

Ein weiterer Vorteil nach dem sechsten Aspekt besteht darin, dass die Handhabung der Bauteile verbessert wird, indem das Koppeln mittels einer Arretierungseinrichtung gesichert wird. Auf diese Weise kann das Koppeln mit einer vereinfachten Bewegung erfolgen. Beispielsweise genügt dann eine einfache Schubbewegung, um einen stangenförmigen Koppelpartner in einen entsprechenden als Aufnahme ausgestalteten Koppelpartner einzuführen. Mittels der Arretierung können die Koppelpartner im gekoppelten Zustand ohne eine weitere Bewegung der Handhabungseinrichtung fixiert und gesichert werden. Ohne eine Arretierung müsste beim Koppeln beispielsweise eine Rotationbewegung durch die Handhabungseinrichtung bereitgestellt werden, um das Bauteil mittels eines Gewindes zu koppeln und zu sichern.

Ein weiterer Vorteil nach dem siebten Aspekt besteht darin, dass die Handhabung der Bauteile verbessert wird, indem die Handhabung präziser erfolgt. Das Definieren einer Ausgangsposition des Bauteils, die mittels der Koordinateninitiierungseinrichtung relativ zu der Handhabungseinrichtung und relativ zu der Station ermittelt wird, reduziert Ungenauigkeiten beim Handhaben des Bauteils und reduziert, insbesondere beim Koppeln, die Wahrscheinlichkeit von ungewollten Kollisionen der Koppelpartner.

Die eingangs gestellte Aufgabe wird somit vollumfänglich gelöst.

In einer ersten Ausgestaltung der Aspekte können die Aufnahmeelemente unbeweglich ausgestaltet sein, wobei die Handhabungseinrichtung dazu eingerichtet ist, den Endeffektor derart zu bewegen, dass die Aufnahmeelemente ausschließlich aufgrund der Bewegung des Endeffektors in die Gegenstücke des Bauteils eingreifen oder dass die Aufnahmeelemente und die Gegenstücke des Bauteils ausschließlich aufgrund der Bewegung des Endeffektors voneinander getrennt werden.

Auf diese Weise sind keinerlei bewegliche Komponenten zum Greifen des Bauteils erforderlich. Dadurch kann die Komplexität des Endeffektors reduziert werden. Eine geringere Komplexität reduziert den Wartungsaufwand.

In einer weiteren Ausgestaltung der Aspekte kann das Barrieresystem ein in der Umgebung angeordnetes Rüstsystem zum automatischen Einbau des zumindest einen Bauteils des Verarbeitungssystems in der Umgebung und zum automatischen Ausbau des zumindest einen Bauteils aufweisen, wobei das Rüstsystem die Handhabungseinrichtung aufweist.

In einer weiteren Ausgestaltung der Aspekte kann das Barrieresystem eine Steuereinheit aufweisen. Bei der Steuereinheit kann es sich um die Steuereinheit nach dem fünften Aspekt handeln. Die Steuereinheit kann das Barrieresystem steuern. Insbesondere kann die Steuereinheit das Transfersystem steuern. Insbesondere kann die Steuereinheit das Verarbeitungssystem steuern. Insbesondere kann die Steuereinheit die Handhabungseinrichtung steuern. Insbesondere kann die Steuereinheit den Aktor der Station steuern. Grundsätzlich kann das Barrieresystem aber auch mehrere Steuereinheiten aufweisen, die alleine oder zusammenwirken können.

In einer weiteren Ausgestaltung der Aspekte kann das Barrieresystem des Weiteren eine Steuereinrichtung aufweisen, die dazu ausgebildet ist, wenn das Bauteil von der Handhabungseinrichtung aufgenommen ist, ein Koppeln des Bauteils mit der Station, durch eine Bewegung eines Aktors der Station zu unterstützen, wobei die Steuereinrichtung dazu den Aktor derart steuert, sodass zumindest eine Befestigungsvorrichtung der Station in eine zum Koppeln mit dem Bauteil vordefinierte Position bewegt wird, und insbesondere wenn das Bauteil mit der Station gekoppelt ist, den Aktor derart steuert, sodass das Bauteil in eine Betriebsposition verbracht wird.

Die vordefinierte Position kann die Befestigungsvorrichtung im Bewegungsbereich der Handhabungseinrichtung angeordnet sein. Außerdem kann die Befestigungsvorrichtung in der vordefinierten Position für die Handhabungseinrichtung gut zugänglich sein. Das bedeutet, dass keine anderen Komponenten derart zwischen der Befestigungsvorrichtung und der Handhabungseinrichtung angeordnet sind, dass das Koppeln erschwert oder verhindert wird. In der Betriebsposition kann das Bauteil dann beispielsweise außerhalb des Bewegungsbereichs der Handhabungseinrichtung angeordnet sein.

Insbesondere kann es sich bei der vordefinierten Position um eine Position handeln, in der die Befestigungsvorrichtung im Erdschwerefeld derart ausgerichtet ist, dass das Bauteil mithilfe der Schwerkraft mit der Befestigungsvorrichtung auch ohne Sicherung gekoppelt bleibt. In dieser Position kann das Bauteil in der Befestigungsvorrichtung besonders einfach mit einer Sicherung gesichert werden, da das Bauteil währenddessen nicht durch die Handhabungseinrichtung gehalten werden muss. In der Betriebsposition kann das Bauteil dann beispielsweise kopfüber angeordnet sein.

Somit ergibt sich der Vorteil, dass das Bauteil nicht in einer zum Koppeln komplexen Einbausituation, beispielsweise über Kopf, montiert werden muss. Auf diese Weise kann die Handhabung vereinfacht und auf den Einsatz einer zweiten parallel arbeitenden Handhabungseinrichtung zur Unterstützung verzichtet werden, die beispielsweise das Anbringen einer Sicherung durchführt. Auf diese Weise kann des Weiteren auf den "Einsatz von Handschuhen", also auf den Einsatz von Montagepersonal, verzichtet werden, da die Komplexität der Einbausituation derart reduziert ist, dass die Handhabungseinrichtung die Montage in einfacher Weise automatisiert vornehmen kann. Somit kann auf einen Handschuheingriff von Montagepersonal verzichtet werden, wodurch eine Risikominimierung erreicht wird. Insbesondere kann so das Risiko vermieden werden, dass es bei der Montage zu einer Beschädigung eines Handschuhs und somit zu einer potenziellen Kontaminierung kommen kann.

In einer weiteren Ausgestaltung der Aspekte kann ein Aktor einer zweiten Station und/oder ein Aktor einer ersten Station des Barrieresystems dazu eingerichtet sein, eine Arretierungseinrichtung der ersten Station des Barrieresystems zu lösen, um das Koppeln des Bauteils mit der ersten Station zu ermöglichen und wenn das Bauteil mit der ersten Station gekoppelt ist, die Arretierungseinrichtung zu arretieren, um das Koppeln des Bauteils mit der ersten Station zu sichern.

Insbesondere kann der Aktor der zweiten und/oder der ersten Station den Zustand der Arretierung schalten. Das Schalten der Arretierung erfolgt durch Kontakt. Hierzu kann vorgesehen sein, dass der Aktor der zweiten Station so verfahren kann, dass der bewegbare Teil des Aktors, insbesondere mit einem Kontaktelement, in Kontakt mit dem Schalter der Arretierungseinrichtung kommt. Hierzu kann ergänzend oder alternativ vorgesehen sein, dass der Aktor der ersten Station so verfahren kann, dass die Arretierungseinrichtung mit dem Aktor der zweiten Station in Kontakt kommt. Mit anderen Worten wird durch die Bewegung des Aktors der zweiten und/oder der ersten Station eine Relativbewegung zwischen einem Teil des Aktors der zweiten Station, insbesondere dem Kontaktelement, und der Arretierungseinrichtung bereitgestellt, um die Arretierungseinrichtung zu bedienen. Hierzu muss der Bewegungsbereich des Aktors der zweiten und/oder der ersten Station dazu eingerichtet sein, einen Kontakt zwischen dem Aktor der zweiten Station und der Arretierungseinrichtung zu ermöglichen. Insbesondere kann die Steuerung jedes Aktors mittels der Steuereinrichtung erfolgen. Auf diese Weise kann der Aktor der zweiten und/oder der ersten Station den Zustand der Arretierung zwischen einem arretierten Zustand und einem gelösten Zustand mittels des Schalters schalten.

Dadurch kann, wenn die Komplexität der Einbausituation oder Sicherheitsaspekte die Verwendung einer Arretierungseinrichtung erfordern, die Arretierungseinrichtung ohne das Eingreifen von Montagepersonal oder einer zusätzlichen Handhabungseinrichtung oder eines zusätzlichen Aktors bedient werden. Somit kann die Arretierungseinrichtung in besonders einfacher und effizienter Weise genutzt werden und kann bei geschlossenem Isolator erfolgen.

In einer weiteren Ausgestaltung der Aspekte kann die Steuereinrichtung des Weiteren dazu ausgebildet sein, wenn das Bauteil mittels der Handhabungseinrichtung mit der Station gekoppelt und insbesondere mittels der Handhabungseinrichtung freigegeben ist, durch eine Bewegung eines Aktors der Station eine Fluidpfadverbindung zwischen einem Fluidanschluss der Station und einem Fluidanschluss des Bauteils herzustellen, indem die Steuereinrichtung den Aktor derart steuert, sodass die Befestigungsvorrichtung gegen das Bauteil angedrückt wird, sodass die Fluidanschlüsse in Wirkverbindung treten und die Fluidpfadverbindung herstellen, insbesondere wobei zumindest eine Dichtung die Fluidpfadverbindung zwischen den Fluidanschlüssen abdichten kann.

Im Rahmen dieser Ausgestaltung der Aspekte kann unter dem Begriff "gekoppelt" bereits ein Zustand verstanden werden, in dem das Bauteil mittels einer Bewegung der Handhabungseinrichtung des Barrieresystems in einer definierten Position und Lage im Bewegungsbereich des Aktors abgelegt und freigegeben ist. Mit anderen Worten muss das Bauteil nicht fixiert sein und kann mindestens einen Freiheitsgrad aufweisen. In der definierten Position und Lage kann das Bauteil somit bewegbar sein, sodass das Bauteil durch eine Bewegung des Aktors bzw. die Bewegung der Befestigungsvorrichtung zum Herstellen der Fluidpfadverbindung bewegt werden kann. Die Bewegung des Bauteils durch das Andrücken ist dabei jedoch begrenzt, sodass ein Einklemmen des Bauteils beispielsweise durch Bewegen gegen einen festen Anschlag oder eine weitere Station oder ein weiteres Bauteil bewirkbar ist. Durch das Andrücken kann eine Fixierung des Bauteils erreicht werden.

Unter einem Fluidanschluss wird ein Zufluss oder ein Abfluss einer Fluidleitung bzw. eines Fluidpfades verstanden, der dazu eingerichtet ist, mit einem anderen Fluidanschluss koppelbar zu sein, um eine Fluidpfadverbindung herzustellen. Durch die Fluidpfadverbindung können die Fluidpfade verbundener Fluidanschlüsse verbunden werden, um einen gemeinsamen Fluidpfad zu bilden. Die Fluidpfadverbindung kann eine zum Verbinden von Fluidpfaden für flüssige oder gasförmige Fluiden eingerichtet sein.

Die Dichtung kann beispielsweise eine O-Ringdichtung oder ein konusförmiges Dichtelement sein. Die Dichtung kann an dem Fluidanschluss der Station und/oder an dem Fluidanschluss des Bauteils angeordnet sein.

Auf diese Weise kann vollautomatisiert eine Fluidpfadverbindung zwischen eingebauten Bauteilen und einem Fluidpfad des Verarbeitungssystems hergestellt werden, ohne den Isolator öffnen zu müssen.

In einer weiteren Ausgestaltung der Aspekte kann ein Hilfswerkzeug an der zweiten Station befestigt oder mittels der Handhabungseinrichtung befestigbar sein, wobei das Hilfswerkzeug dazu eingerichtet ist, mittels einer Bewegung des Aktors der zweiten Station und/oder mittels einer Bewegung des Aktors der ersten Station relativ zu der Arretierungseinrichtung bewegt zu werden, um die Arretierungseinrichtung der ersten Station zu lösen oder zu arretieren.

Das Hilfswerkzeug dient zur Verbesserung des Einbaus von Bauteilen. Mittels des Hilfswerkzeug kann insbesondere die Übertragung einer Kraft, die aus einer Bewegung des Aktors einer Station resultiert, auf ein Objekt innerhalb des Isolators realisiert werden. Die Bewegung des Aktors kann vorzugsweise gradlinig erfolgen. Insbesondere kann die Bewegung des Aktors eine Schwenkbewegung sein. Insbesondere kann das Hilfswerkzeug dafür verwendet werden, die Arretierungseinrichtung zu bedienen. Insbesondere kann das Hilfswerkzeug den Schalter der Arretierungseinrichtung betätigen. Das Hilfswerkzeug kann beispielsweise ein Kontaktstift, ein Aufsetzer oder ein Gegenhalter sein. Das Hilfswerkzeug kann derart ausgestaltet sein, dass es zur Interaktion mit einem Gegenstand innerhalb des Isolators geeignet ist. Das Hilfswerkzeug kann insbesondere ein Greifer sein. Alternativ kann es auch vorgesehen sein, dass der Aktor mittels eines Bauteils mit der Arretierungseinrichtung wechselwirkt, um die Arretierungseinrichtung zu bedienen, wobei das Bauteil anstelle des Hilfswerkzeugs an der zweiten Station eingebaut ist. In diesem Fall wird der Schalter über eine Fläche des Bauteils betätigt. Mit anderen Worten wird mittels eines Aktors einer Station eine Relativbewegung zwischen dem Hilfswerkzeug bzw. Bauteil und der Arretierungseinrichtung bereitgestellt, um die Arretierungseinrichtung zu bedienen. Die Relativbewegung kann, wie zuvor beschrieben, durch den Aktor der ersten Station und/oder durch den Aktor der zweiten Station bereitgestellt werden. Der Bewegungsbereich des Aktors der ersten und/oder zweiten Station muss einen Kontakt zwischen dem Hilfswerkzeug bzw. Bauteil und der Arretierungseinrichtung ermöglichen. Dabei kann das Hilfswerkzeug dazu eingerichtet sein, insbesondere durch eine Verlängerung, den Bewegungsbereich zu vergrößern oder eine Stelle an der Arretierungseinrichtung zu erreichen, die nicht unmittelbar in einer Bahnkurve der Bewegung des Aktors angeordnet ist.

Das Hilfswerkzeug kann insbesondere in gleicher Weise wie ein Bauteil in den Isolator eingebracht und mittels der Handhabungseinrichtung gehandhabt, insbesondere mit einer Station gekoppelt werden. Im eingebauten Zustand kann das Hilfswerkzeug verwendet werden. Insbesondere oder alternativ kann das Hilfswerkzeug auch mittels der Handhabungseinrichtung verwendet werden, wenn es von der Handhabungseinrichtung aufgenommen ist.

Mittels des Hilfswerkzeug kann insbesondere der Bewegungsbereich des Aktors vergrößert werden. Insbesondere kann eine Station mittels des Hilfswerkzeugs zur Interaktion mit einem Gegenstand innerhalb des Isolators befähigt werden. Auf diese Weise kann eine vorhandene Station des Barrieresystems effizient und ökonomisch genutzt werden.

In einer weiteren Ausgestaltung der Aspekte kann das Barrieresystem des Weiteren eine Koordinateninitiierungseinrichtung aufweisen, wobei die Koordinateninitiierungseinrichtung dazu eingerichtet ist, mit der Zuführvorrichtung wechselzuwirken, um eine Ausgangsposition des zumindest einen Bauteils, relativ zu der Handhabungseinrichtung und relativ zu einer Station zu definieren.

Insbesondere kann es sich bei der Koordinateninitiierungseinrichtung um die Koordinateninitiierungseinrichtung nach dem siebten Aspekt handeln.

Mittels der Koordinateninitiierungseinrichtung kann die Handhabung der Bauteile verbessert werden, indem die Handhabung präziser erfolgt.

In einer weiteren Ausgestaltung der Aspekte kann die Koordinateninitiierungseinrichtung an einem Aktor einer weiteren Station befestigt oder mittels der Handhabungseinrichtung befestigbar sein, wobei der Aktor eingerichtet ist, die Koordinateninitiierungseinrichtung zu bewegen, um die Koordinateninitiierungseinrichtung in Kontakt mit der Zuführvorrichtung zu bringen.

Insbesondere kann die weitere Station gleich oder ähnlich ausgestaltet sein, wie die Station nach dem ersten Aspekt.

Der Aktor der weiteren Station kann während des Rüstvorgangs zum Bewegen der Koordinateninitiierungseinrichtung genutzt werden, ohne dass die Koordinateninitiierungseinrichtung einen eignen Aktor benötigt. Auf diese Weise kann die Handhabung der Koordinateninitiierungseinrichtung besonders effizient und ökonomisch bereitgestellt werden.

In einer weiteren Ausgestaltung der Aspekte kann die Koordinateninitiierungseinrichtung dazu eingerichtet sein, die Zuführvorrichtung zu fixieren, um eine Position und eine Lage der Zuführvorrichtung zu sichern.

Zum Fixieren kann die Koordinateninitiierungseinrichtung, vorzugsweise kegelförmige, Auflageelemente aufweisen, die dazu eingerichtet sind, formschlüssig in entsprechende, vorzugsweise kegelförmige, Aufnahmen der Zuführvorrichtung zugleiten, wenn die Koordinateninitiierungseinrichtung gegen die Zuführvorrichtung, vorzugsweise gegen die Unterseite der Zuführvorrichtung, bewegt wird. Vorzugsweise fixiert die Koordinateninitiierungseinrichtung die Zuführvorrichtung mit drei Auflageelementen, sodass die Zuführvorrichtung mechanisch bestimmt auf den Auflageelementen aufliegt.

Insbesondre kann das Fixieren derart erfolgen, dass die Zuführeinrichtung durch die Koordinateninitiierungseinrichtung angehoben wird, sodass diese in mechanisch bestimmter Weise von der Koordinateninitiierungseinrichtung getragen wird. Vorzugsweise fixiert die Koordinateninitiierungseinrichtung die Zuführvorrichtung mit drei Auflageelementen, sodass die Zuführvorrichtung mechanisch bestimmt auf den Auflageelementen aufliegt. Dadurch erfolgt eine definierte Ausrichtung der Zuführeinrichtung relativ zu der Koordinateninitiierungseinrichtung. Durch das Fixieren wird sichergestellt, dass die Zuführeinrichtung während des Aufnehmens von Bauteilen mittels der Handhabungseinrichtung der definierten Ausrichtung verbleibt. Auf diese Weise kann die Handhabung der Bauteile verbessert werden.

In einer weiteren Ausgestaltung der Aspekte kann das Barrieresystem eine Steuereinrichtung zum Steuern der Handhabungseinrichtung (46) aufweisen, wobei die Steuereinrichtung dazu ausgebildet ist, eine Information über die Ausgangsposition des zumindest einen Bauteils von der Koordinateninitiierungseinrichtung zu erhalten, um die Handhabungseinrichtung, insbesondere ausschließlich, basierend auf der Information zu steuern, um das zumindest eine Bauteil aufzunehmen und/oder zu orientieren und/oder zu positionieren und/oder einzubauen.

Die Information über die Ausgangsposition kann beispielsweise ein Signal der Koordinateninitiierungseinrichtung sein, dass von der Steuereinrichtung verarbeitet werden kann. Insbesondere weist die Information eine Position und Lage, bzw. Orientierung des Bauteils im Innenraum des Isolators relativ zu einer Position und Lage der Handhabungseinrichtung und der Station auf. Insbesondere kann die Information des Weiteren eine Lage jedes der Gegenstücke des Bauteils aufweisen.

Die Steuereinrichtung kann insbesondre die Steuereinrichtung nach dem fünften Aspekt, oder eine weitere Steuereinrichtung sein. Insbesondere steuert die Steuereinrichtung die Handhabungseinrichtung entsprechend der Information derart, dass keine Sensoren zur Erfassung der Position und Lage des Bauteils während der Handhabung mittels der Handhabungseinrichtung erfolgen muss. Insbesondere steuert die Steuereinrichtung die Handhabungseinrichtung entsprechend der Information derart, dass das Koppeln des Bauteils mit der Station ohne ungewollten Kontakt zwischen dem Bauteil und der Station erfolgt. Insbesondere steuert die Steuereinrichtung die Handhabungseinrichtung entsprechend der Information derart, dass das Bauteil während der Handhabung zu jedem Zeitpunkt in einer Ausrichtung relativ zum Erdschwerefeld verbleibt, sodass die Aufnahmeelemente mit den Gegenstücken im Eingriff verbleiben. Auf diese Weise kann beim Handhaben, insbesondere beim Koppeln, des Bauteils eine besonders präzise Bewegungsführung bereitgestellt werden. Dadurch kann das Bauteil in besonders sicherer Weise gehandhabt werden. Hierdurch kann insbesondere Verschleiß reduziert werden, da ungewollte Kollisionen der Koppelpartner vermieden werden können. Insbesondere kann aufgrund der Reduzierung von Verschleiß die Reinheit des Isolators verbessert werden.

In einer weiteren Ausgestaltung der Aspekte kann der Kreisdurchmesser der ersten Aussparung im Wesentlich einem Durchmesser des Endabschnitts des ersten der Aufnahmeelemente entsprechen und eine Form, insbesondere Kreisdurchmesser, der zweiten Aussparung im Wesentlich einer Außenkontur, insbesondere einem Durchmesser, des Endabschnitts eines zweiten der Aufnahmeelemente entspricht, wobei der Abstand im Wesentlichen einem Abstand zwischen dem ersten und dem zweiten der Aufnahmeelemente entspricht.

Auf diese Weise kann sichergestellt werden, dass verschiedene Bauteile kompatible mit dem Endeffektor sind und von der Handhabungseinrichtung gehandhabt werden können. Eine Anpassung der Aufnahmeelemente an dem Endeffektor ist dadurch nicht erforderlich.

In einer weiteren Ausgestaltung der Aspekte kann die Bahn in der zweiten Aussparung von dem zweiten Bereich in den ersten Bereich eine gradlinige Bahn sein.

Eine gradlinige Bahn ermöglicht es, das Eingreifen der Aufnahmeelemente in die Gegenstücke mit einer besonders einfachen Bewegungsführung des Endeffektors zu realisieren. Die Bewegung des Endeffektors kann dabei eine rein translatorische Bewegung darstellen.

In einer weiteren Ausgestaltung der Aspekte kann die Bahn in der zweiten Aussparung von dem zweiten Bereich in den ersten Bereich eine Kreisbahn sein, deren Mittelpunkt mit dem ersten Mittelpunkt zusammenfällt.

Eine kreisförmige Bahn ermöglicht es, das Eingreifen des zweiten Aufnahmeelements in die Gegenstücke mit einer besonders einfachen Bewegungsführung des Endeffektors zu realisieren. Die Bewegung des Endeffektors kann dabei eine rein rotatorische Bewegung darstellen, wobei die Mittelachse des ersten Aufnahmeelements die Rotationsachse ist.

Insbesondere kann sich die Aussparung entlang der Kreisbahn mit Annäherung an den zweiten Mittelpunkt verjüngen. Auf diese Weise kann ein zunehmende Klemmkraft in Zusammenwirkung mit dem zweiten Aufnahmeelement erreicht werden, wenn das zweit Aufnahmeelement auf der Bahn in Richtung des zweiten Mittelpunkts bewegt wird. Auf diese Weise kann das Eingreifen der Aufnahmeelemente in den Gegenstücken zum Aufnehmen des Bauteils mittels Formschluss und Kraftschluss realisiert werden.

In einer weiteren Ausgestaltung der Aspekte können die erste und/oder die zweite Aussparung Hinterschneidungen aufweisen, die jeweils dazu eingerichtet sind, mit einem Vorsprung eines der Aufnahmeelemente ineinanderzugreifen, um das Aufnahmeelement in einer axialen Richtung des Aufnahmeelements zu sichern.

Der Vorsprung kann an einem Ende, insbesondere an dem Endabschnitt, des Aufnahmeelements angeordnet sein. Der Vorsprung kann in eine Richtung orthogonal zu der axialen Richtung breiter sein als das Aufnahmeelement.

Jede Hinterschneidung kann als Tasche ausgebildet sein, die dazu eingerichtet ist, den Vorsprung aufzunehmen. Die Hinterschneidung kann mit der Öffnung in einer Seite der nutförmigen Aussparung verbunden sein, sodass der Vorsprung beim Eingreifen des Aufnahmeelements in die Hinterschneidung ragt. Auf diese Weise sind das Aufnahmeelement und das Gegenstück in axialer Richtung bewegungsgekoppelt. Dadurch kann das Bauteil in axiale Richtung geführt werden, ohne dass ein unbeabsichtigtes Freigeben des Bauteils erfolgt.

In einer weiteren Ausgestaltung der Aspekte kann zumindest eines der Gegenstücke in einem Bereich der, insbesondere halbkreisförmigen, Aussparung derart ausgestaltet sein, dass sich, wenn ein Aufnahmeelement in die Aussparung eingreift, eine Passung zwischen der Aussparung und dem Aufnahmeelement ergibt, wobei die Passung bevorzugt eine Spielpassung ist und wobei die Aussparung eine Tiefe aufweist, die zu einer Breite, insbesondere dem Kreisdurchmesser, in einem Verhältnis zwischen 1:1 und 1,6:1, bevorzugt zwischen 1,2:1 und 1,5:1, besonders bevorzugt zwischen 1,2:1 und 1,4:1 steht, sodass sich, wenn das Bauteil von den Aufnahmeelementen aufgenommen ist, ein Verkanten zwischen dem zumindest einen der Gegenstücke und dem jeweiligen Aufnahmeelement ergibt, um eine Relativbewegung zwischen den Gegenstücken und den Aufnahmeelementen zu erschweren.

Insbesondere kann durch ein Verkanten eines Aufnahmeelements in dem Gegenstück ein Verklemmen entstehen. Bei einem Verklemmen kann es an den Kontaktstellen zu hohen Reibkräften kommen. Auf diese Weise kann das Eingreifen der Aufnahmeelemente in den Gegenstücken zum Aufnehmen des Bauteils mittels Formschluss und Kraftschluss realisiert werden.

In einer weiteren Ausgestaltung der Aspekte kann das Bauteil mit einem Code (z.B. QR- oder Datamatrix-Code) versehen sein, der dazu eingerichtet ist mittels eines Sensors, insbesondere Kamera, ausgelesen zu werden, insbesondere wobei der Code als Markierung auf einer Oberfläche des Bauteils angeordnet ist.

Das Auslesen des Codes kann beim Handhaben des Bauteils mittels der Handhabungseinrichtung erfolgen. Insbesondere kann das Auslesen des Codes beim Transferieren des Bauteils mittels der Handhabungseinrichtung erfolgen. Hierbei kann vorgesehen sein, das Bauteil zwischen der Zuführvorrichtung und der Station derart zu transferieren, dass der Code an einen Auslesesensor vorbeigeführt und ausgelesen wird.

Durch den Code kann eine Identifikation jedes Bauteils erreicht werden, wodurch eine verbesserte Nachverfolgbarkeit und Sicherheit gewährleistet wird. Insbesondere kann überprüft und sichergestellt werden, dass das richtige Bauteil verbaut wird.

In einer weiteren Ausgestaltung nach dem vierten Aspekt kann das Verfahren des Weiteren die folgenden Schritte aufweisen: Entkoppeln des mit der Station gekoppelten Bauteils von der Station mittels der Handhabungseinrichtung, um das Bauteil auszubauen, wobei das Bauteil von der Handhabungseinrichtung aufgenommen ist; und Ausschleusen des ausgebauten Bauteils mittels Zuführvorrichtung aus der Umgebung mit beschränktem Zugang.

Das Entkoppeln kann insbesondere genau umgekehrt wie das Koppeln erfolgen. Der Schritt des Entkoppelns setzt den Schritt des Aufnehmens voraus. Insbesondere kann der Schritt des Entkoppelns ein Lösen der Arretierungseinrichtung beinhalten. Das Entkoppeln ist abgeschlossen, wenn das Bauteil keinen Kontakt mit der Station hat.

Das Ausschleusen kann insbesondere genau umgekehrt wie das Zuführen erfolgen. Zum Ausschleusen kann die Handhabungseinrichtung das Bauteil, insbesondere mittels des Schritts des Transferierens, zurück zur Zuführvorrichtung transferieren und auf dieser, insbesondere auf den Halterungen der Zuführvorrichtung, positionieren und, insbesondere mittels des Schritts des Freigebens, freigeben. Das Ausschleusen erfolgt ohne Verletzen der Integrität der definierten Atmosphäre des Isolators.

In einer weiteren Ausgestaltung der Aspekte können die Schritte des Einführens und Ausführens des Endeffektors derart ausgeführt werden, dass die Aufnahmeelemente ausschließlich aufgrund der Bewegung des Endeffektors in die Gegenstücke des Bauteils eingreifen und dass die Aufnahmeelemente und die Gegenstücke des Bauteils ausschließlich aufgrund der Bewegung des Endeffektors voneinander getrennt werden, wobei die Aufnahmeelemente unbeweglich ausgestaltet sind.

In einer weiteren Ausgestaltung der Aspekte kann der Schritt des Einführens eine Bewegungsabfolge folgender nacheinander ausgeführter Bewegungsschritte sein: Erstes Bewegen des Endeffektors, sodass zumindest zwei der Aufnahmeelemente jeweils zumindest abschnittsweise in eine Tiefenrichtung ausgehend von einer Oberfläche des Bauteils bewegt werden, wobei jedes Aufnahmeelement die Oberfläche im Bereich des jeweiligen Gegenstücks passiert und wobei die Gegenstücke des zumindest einen Bauteils als Aussparungen in dem Bauteil oder als Aussparungen in einem Adapter, der an dem zumindest einen Bauteil fixiert oder fixierbar ist, ausgebildet sind, wobei eine erste Aussparung eine im Wesentlichen halbkreisförmige Aussparung mit einem Kreisdurchmesser ist und die einen ersten Mittelpunkt definiert und eine radiale Öffnung aufweist, deren Breite mindestens gleich dem Kreisdurchmesser der ersten Aussparung ist, und eine zweite, insbesondere im Wesentlichen halbkreisförmige, Aussparung einen zweiten Mittelpunkt definiert, wobei der zweite Mittelpunkt von dem ersten Mittelpunkt in einem Abstand beabstandet ist, wobei die zweite, insbesondere halbkreisförmige, Aussparung einen ersten Bereich der zweiten Aussparung darstellt und wobei die zweite Aussparung einen zweiten Bereich aufweist, der mit dem ersten Bereich verbunden ist, und der dazu eingerichtet ist, eine Bewegung eines der Aufnahmeelemente, innerhalb der zweiten Aussparung, von dem zweiten Bereich in den ersten Bereich zu ermöglichen; Zweites Bewegen des Endeffektors, vorzugsweise geradliniges Bewegen des Endeffektors, sodass ein erstes Aufnahmeelement in die erste Aussparung eingreift und eine Mittelachse des ersten Aufnahmeelements mit dem ersten Mittelpunkt zusammenfällt; und Drittes Bewegen des Endeffektors, vorzugsweise rotatorisches Bewegen des Endeffektors, um die Mittelachse des ersten Aufnahmeelements, sodass die Bewegung eines zweiten Aufnahmeelements in der zweiten Aussparung von dem zweiten Bereich in den ersten Bereich auf einer Kreisbahn, deren Mittelpunkt mit dem ersten Mittelpunkt zusammenfällt, verläuft, wobei sich der zweite Bereich entlang eines Abschnitts der Bahn erstreckt, wobei die Bewegung endet, wenn eine Mittelachse des zweiten Aufnahmeelements mit dem zweiten Mittelpunkt zusammenfällt.

Die Tiefenrichtung weist von der Oberfläche eines Bauteils nach innen in das Gegenstück hinein. Die Aussparung erstreckt sich ausgehend von der Oberfläche des Bauteils in Tiefenrichtung nach innen in das Gegenstück hinein. Jede Aussparung erstreckt sich bis in eine definierte Tiefe in Tiefenrichtung in das Gegenstück hinein.

In dieser Ausgestaltung weist jedes Aufnahmeelement eines Barrieresystems eine entsprechende Länge auf, die es ermöglicht, dass die zumindest zwei Aufnahmeelemente, die über den Endeffektor miteinander fest verbunden sind, beide gleichzeitig in das jeweilige Gegenstück eingreifen können. Mit anderen Worten reichen dann beide Aufnahmeelemente zumindest abschnittsweise in eine Tiefenrichtung ausgehend von einer Oberfläche des Bauteils in das Bauteil hinein. Vorzugsweise reichen die Aufnahmeelemente mit den Endabschnitten die Gegenstücke hinein.

Das erste Bewegen ist eine Zustellbewegung. Weist das Aufnahmeelement am Endabschnitt den Vorsprung auf, muss die Zustellbewegung außerhalb des ersten Bereichs der Aussparung erfolgen.

Die Mittelachse des ersten Aufnahmeelements fällt bei einem, insbesondere im Bereich des Endabschnitts, zylindrisch ausgestalteten Aufnahmeelement mit der Zylinderachse zusammen.

Das zweite Bewegen kann insbesondere derart ausgeführt werden, dass zumindest das erste der Aufnahmeelemente mit dem Vorsprung in die Hinterschneidung eingreift. Hierbei kann der Vorsprung vorzugsweise durch eine Öffnung in einer Seite der nutförmigen Aussparung in die Hinterschneidung gelangen. Dazu ist es erforderlich, dass das zumindest erste Aufnahmeelement während des ersten Bewegens so weit in Tiefenrichtung bewegt wurde, dass der Vorsprung auf Höhe der Hinterschneidung angeordnet ist. Wenn die Mittelachse des ersten Aufnahmeelements mit dem ersten Mittelpunkt zusammenfällt, liegt das erste Aufnahmeelement derart definiert in der ersten Aussparung an, dass das erste Aufnahmeelement in der ersten Aussparung rotiert werden kann. Mit anderen Worten bildet das erste Aufnahmeelement dann zusammen mit der ersten Aussparung ein Drehgelenk.

Das dritte Bewegen stellt eine Rotationsbewegung des Endeffektors um die Mittelachse des ersten Aufnahmeelements dar. Durch die starre Verbindung der Aufnahmeelemente verläuft die Bewegung des zweiten Aufnahmeelements auf einer Kreisbahn um den ersten Mittelpunkt. Der Radius der Kreisbahn ist der Abstand zwischen den Mittelachsen des ersten und des zweiten Aufnahmeelements. Im Abschnitt der Kreisbahn kann die Aussparung einen Krümmungsradius entsprechend der Kreisbahn aufweisen. Die Aussparung kann im Bereich der Kreisbahn aber auch gradlinig ausgestaltet sein, wenn die Breite der Aussparung groß genug ist, um die Bewegung des zweite Aufnahmeelement auf der Kreisbahn zu ermöglichen. Insbesondere kann die Aussparung in dem zweiten Bereich eine größere Breite aufweisen als der Durchmesser des Endabschnitts des zweiten Aufnahmeelements. Wenn die Mittelachsen der Aufnahmeelemente mit den jeweiligen Mittelpunkten der Gegenstücke zusammenfallen, greifen die Aufnahmeelemente in die Aussparungen ein und das Bauteil ist von der Handhabungseinrichtung aufgenommen. Insbesondere weist die zweite Aussparung eine Innenkontur auf, die während der Bewegung des zweiten Aufnahmeelements in der zweiten Aussparung mit der Außenkontur des zweiten Aufnahmeelements zusammenwirkt, sodass eine Kontaktkraft zwischen dem zweiten Aufnahmeelement und der zweiten Aussparung zunimmt, je näher die Mittelachse des zweiten Aufnahmeelements dem zweiten Mittelpunkt kommt. Auf diese Weise kann das Eingreifen der Aufnahmeelemente in den Gegenstücken zum Aufnehmen des Bauteils mittels Formschluss und Kraftschluss realisiert werden.

Die Mittelachse des zweiten Aufnahmeelements fällt bei einem, insbesondere im Bereich des Endabschnitts, zylindrisch ausgestalteten Aufnahmeelement mit der Zylinderachse zusammen. Ist das zweite Aufnahmeelement nicht zylindrisch ausgestaltet, ist die Mittelachse des zweiten Aufnahmeelements eine Achse in Längserstreckungsrichtung des Aufnahmeelements, die mit dem zweiten Mittelpunkt zusammenfällt, wenn sich das zweite Aufnahmeelement in der zweiten Aussparung im Eingriff befindet und das Bauteil von der Handhabungseinrichtung aufgenommen ist.

In einer alternativen Ausgestaltung der Aspekte kann der Schritt des Einführens eine Bewegungsabfolge folgender nacheinander ausgeführter Bewegungsschritte sein: Erstes Bewegen des Endeffektors, sodass zumindest zwei der Aufnahmeelemente jeweils zumindest abschnittsweise in eine Tiefenrichtung ausgehend von einer Oberfläche des Bauteils bewegt werden, wobei jedes Aufnahmeelement die Oberfläche im Bereich des jeweiligen Gegenstücks passiert und wobei die Gegenstücke des zumindest einen Bauteils als Aussparungen in dem Bauteil oder als Aussparungen in einem Adapter, der an dem zumindest einen Bauteil fixiert oder fixierbar ist, ausgebildet sind, wobei eine erste Aussparung eine im Wesentlichen halbkreisförmige Aussparung mit einem Kreisdurchmesser ist und die einen ersten Mittelpunkt definiert und eine radiale Öffnung aufweist, deren Breite mindestens gleich dem Kreisdurchmesser der ersten Aussparung ist, und eine zweite, insbesondere im Wesentlichen halbkreisförmige, Aussparung einen zweiten Mittelpunkt definiert, wobei der zweite Mittelpunkt von dem ersten Mittelpunkt in einem Abstand beabstandet ist, wobei die zweite, insbesondere halbkreisförmige, Aussparung einen ersten Bereich der zweiten Aussparung darstellt und wobei die zweite Aussparung einen zweiten Bereich aufweist, der mit dem ersten Bereich verbunden ist, und der dazu eingerichtet ist, eine Bewegung eines der Aufnahmeelemente, innerhalb der zweiten Aussparung, von dem zweiten Bereich in den ersten Bereich zu ermöglichen; Weiteres Bewegen des Endeffektors, sodass die Bewegungen eines ersten Aufnahmeelements und eines zweiten Aufnahmeelements auf gleichverlaufenden, parallelen Bahnen erfolgen, wobei die Bahnen gradlinig oder gekrümmt sind, wobei sich der zweite Bereich entlang eines Abschnitts der Bahn erstreckt und sodass das erste Aufnahmeelement in die erste Aussparung eingreift und das zweite Aufnahmeelement in die zweite Aussparung eingreift, wobei die Bewegung endet, wenn eine Mittelachse des ersten Aufnahmeelements mit dem ersten Mittelpunkt zusammenfällt und eine Mittelachse des zweiten Aufnahmeelements mit dem zweiten Mittelpunkt zusammenfällt.

Die Tiefenrichtung weist von der Oberfläche eines Bauteils nach innen in das Gegenstück hinein. Die Aussparung erstreckt sich ausgehend von der Oberfläche des Bauteils in Tiefenrichtung nach innen in das Bauteil hinein. Jede Aussparung erstreckt sich bis in eine definierte Tiefe in Tiefenrichtung in das Gegenstück hinein.

In dieser Ausgestaltung weist jedes Aufnahmeelement eines Barrieresystems eine entsprechende Länge auf, die es ermöglicht, dass die zumindest zwei Aufnahmeelemente, die über den Endeffektor miteinander fest verbunden sind, beide gleichzeitig in das jeweilige Gegenstück eingreifen können. Mit anderen Worten reichen dann beide Aufnahmeelemente zumindest abschnittsweise in eine Tiefenrichtung ausgehend von einer Oberfläche des Bauteils in das Bauteil hinein. Vorzugsweise reichen die Aufnahmeelemente mit den Endabschnitten die Gegenstücke hinein.

Das erste Bewegen ist eine Zustellbewegung. Weist das Aufnahmeelement am Endabschnitt den Vorsprung auf, muss die Zustellbewegung außerhalb des ersten Bereichs der Aussparung erfolgen.

Die Mittelachse des ersten Aufnahmeelements fällt bei einem, insbesondere im Bereich des Endabschnitts, zylindrisch ausgestalteten Aufnahmeelement mit der Zylinderachse zusammen.

Das weitere Bewegen stellt eine Translationsbewegung des Endeffektors dar. Das weitere Bewegen kann insbesondere derart ausgeführt werden, dass das erste und das zweite Aufnahmeelement jeweils mit dem Vorsprung in die Hinterschneidung eingreift. Hierbei kann jeweils der Vorsprung vorzugsweise durch eine Öffnung in einer Seite der nutförmigen Aussparung in die Hinterschneidung gelangen. Dazu ist es erforderlich, dass das erste und das zweite Aufnahmeelement während des ersten Bewegens so weit in Tiefenrichtung bewegt wurde, dass jeweils der Vorsprung auf Höhe der Hinterschneidung angeordnet ist. Wenn die Mittelachse des ersten, bzw. die des zweiten Aufnahmeelements mit dem ersten, bzw. dem zweiten Mittelpunkt zusammenfällt, liegt das erste, bzw. zweite Aufnahmeelement definiert in der ersten, bzw. zweiten Aussparung an. Wenn die Mittelachsen der Aufnahmeelemente mit den jeweiligen Mittelpunkten der Gegenstücke zusammenfallen, greifen die Aufnahmeelemente in die Aussparungen ein und das Bauteil ist von der Handhabungseinrichtung aufgenommen.

In einer weiteren Ausgestaltung nach dem fünften Aspekt kann, wenn das Bauteil mit der Station gekoppelt ist, das Verfahren des Weiteren den folgenden Schritt aufweisen: Steuern des Aktors der Station mittels der Steuereinrichtung, sodass das Bauteil in eine Betriebsposition, verbracht wird, wobei die Betriebsposition eine Position ist, in der das Bauteil in dem Verarbeitungssystem eingesetzt wird.

In einer weiteren Ausgestaltung nach dem sechsten Aspekt kann das Verfahren des Weiteren einen Schritt des Befestigens eines Hilfswerkzeugs mittels der Handhabungseinrichtung an der zweiten Station aufweisen, wobei das Hilfswerkzeug dazu eingerichtet ist, mittels einer Bewegung des Aktors der zweiten Station und/oder mittels einer Bewegung des Aktors der ersten Station relativ zu der Arretierungseinrichtung bewegt zu werden, um die Arretierungseinrichtung zu lösen oder zu arretieren, wobei der Schritt des Befestigens vor den Schritten des Lösens und des Arretierens erfolgt.

Das Befestigen kann insbesondere in gleicher Weise erfolgen, wie das Koppeln des Bauteils mit der Station.

In einer weiteren Ausgestaltung nach dem siebten Aspekt kann, wenn die Koordinateninitiierungseinrichtung an einem Aktor einer weiteren Station des Barrieresystems befestigt ist, das Verfahren des Weiteren einen Schritt des Bewegens der Koordinateninitiierungseinrichtung mittels des Aktors aufweisen, um die Koordinateninitiierungseinrichtung in Kontakt mit der Zuführvorrichtung zu bringen.

Das Bewegen der Koordinateninitiierungseinrichtung erfolgt entsprechend der Bewegung des Aktors. Vorzugsweise kann das Bewegen gradlinig erfolgen. Der Schritt des Bewegens kann insbesondere vor dem Schritt des Definierens stattfinden.

In einer weiteren Ausgestaltung der Aspekte kann das Verfahren des Weiteren einen Schritt des Fixierens der Zuführvorrichtung mittels der Koordinateninitiierungseinrichtung aufweisen, um eine Position und eine Lage der Zuführvorrichtung zu sichern.

Zum Fixieren kann die Koordinateninitiierungseinrichtung, vorzugsweise kegelförmige, Auflageelemente aufweisen, die dazu eingerichtet sind, formschlüssig in entsprechende, vorzugsweise kegelförmige, Aufnahmen der Zuführvorrichtung zugleiten, wenn die Koordinateninitiierungseinrichtung gegen die Zuführvorrichtung, vorzugsweise gegen die Unterseite der Zuführvorrichtung, bewegt wird. Vorzugsweise fixiert die Koordinateninitiierungseinrichtung die Zuführvorrichtung mit drei Auflageelementen, sodass die Zuführvorrichtung mechanisch bestimmt auf den Auflageelementen aufliegt.

Insbesondre kann das Fixieren derart erfolgen, dass die Zuführeinrichtung durch die Koordinateninitiierungseinrichtung angehoben wird, sodass diese in mechanisch bestimmter Weise von der Koordinateninitiierungseinrichtung getragen wird. Vorzugsweise fixiert die Koordinateninitiierungseinrichtung die Zuführvorrichtung mit drei Auflageelementen, sodass die Zuführvorrichtung mechanisch bestimmt auf den Auflageelementen aufliegt. Dadurch erfolgt eine definierte Ausrichtung der Zuführeinrichtung relativ zu der Koordinateninitiierungseinrichtung. Durch das Fixieren wird sichergestellt, dass die Zuführeinrichtung während des Aufnehmens von Bauteilen mittels der Handhabungseinrichtung der definierten Ausrichtung verbleibt. Auf diese Weise kann die Handhabung der Bauteile verbessert werden.

Der Schritt des Fixierens kann insbesondere vor dem Schritt des Definierens stattfinden.

In einer weiteren Ausgestaltung der Aspekte kann das Verfahren des Weiteren die folgenden Schritte aufweisen: Übermitteln einer Information über die Ausgangsposition des zumindest einen Bauteils von der Koordinateninitiierungseinrichtung an eine Steuereinrichtung des Barrieresystem zum Steuern der Handhabungseinrichtung; und Steuern der Handhabungseinrichtung, insbesondere ausschließlich, basierend auf der Information, um das zumindest eine Bauteil aufzunehmen und/oder zu orientieren und/oder zu positionieren und/oder einzubauen.

Um das Bauteil einzubauen, kann insbesondere der Schritt des Koppelns des Bauteils mit der Station nach dem vierten Aspekt verwendet werden.

Das Übermitteln kann mittels üblicher Verfahren der Signal- und Datenverarbeitung erfolgen. Insbesondere kann ein Bussystem eingesetzt werden.

Das Steuern kann mittels der Steuereinrichtung oder einer weiteren Steuereinrichtung erfolgen. Wenn das Steuern ausschließlich basierend auf der Information durchgeführt wird, kann auf zusätzliche Sensoren zur Verbesserung der Handhabung verzichtet werden.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Ansicht einer ersten Ausführungsform eines Isolatorsystems;
- Fig. 2: eine isometrische Ansicht einer zweiten Ausführungsform eines Isolatorsystems;
- Fig. 3: eine isometrische Ansicht einer Ausführungsform einer Handhabungseinrichtung;
- Fig. 4: eine isometrische Ansicht der Aufnahmeelemente des Endeffektors beim Eingreifen in die Gegenstücke des Hilfswerkzeugs, bzw. des Bauteils.
- Fig. 5: eine schematische Ansicht der Gegenstücke einer a) ersten und einer b) zweiten Ausführungsform des Bauteils, bzw. des Hilfswerkzeugs;
- Fig. 6: eine isometrische Ansicht einer dritten Ausführungsform eines Isolatorsystems (Nicht dargestellt: Arm der Handhabungseinrichtung; Isolator; Transfersystem);
- Fig. 7: eine isometrische Ansicht einer vierte Ausführungsform eines Isolatorsystems (Nicht dargestellt: Handhabungseinrichtung; Isolator; Transfersystem);
- Fig. 8: eine schematische Ansicht einer ersten Ausführungsform eines Verfahrens zum Bereitstellen eines Verarbeitungssystems eines Barrieresystems, insbesondere Isolatorsystems;
- Fig. 9: eine schematische Ansicht einer zweiten Ausführungsform des Verfahrens zum Bereitstellen eines Verarbeitungssystems eines Barrieresystems, insbesondere Isolatorsystems;
- Fig. 10: eine schematische Ansicht einer dritten Ausführungsform des Verfahrens zum Bereitstellen eines Verarbeitungssystems eines Barrieresystems, insbesondere Isolatorsystems;
- Fig. 11: ein Flussdiagramm nacheinander ausgeführter Bewegungsschritte des Schritts des Einführens einer vierten Ausführungsform des Verfahrens zum Bereitstellen eines Verarbeitungssystems eines Barrieresystems, insbesondere Isolatorsystems;
- Fig. 12: ein Flussdiagramm nacheinander ausgeführter Bewegungsschritte des Schritts des Einführens einer fünften Ausführungsform des Verfahrens zum Bereitstellen eines Verarbeitungssystems eines Barrieresystems, insbesondere Isolatorsystems;
- Fig. 13: eine schematische Ansicht einer ersten Ausführungsform eines Verfahrens zum Koppeln eines Bauteils für ein Verarbeitungssystem eines Barrieresystems, insbesondere Isolatorsystems;
- Fig. 14: eine schematische Ansicht einer zweiten Ausführungsform des Verfahrens zum Koppeln eines Bauteils für ein Verarbeitungssystem eines Barrieresystems, insbesondere Isolatorsystems;
- Fig. 15: eine schematische Ansicht einer erste Ausführungsform eines weiteren Verfahrens zum Koppeln eines Bauteils für ein Verarbeitungssystem eines Barrieresystems, insbesondere Isolatorsystems;
- Fig. 16: eine schematische Ansicht einer zweiten Ausführungsform des weiteren Verfahrens zum Koppeln eines Bauteils für ein Verarbeitungssystem eines Barrieresystems, insbesondere Isolatorsystems;
- Fig. 17: eine schematische Ansicht einer ersten Ausführungsform eines Verfahrens zum Initiieren einer Handhabung zumindest eines Bauteils für ein Verarbeitungssystem eines Barrieresystems, insbesondere Isolatorsystems;
- Fig. 18: eine schematische Ansicht einer zweiten Ausführungsform des Verfahrens zum Initiieren einer Handhabung zumindest eines Bauteils für ein Verarbeitungssystem eines Barrieresystems, insbesondere Isolatorsystems;
- Fig. 19: eine schematische Ansicht einer dritten Ausführungsform des Verfahrens zum Initiieren einer Handhabung zumindest eines Bauteils für ein Verarbeitungssystem eines Barrieresystems, insbesondere Isolatorsystems;
- Fig. 20: eine schematische Ansicht einer vierten Ausführungsform des Verfahrens zum Initiieren einer Handhabung zumindest eines Bauteils für ein Verarbeitungssystem eines Barrieresystems, insbesondere Isolatorsystems;

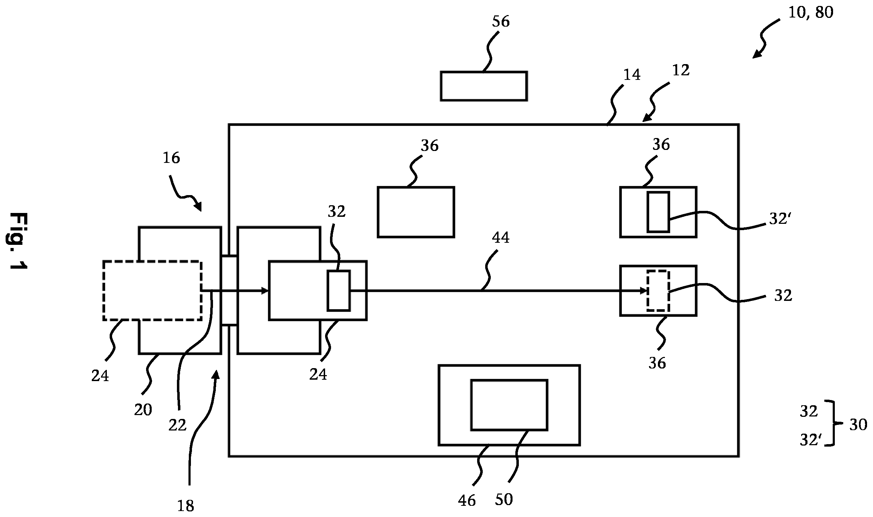

Fig. 1 zeigt eine erste Ausführungsform eines Isolatorsystems als ein Barrieresystem, in seiner Gesamtheit mit der Bezugsziffer 10 bezeichnet. Es handelt sich um eine schematische Darstellung.

Das Isolatorsystem 10 weist einen Isolator 12 auf. Der Isolator ist eine Umgebung mit beschränktem Zugang. Der Isolator 12 weist einen Innenraum 14 auf. Der Isolator 12 weist des Weiteren ein Transfersystem 16 auf. Das Transfersystem 16 kann als Alpha-Beta-Portsystem ausgestaltet sein. Das Transfersystem 16 weist einen Port 18 auf. Der Port 18 kann ein Alpha-Port sein. Der Port 18 ist an einer Wand des Isolators 12 angeordnet, die den Innenraum 14 von einer äußeren Umgebung trennt. Der Port 18 kann eine Isolatoröffnung und eine Isolatortür aufweisen. Die Isolatortür kann an der Isolatoröffnung angeordnet sein. Mittels der Isolatortür kann die Isolatoröffnung geöffnet oder verschlossen werden. Von außen kann eine Transferschleuse 20 an den Port 18 gekoppelt werden. Die Transferschleuse 20 kann als Beta-Behälter oder Beta-Port ausgestaltet sein.

Das Isolatorsystem 10 weist in dem Innenraum 14 des Isolators 12 eine Zuführvorrichtung 24, mehrere Stationen 36 und eine Handhabungseinrichtung 46 auf.

Die Zuführvorrichtung 24 dient zum Zuführen von Bauteilen 32, 32' für ein Verarbeitungssystem 30 in den Isolator 12. Dabei kann die Zuführvorrichtung in der Transferschleuse 20 angeordnet bzw. bereitgestellt sein und mittels des Ports 18 in den Innenraum 14 eingebracht werden. Die Zuführvorrichtung 24 kann dazu in der Transferschleuse 20 beweglich sein. Diese Bewegung ist anhand des Bewegungspfeils 22 dargestellt. Die Bauteile 32, 32' können außerhalb des Isolators in der Zuführvorrichtung 24 bereitgestellt werden und dann über den Port 18 und in den Innenraum 14 des Isolators 12 zugeführt werden.

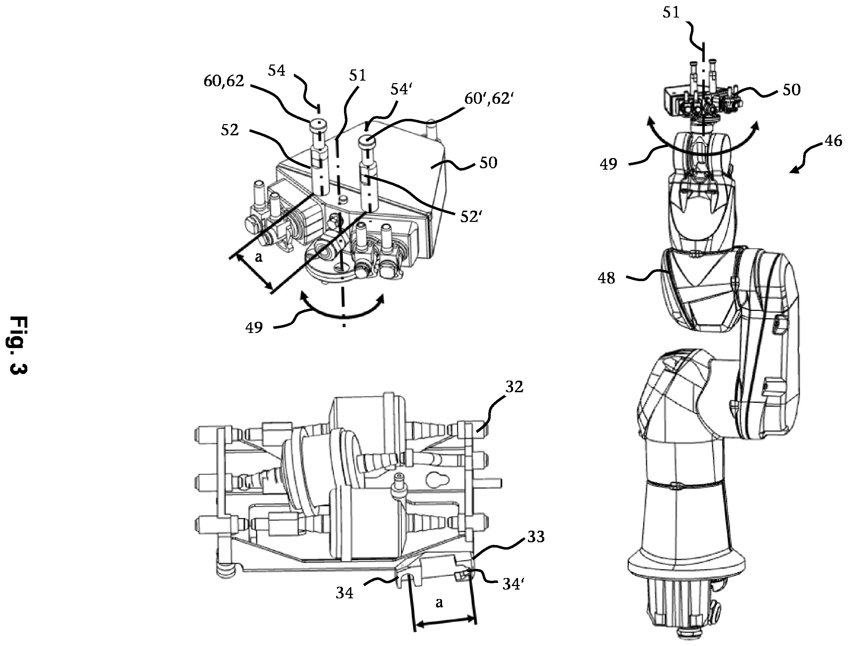

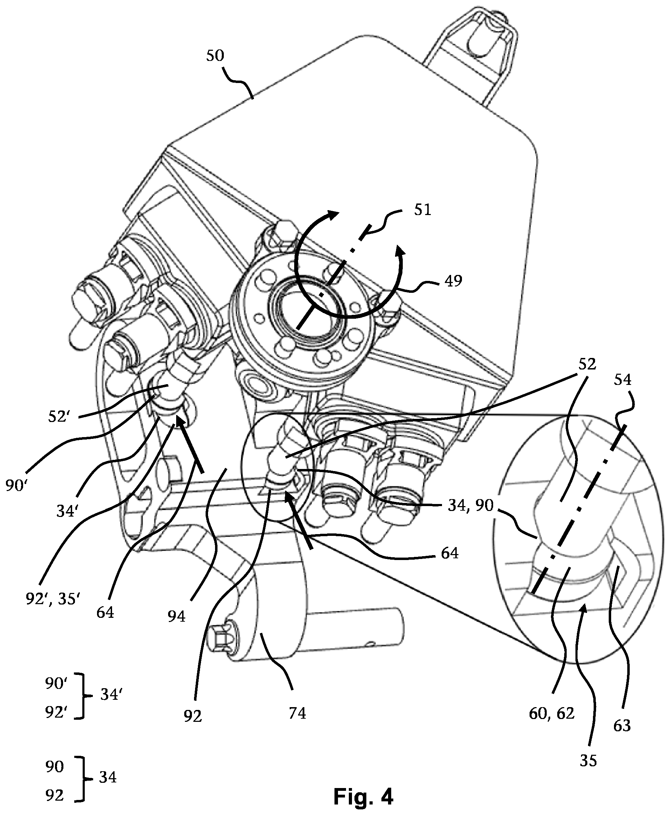

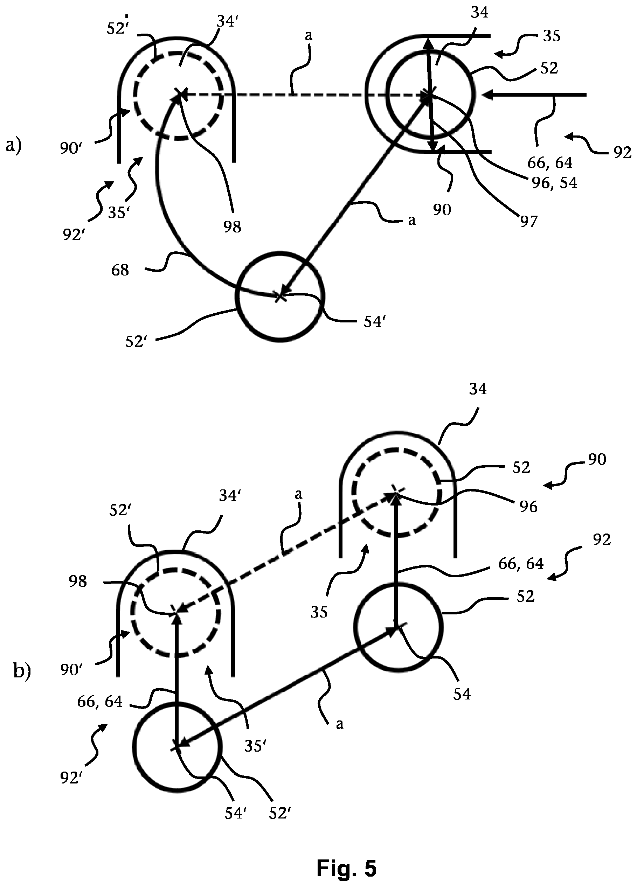

Die Handhabungseinrichtung 46 dient zum Handhaben, insbesondere Transferieren, der Bauteile 32, 32' innerhalb des Isolators 12. Das Transferieren ist exemplarisch für das Bauteil 32 anhand des Pfeils 44 dargestellt. Des Weiteren dient die Handhabungseinrichtung 46 dazu, die Bauteile einzubauen, indem die Handhabungseinrichtung 46 das Bauteil 32 mit der Station 36 koppelt. Das Bauteil 32' ist bereits mittels der Handhabungseinrichtung 46 mit der Station 36 gekoppelt worden. Zum Handhaben der Bauteile weist die Handhabungseinrichtung 46 einen Endeffektor 50 auf. Der Endeffektor 50 dient zum Aufnehmen der Bauteile 32, 32'. Das Aufnehmen der Bauteile ist in Fig. 4 und 5 genauer beschrieben. Der Endeffektor 50 kann von der Handhabungseinrichtung 46 entsprechend bewegt werden, um die Bauteile 32, 32' zu orientieren, bzw. auszurichten und in einer vorgesehenen Orientierung mit den Stationen 36 zu koppeln. Die Handhabungseinrichtung 46 kann vorzugsweise als Handhabungsroboter, insbesondere gemäß der Ausführungsform nach Fig. 3 ausgestaltet sein.

Insbesondere können die Bauteile 32, 32' auch wieder von der Handhabungseinrichtung 46 ausgebaut, bzw. entkoppelt und mittels der Zuführvorrichtung 24 ausgeschleust werden. Die Bewegungen laufen dann entsprechend in umgekehrter Richtung der Pfeile 44 und 22 ab.

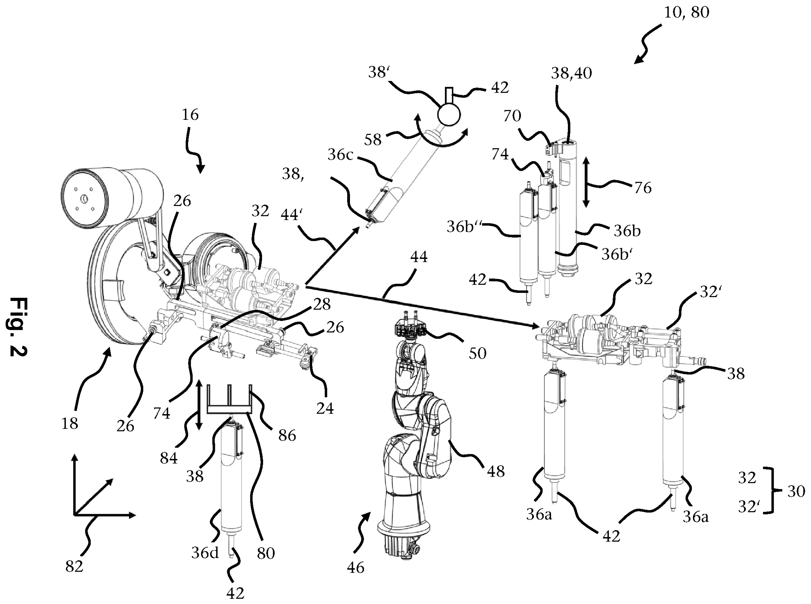

Die Stationen 36 dienen zur Aufnahme der Bauteile 32, 32 und zum Fixieren der Bauteile 32, 32 in jeweils einer definierten Position, um das Verarbeitungssystem 30 bereitzustellen. Sind alle Bauteile 32, 32' mit den Stationen 36 gekoppelt ist das Verarbeitungssystem 30 in dem Isolator 12 bereitgestellt. Insbesondere können die Bauteile 32, 32' miteinander verbunden werden, um eine Verarbeitungsstation, bzw. das Verarbeitungssystem 30 bereitzustellen. Das Koppeln des Bauteils 32 mit der Station 36 kann insbesondere durch einen Aktor 38 (nicht dargestellt; vgl. hierzu Fig. 2) der Station 36 unterstützt werden. Wie in Fig. 1 und 2 zu erkennen ist, wird nicht zwangsweise mit jeder Station 36 ein Bauteil 32, 32' gekoppelt.

Das Isolatorsystem 10 kann des Weiteren eine Steuereinrichtung 56 aufweisen. Die Steuereinrichtung 56 dient dazu, die Handhabungseinrichtung 46 zu steuern. Insbesondere steuert die Steuereinrichtung 56 das Transferieren des Bauteils 32 von der Zuführvorrichtung 24 zu der Station 36. Die Steuereinrichtung 56 kann des Weiteren dazu eingerichtet sein, den Aktor 38 und/oder die Handhabungseinrichtung 46 zu steuern. Es kann aber auch jeweils eine Steuereinrichtung 56, 56' zum Steuern des Aktors 38 und der Handhabungseinrichtung 46 geben, insbesondere wobei die Steuereinrichtungen 56, 56' in Datenaustausch stehen. Insbesondere können auf diese Weise Bewegungen der Handhabungseinrichtung 46 und des Aktors 38 aufeinander abgestimmt werden.

Fig. 1 zeigt des Weiteren ein System 80 mit dem Isolatorsystem 10 und den Bauteilen 32, 32'.

Fig. 2 zeigt eine zweite Ausführungsform des Isolatorsystems 10. Das Isolatorsystem der zweiten Ausführungsform entspricht im Wesentlichen dem Isolatorsystem 10 der ersten Ausführungsform aus Fig. 1. Gleiche Elemente sind mit gleichen Bezugszeichen gekennzeichnet und werden nicht näher erläutert. In Fig. 2 sind nur die Komponenten des Isolatorsystems 10 dargestellt, die im Innenraum 14 des Isolators 12 angeordnet sind. Auch wenn nicht dargestellt, kann das Isolatorsystem 10 eine Steuereinrichtung 56 insbesondere entsprechend der der ersten Ausführungsform aufweisen.

In Fig. 2 sind die Stationen 36 zum besseren Verständnis in Gruppen a, b, c und d eingeteilt. Die Stationen 36a, 36b, 36c und 36d können dennoch gleich ausgestaltet sein. Wird von der Mehrzahl aller Stationen 36 in dem Isolator gesprochen, werden diese gemeinsam mit dem Bezugszeichen 36 bezeichnet. Die Stationen können mit einer Montagevorrichtung 42 in dem Isolator, insbesondere an den Wänden oder am Boden, befestigt sein. Bei der Montagevorrichtung 42 kann es sich um einen Bolzen oder andere herkömmliche Befestigungsmittel handeln. Bei dem Aktor 38 kann es sich jeweils um eine Hub-Schwenk-Achse handeln, mittels der das darauf montierte Bauteil bewegt werden kann.

Die Bauteile 32, 32' werden auch in der zweiten Ausführungsform mittels der Zuführvorrichtung 24 in den Isolator 12 eingebracht. Des Weiteren kann auch ein Hilfswerkzeug 74 mittels der Zuführvorrichtung 24 in den Isolator 12 eingebracht werden. Die Zuführvorrichtung 24 in Fig. 2 ist wie eine Schublade bewegbar ausgestaltet. Hierzu weist die Zuführvorrichtung 24 Rollen 26 auf, die auf Schienen (nicht dargestellt) geführt werden, um die Bewegung (vgl. den Pfeil 22 in Fig. 1) der Zuführvorrichtung 24 zu realisieren. Insbesondere können die Schienen abschnittsweise in den Innenraum 14 ragen, wenn der Port 18 geöffnet ist.

Die Zuführvorrichtung 24 kann insbesondere Halterungen 28 zum Halten der Bauteile 32, 32' und des Hilfswerkzeugs 74 aufweisen. Die Halterungen 28 können dazu eingerichtet sein, die Bauteile 32, 32' und des Hilfswerkzeugs 74 in einer definierten Position und Lage in der Zuführvorrichtung zu halten.

Das Isolatorsystem 10 kann in dieser Ausführungsform eine Koordinateninitiierungseinrichtung 80 aufweisen. Durch Wechselwirken der Koordinateninitiierungseinrichtung 80 mit der Zuführvorrichtung 24 kann eine Ausgangsposition der Bauteile 32, 32' und des Hilfswerkzeugs 74 in der Zuführvorrichtung 24 relativ zu der Handhabungseinrichtung 46 und relativ zu jeder Station 36 des Isolatorsystem 10 bestimmt werden. Auf diese Weise kann die Ausgangsposition der Bauteile 32, 32' und des Hilfswerkzeugs 74 in dem Innenraum 14 des Isolators 12 definiert werden.

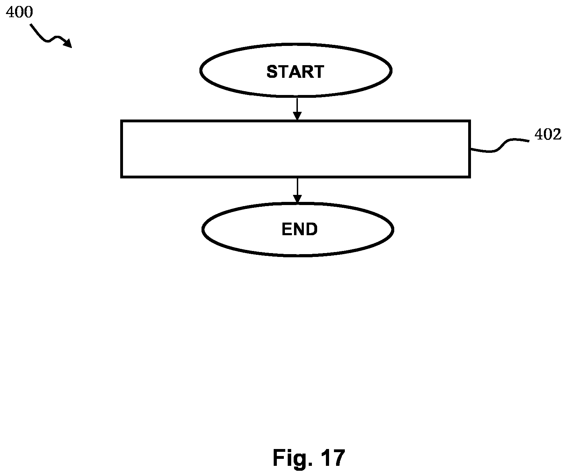

Die Ausgangsposition kann eine Position und/oder eine Lage in einem definierten Koordinatensystem 82 sein. Unter der Lage kann eine Orientierung des Bauteils 32, 32' oder des Hilfswerkzeugs 74 relativ zu dem Koordinatensystem 82 verstanden werden. Das Koordinatensystem 82 kann den Raum in dem Isolator 12 mittels Raumkoordinaten definieren. In dem Koordinatensystem 82 können des Weiteren jeweils eine Position und/oder eine Lage, bzw. Orientierung der Handhabungseinrichtung 46 und der Stationen 36 definiert sein. Die Ausgangsposition kann mittels des Schritts des Definierens 402 definiert werden (siehe hierzu Fig. 17).

Die Koordinateninitiierungseinrichtung 80 kann an dem Aktor 38 der Station 36d befestigt sein. Genauer gesagt kann die Koordinateninitiierungseinrichtung 80 an einem bewegbarern, bzw. aktuierbarern Teil des Aktors 38 befestigt sein, sodass die Koordinateninitiierungseinrichtung 80 von dem Aktor 38 bewegt werden kann. Der Aktor 38 der Station 36d ist ein linear ausfahrbarer Zylinder. Auf diese Weise kann die Koordinateninitiierungseinrichtung 80 linear, bzw. gradlinig entsprechend des Pfeils 84 auf und ab, bzw. in Kontakt mit der Zuführvorrichtung 24 und weg von der Zuführvorrichtung 24 bewegt werden. Die Koordinateninitiierungseinrichtung 80 weist drei, vorzugsweise kegelförmige, Auflageelemente 86 auf, die dazu eingerichtet sind, formschlüssig in entsprechende, vorzugsweise kegelförmige, Aufnahmen (nicht dargestellt) der Zuführvorrichtung 24 zu gleiten, wenn die Koordinateninitiierungseinrichtung 80 in Kontakt mit der Zuführvorrichtung 24 an der Unterseite der Zuführvorrichtung 24 bewegt wird. Dabei kann die Zuführvorrichtung 24 von der Koordinateninitiierungseinrichtung 80 angehoben werden, um diese zu fixieren, wobei die Zuführvorrichtung 24 mechanisch bestimmt auf den Auflageelementen 86 aufliegt. Auf diese Weise kann eine definierte Ausrichtung der Zuführeinrichtung 24 relativ zu der Koordinateninitiierungseinrichtung 80 und somit auch zu dem Koordinatensystem 82 realisiert werden.

Die Handhabungseinrichtung 46 weist in dieser Ausführungsform einen Bewegungsbereich auf. Der Bewegungsbereich ist so gewählt, dass alle Stationen 36 in dem Bewegungsbereich der Handhabungseinrichtung 46 liegen. Auf diese Weise kann die Handhabungseinrichtung 46 die Bauteile 32, 32', die zunächst wie zuvor beschrieben nach dem Zuführen in den Isolator 12 in der bekannten und definierten Ausgangsposition in der Zuführvorrichtung 24 angeordnet sind, zu den Stationen 36a transferieren (das Transferieren ist in Fig. 2 und 1 anhand des Pfeils 44 dargestellt) und mit den Stationen 36a koppeln, um diese einzubauen. In dem in Fig. 2 eingebauten Zustand, sind die Bauteile 32, 32' bereits mit den Stationen 36a gekoppelt und miteinander verbunden. In diesem Zustand bilden die Bauteile 32, 32' das Verarbeitungssystem 30. Die Aktoren 38 der Stationen 36a sind als linear ausfahrbarere Zylinder ausgebildet. Insbesondere können dabei die Aktoren 38 der Stationen 36a in eine Höhe verfahren, die eine definierte Position der Bauteile 32, 32' sicherstellt, sodass auch das Verarbeitungssystem 30 in einer definierten Position bereitgestellt wird.

In dieser Ausführungsform kann die Handhabungseinrichtung 46 beispielsweise das Bauteil 32 alternativ auch zu der Station 36c transferieren (das alternative Transferieren ist anhand des Pfeils 44' dargestellt) und mit der Station 36c koppeln, um das Bauteil 32 einzubauen. Die Station 36c kann ebenfalls einen Aktor 38, der als linear ausfahrbarere Zylinder ausgebildet ist, aufweisen. Die Station 36c kann des Weiteren einen Aktor 38', der als schwenkbarer Zylinder ausgebildet ist, aufweisen. In dieser Ausführungsform kann das Isolatorsystem 10 eine weitere Steuereinrichtung 56' (nicht dargestellt) aufweisen. Insbesondere kann es sich bei der Steuereinrichtung 56' um die Steuereinrichtung 56 der ersten Ausführungsform handeln. Die Steuereinrichtung 56' ist dazu ausgebildet, wenn das Bauteil von der Handhabungseinrichtung aufgenommen ist, ein Koppeln des Bauteils mit der Station, durch eine Bewegung des Aktors 38, 38' der Station 36c zu unterstützen. Dazu steuert die Steuereinrichtung 56' beispielsweise den Aktor 38' derart, sodass zumindest eine Befestigungsvorrichtung 40 der Station 36c in eine zum Koppeln mit dem Bauteil 32 vordefinierte Position bewegt wird. Die in Fig. 2 dargestellt vordefinierte Position der Befestigungsvorrichtung 40 eignet sich gut zum Koppeln. Insbesondere ist die Befestigungsvorrichtung 40 in der vordefinierten Position im Bewegungsbereich der Handhabungseinrichtung 46. Außerdem kann die Befestigungsvorrichtung 40 in der vordefinierten Position für die Handhabungseinrichtung 46 gut zugänglich sein. Das bedeutet, dass keine anderen Komponenten derart zwischen der Befestigungsvorrichtung 40 und der Handhabungseinrichtung 46 angeordnet sind, dass das Koppeln erschwert oder verhindert wird.

Die Steuereinrichtung 56' kann, wenn das Bauteil 32 mit der Station 36c gekoppelt ist, den Aktor 38' derart steuert, sodass das Bauteil 32 in eine Betriebsposition verbracht wird. Das Bewegen des Aktors 38' ist anhand des Pfeils 58 dargestellt. In der Betriebsposition kann das Bauteil 32 dann beispielsweise außerhalb des Bewegungsbereichs der Handhabungseinrichtung 46 angeordnet sein.

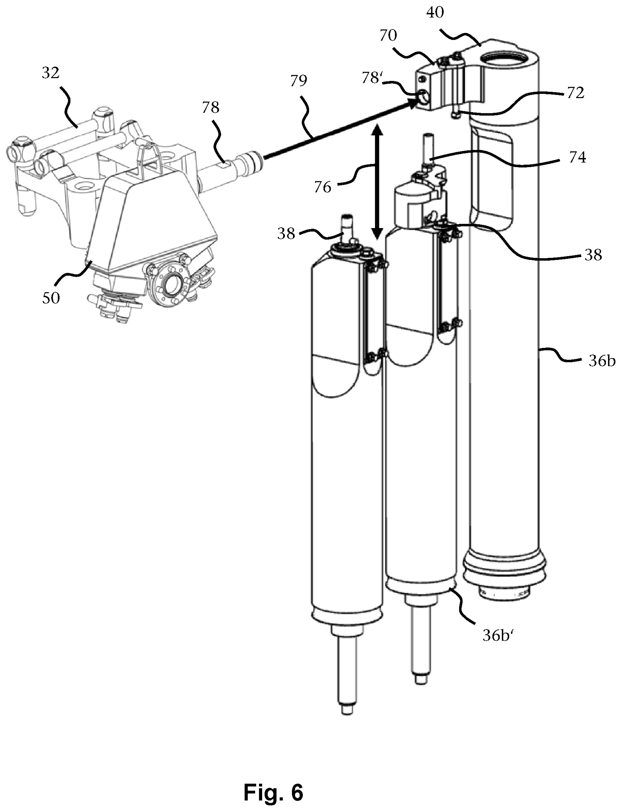

In dieser Ausführungsform kann die Handhabungseinrichtung 46 beispielsweise das Bauteil 32 alternativ auch zu der (ersten) Station 36b transferieren und mit der Station 36b koppeln, um das Bauteil 32 einzubauen. Hierzu kann die (erste) Station 36b ebenfalls eine Befestigungsvorrichtung 40 aufweisen. Die Station 36b kann des Weiteren eine Arretierungseinrichtung 70 aufweisen, um das Koppeln des Bauteils 32 mit der Station 36b zu sichern. Die Arretierungseinrichtung 70 kann Teil der Befestigungsvorrichtung 40 der ersten Station 36b sein, oder in diese integriert sein. Der Aktor 38 einer zweiten Station 36b' kann dazu eingerichtet sein, die Arretierungseinrichtung 70 zu lösen oder zu arretieren, indem der Aktor 38 in Kontakt mit der Arretierungseinrichtung 70 bewegt wird. Insbesondere kann hierzu das Hilfswerkzeug 74 an der zweiten Station 36b' mittels der Handhabungseinrichtung 46 befestigbar sein. In Fig. 2 ist das Hilfswerkzeug 74 im befestigten Zustand an der zweiten Station 36b' gezeigt. Zum Befestigen kann das Hilfswerkzeug 74 in gleicher Weise mittels der Handhabungseinrichtung 46 gehandhabt und mit der Station 36 gekoppelt werden wie die Bauteile 32, 32'. Das Bedienen der Arretierungseinrichtung 70, insbesondere mittels des Hilfswerkzeugs 74, wird im Folgenden anhand von Fig. 6 genauer beschrieben.

Zum Steuern des Aktors 38 der zweiten Station 36b' kann das Isolatorsystem 10 eine weitere Steuereinrichtung 56" aufweisen. Die Steuereinrichtung 56" kann wie die Steuereinrichtung 56' ausgebildet sein, oder es kann sich um die gleiche Steuereinrichtung handeln.

Fig. 2 zeigt des Weiteren ein System 80 mit dem Isolatorsystem 10 und den Bauteilen 32, 32'. Insbesondere kann das System 80 des Weiteren das Hilfswerkzeug 74 aufweisen.

In Fig. 3 ist die Handhabungseinrichtung 46 des Isolatorsystem 10 aus Fig. 2 und ein Bauteil 32 im Detail dargestellt.

Die Handhabungseinrichtung 46 dient zum Handhaben der Bauteile 32, 32' in dem Isolator 12. Somit dient die Handhabungseinrichtung 46 dazu, die zugeführten Bauteile 32, 32' zwischen der Zuführvorrichtung 24 und der Station 36 (nicht dargestellt) zu transferieren und die Bauteile 32, 32' einzubauen, indem die Handhabungseinrichtung 46 das Bauteil 32, 32' mit der Station 36 koppelt. Dazu kann die Handhabungseinrichtung 46 die zugeführten, insbesondere die mittels der Zuführvorrichtung 24 bereitgestellten, Bauteile 32, 32' aufnehmen und im Isolator 12 bewegen und orientieren, bzw. ausrichten, um die Bauteile 32, 32' in einer vorgesehenen Orientierung mit der Station 36 zu koppeln.

Die Handhabungseinrichtung 46 ist als Handhabungsroboter ausgestaltet. Die Handhabungseinrichtung 46 weist einen mehrachsigen Arm 48 und einen Endeffektor 50 auf. Zur Bewegung des Arms 48 kann beispielsweise eine Antriebseinrichtung vorgesehen sein. Die Handhabungseinrichtung 46 weist einen Bewegungsbereich auf. Der Bewegungsbereich ist der Bereich, in dem die Handhabungseinrichtung 46 das Bauteil 32, 32' handhaben, insbesondere transferieren, orientieren und positionieren, kann. Die Handhabungseinrichtung 46 kann auch mehrere Handhabungsroboter aufweisen. Insbesondere überlappen sich dann die Bewegungsbereiche der Handhabungsroboter. Insbesondere kann die Handhabungseinrichtung 46 von der Steuereinrichtung 56 der ersten Ausführungsform oder einer weiteren Steuereinrichtung 56' gesteuert werden.

Der Endeffektor 50 dient zum Aufnehmen, bzw. Koppeln, des Bauteils mit der Handhabungseinrichtung 46. Der Endeffektor 50 ist an einem Ende des Arms 18 angeordnet. Der Endeffektor 50 ist mit dem Arm 18 bewegungsgekoppelt. Der Endeffektor 50 ist mittels des Arms 18 bewegbar. Insbesondere kann der Endeffektor 50 von dem Arm 18 zu jeder Raumkoordinate in dem Bewegungsbereich der Handhabungseinrichtung 46 bewegt werden. Der Endeffektor 50 kann um mindestens eine Rotationsachse 51 relativ zum Arm 18 rotiert werden. In Kombination mit der Rotation (die Rotation ist in Fig. 3 anhand des Pfeils 49 veranschaulicht) um die Rotationsachse 51 kann der Endeffektor 50 während der Bewegung durch den Arm 18 im Isolator 12 definiert im Raum ausgerichtet werden. Beispielsweise kann der Endeffektor 50 während des Transferierens in einer waagrechten Orientierung gehalten werden. Wenn das Bauteil 32 von dem Endeffektor 50 aufgenommen ist, kann das Bauteil 32 von der Handhabungseinrichtung 46 definiert bewegt werden. Mit anderen Worten ist dann das Bauteil 32 dann mit dem Arm 18 bewegungsgekoppelt. Der Endeffektor 50 weist zum Aufnehmen, bzw. Koppeln, mit dem Bauteil 32 ein erstes Aufnahmeelement 52 und ein zweites Aufnahmeelement 52' auf. In gleicher Weise ist der Endeffektor 50 auch zum Aufnehmen, bzw. Koppeln, eines Hilfswerkzeugs 74 mit der Handhabungseinrichtung 46 eingerichtet (das Aufnehmen eines Hilfswerkzeugs 74 durch die Handhabungseinrichtung 46 ist nachfolgend in Fig. 4 veranschaulicht).

Die Aufnahmeelemente 52, 52' wirken mit Gegenstücken 34, 34' des Bauteils 32, bzw. des Hilfswerkzeugs 74 zusammen, um ein Koppeln zwischen dem Endeffektor 50 und dem Bauteil 32 zu ermöglichen. Hierzu sind die Aufnahmeelemente 52, 52' dazu eingerichtet, in die Gegenstücke 34, 34' einzugreifen. Die Aufnahmeelemente 52, 52' können zumindest abschnittsweise zylindrisch ausgestaltet sein und sich stabförmig in eine axiale Richtung, bzw. Längserstreckungsrichtung erstrecken. Parallel zu der Längserstreckungsrichtung weist jedes Aufnahmeelemente 52, 52' eine Mittelachse 54, 54' auf. Die Aufnahmeelemente 52, 52' sind mit ihrem einen Ende an dem Endeffektor 50 befestigt oder befestigbar und können an ihrem anderen Ende einen Endabschnitt 60, 60' aufweisen, der dazu eingerichtet ist, in das Gegenstück 34, 34' eines Bauteils 32 einzugreifen. Insbesondere kann der Endabschnitt 60, 60', wie in Fig. 3 gezeigt, auch als Vorsprung 62, 62' ausgestaltet sein. Mit anderen Worten kann das Aufnahmeelement 52, 52', bzw. der Endabschnitt 60 mit dem Gegenstück 34, 34' eine Kopplung bewirken. Die Aufnahmeelemente 52, 52' greifen, insbesondere mit den Endabschnitten 60, in die Gegenstücken 34, 34' ein, um das Bauteil 32 aufzunehmen und das Bauteil 32 während des Handhabens mittels der Handhabungseinrichtung 46 an dem Endeffektor 50 lösbar zu fixieren. Zumindest eines der Aufnahmeelemente 52, 52' weist einen rotationssymmetrischen Abschnitt, insbesondere Endabschnitt 60, auf, der dazu eingerichtet ist, in dem Gegenstück 34, 34' drehbar aufgenommen zu werden. Die Aufnahmeelemente 52, 52' sind positionsfest an dem Endeffektor 50 und in einem festen Abstand a zueinander angeordnet. Entsprechend sind auch die Gegenstücke 34, 34' in dem Abstand a zueinander angeordnet (auf die Geometrie der Gegenstücke 34, 34' wird in Fig. 5 näher eingegangen). Jedes Aufnahmeelement 52, 52' ist starr mit dem Endeffektor verbunden. Die Aufnahmeelemente 52, 52' sind somit mit dem Endeffektor bewegungsgekoppelt und sind mittels des Arms 18 bewegbar. Bewegungsgekoppelt bedeutet in diesem Kontext, dass sich eine Bewegung des Endeffektors 50, bzw. des Arms 18 direkt auf die Aufnahmeelemente 52, 52' überträgt. Sind die Aufnahmeelemente 52, 52' mit den Gegenstücken 34, 34' im Eingriff, bedeutet dies, dass sich eine Bewegung des Endeffektors 50, bzw. des Arms 18 direkt auf das Bauteil 32 überträgt.

Die Bewegungsachsen des Arms 18 und die Rotation 49 um die Rotationsachse 51 ermöglicht eine definierte Bewegungsführung des Endeffektors 50 sowohl in Hinblick auf die Position des Endeffektors 50 im Isolator 12 als auch die Orientierung des Endeffektors 50 im Raum, bzw. im Gravitationsfeld der Erde. Mit dieser Bewegungsführung ist es möglich, die Aufnahmeelemente 52, 52' gleichförmig zu führen. In anderen Worten können die Aufnahmeelemente 52, 52' entlang paralleler Bahnen, bzw. Bahnkurven geführt werden. Mit dieser Bewegungsführung ist es des Weiteren möglich, das erste Aufnahmeelement 52 auf einer Kreisbahn 68 (siehe hierzu auch Fig. 5) um das zweite Aufnahmeelement 52' zu führen, wobei die Mittelachse 54' des zweiten Aufnahmeelements 52' die Rotationsachse bildet (oder umgekehrt). Die Bewegungsführung der Aufnahmeelemente 52, 52' werden in Fig. 5 näher beschrieben.

Fig. 4 zeigt eine isometrische Ansicht der Aufnahmeelemente 52, 52' des Endeffektors 50 beim Eingreifen in die Gegenstücke 34, 34' des Hilfswerkzeugs 74. Das Eingreifen in das Bauteil 32, 32' aus Fig. 2 oder 3 kann analog erfolgen. Greifen die Aufnahmeelemente 52, 52' in der in Fig. 4 gezeigten Weise in die Gegenstücke 34, 34' ein, ist das Hilfswerkzeug 47, bzw. Bauteil 32, 32' von dem Endeffektor 50 aufgenommen.

In der in Fig. 4 dargestellten Anordnung ist der Endeffektor 50 von hinten zu sehen. Der Arm 18 ist nicht dargestellt. Der Endeffektor 50 ist mittels der Bewegungsachsen des Arms 18 und der Rotation (vgl. Pfeil 49) um die Rotationsachse 51 derart orientiert, dass die Aufnahmeelemente 52, 52' lotrecht auf das Hilfswerkzeug 74 weisen.

Die Gegenstücke 34, 34' dienen als Aufnahme für die Aufnahmeelemente 52, 52'. Die Gegenstücke 34, 34' sind als Aussparungen 34, 34' in dem Hilfswerkzeug 74, bzw. in dem Bauteil 32, 32' oder als Aussparungen 34, 34' in einem Adapter 33 (siehe Fig. 3), der an dem Bauteil 32, 32' fixiert oder fixierbar ist, ausgebildet. In Fig. 4 weist das Hilfswerkzeug 74 ein erstes Gegenstück, bzw. Aussparung 34 und ein zweites Gegenstück, bzw. Aussparung 34' auf. Die Aussparungen 34, 34' sind im Wesentlichen nutförmig und entsprechend einer Außenkontur des Aufnahmeelements 52, 52', bzw. des Endabschnitts 60. Das bedeutet, dass jede Aussparung 34, 34' einen ersten Bereich 90, 90' aufweist, der dazu eingerichtet ist, ein Aufnahmeelement 52, 52' in definierter Weise in Kontakt mit dem Gegenstück 34, 34' zu bringen. Des Weiteren kann jede Aussparung 34, 34' einen zweiten Bereich 92, 92' aufweisen, der dazu eingerichtet ist, ein Hineingleiten (in Fig. 4 veranschaulicht anhand der Pfeile 64) des Aufnahmeelements 52, 52' in die Aussparung 34, 34', insbesondere in den zweiten Bereich 92, 92', und von dort aus in den ersten Bereich 90, 90' zu ermöglichen. Hierzu kann die Aussparung 34, 34' im zweiten Bereich 92, 92' eine Öffnung 35 in einer Seite der nutförmigen Aussparung 34, 34' aufweisen, bzw. einen Abschnitt 35' mit einer größeren Breite der nutförmigen Aussparung 34, 34' aufweisen. Auf diese Weise ist jedes Gegenstück 34, 34' dazu eingerichtet, dass jeweils eines der Aufnahmeelemente 52, 52', insbesondere mit dem Endabschnitt 60, von einer ersten Position (nicht dargestellt), in der das Aufnahmeelement 52, 52' nicht mit dem Gegenstück 34, 34' in Eingriff ist, mittels translatorischer und/oder Rotatorischer Bewegungen, in eine zweite Position (siehe Fig. 4) geführt werden kann, in der sich das Aufnahmeelement 52, 52' mit dem Gegenstück 34, 34' in Eingriff befindet. Die Bewegung der Aufnahmeelemente 52, 52' erfolgt von der jeweiligen ersten zu der jeweiligen zweiten Position entlang einer Bahn 66, 68 (beispielhafte Bahnen 66, 68 werden in Fig. 5 gezeigt).

Des Weiteren können die Aussparungen 34, 34', wie in dem Detail in Fig. 4 gezeigt eine Hinterschneidung 63, 63' aufweisen. Wie in dem Detail gezeigt, sind die Hinterschneidungen 63, 63' jeweils dazu eingerichtet, mit einem Vorsprung 62, 62' eines der Aufnahmeelemente 52, 52' ineinanderzugreifen, um das Aufnahmeelement 52, 52' in einer axialen Richtung (die Richtung ist parallel zu der Mittelachse 54, 54' in Fig. 3) des Aufnahmeelements 52, 52' zu sichern. Der Vorsprung 62, 62' kann an einem Ende, insbesondere an dem Endabschnitt 60, 60', des Aufnahmeelements 52, 52' angeordnet sein. Der Vorsprung 62, 62' kann in eine Richtung orthogonal zu der axialen Richtung breiter sein als das Aufnahmeelement 52, 52'. Wie in Fig. 4 beispielhaft gezeigt können der Vorsprung 62, 62' und die Hinterschneidung 63, 63' einander entsprechend zylindrisch oder konisch ausgestaltet. Die Hinterschneidung 63, 63' kann somit als Tasche 63, 63' ausgebildet sein, die dazu eingerichtet ist, den Vorsprung 62, 62' aufzunehmen. Die Hinterschneidung 63, 63' kann mit der Öffnung 35, 35' in einer Seite der Aussparung 34, 34' verbunden sein, sodass der Vorsprung 62, 62' beim Eingreifen des Aufnahmeelements 52, 52' in die Hinterschneidung 63, 63' ragt. Auf diese Weise sind das Aufnahmeelement 52, 52' und das Gegenstück 34, 34' in axialer Richtung bewegungsgekoppelt.

Fig. 5 zeigt eine schematische Ansicht der Gegenstücke 34, 34' einer a) ersten und einer b) zweiten Ausführungsform des Bauteils 32, bzw. des Hilfswerkzeugs 74. In Fig. 5 weist das Bauteil 32 ein erstes Gegenstück, bzw. Aussparung 34 und ein zweites Gegenstück, bzw. Aussparung 34' auf. Die Ansicht ist eine Draufsicht auf die Gegenstücke 34, 34'. Anhand der Fig. 5 wird des Weiteren die entsprechende Bewegungsführung der Aufnahmeelemente 52, 52' mittels des Endeffektors 50 entlang der Bahnen 66, 68 veranschaulicht, die zu einem Eingreifen der Aufnahmeelemente 52, 52' in die Gegenstücke 34, 34' führt.

In Fig. 5 ist die erste Aussparung 34 eine im Wesentlichen halbkreisförmige Aussparung mit einem Kreisdurchmesser 97. Die erste Aussparung 34 definiert einen ersten Mittelpunkt 96 und weist eine radiale Öffnung 35 auf, deren Breite mindestens dem Kreisdurchmesser 97 der Aussparung 34 entspricht. In diesem Ausführungsbeispiel ist die zweite Aussparung 34' ebenfalls eine im Wesentlichen halbkreisförmige Aussparung, die einen zweiten Mittelpunkt 98 definiert. Die Mittelpunkte 96, 98 sind in einem Abstand a voneinander beabstandet. Die zweite Aussparung 34' weist ebenfalls eine radiale Öffnung 35' auf. Die Aussparungen 34, 34' weisen einen ersten Bereich 90, 90' und einen zweiten Bereich 92, 92' auf, die in der in Fig. 4 gezeigten Weise, miteinander verbunden sind.

Voraussetzung, dass das Bewegen der Aufnahmeelemente 52, 52' entlang der Bahnen 66, 68 das Eingreifen bewirken kann, ist, dass sich die Aufnahmeelemente 52, 52' in einer ausreichenden Tiefe in einer Tiefenrichtung ausgehend von einer Oberfläche 94 (siehe Fig. 4) des Bauteils befinden. In dem Detail in Fig. 4 befindet sich das Aufnahmeelement 52 in der ausreichenden Tiefe. Das bedeutet, dass insbesondere, wenn die Aussparung 34, wie in Fig. 4 die Hinterschneidung 63 aufweist, der Vorsprung 62 in der ausreichenden Tiefe vollständig auf Höhe der Hinterschneidung 63 angeordnet sein muss. Um das Eingreifen zu realisieren, ermöglichen die Bahnen 66, 68 ein Bewegen der Aufnahmeelemente 52, 52' von dem zweiten Bereich 92, 92' in den ersten Bereich 90, 90' (siehe Fig. 4) der Aussparungen 34, 34'.

Der zweite Bereich 92, 92' kann sich entlang eines Abschnitts der Bahn 66, 68 erstrecken, insbesondere wobei die Aussparung 34, 34' in dem zweiten Bereich 92, 92' eine größere Breite aufweisen kann als im ersten Bereich 90, 90' (vgl. die Aussparung 34' in Fig. 4). Die Aussparung 34, 34' kann insbesondere im zweiten Bereich 92, 92' aber auch derart ausgestaltet sein, dass sie das Aufnahmeelement 52, 52' entlang der Bahn 66, 68 führt.

In Fig. 5a weisen die Öffnungen 35, 35' der Gegenstücke, bzw. Aussparungen 34, 34' in unterschiedliche Richtungen. Mit anderen Worten können die Aufnahmeelemente 52, 52' nicht aus derselben Richtung in die Aussparungen 34, 34' hineingleiten. In der dargestellten Situation befindet sich das erste Aufnahmeelemente 52 bereits im Eingriff mit dem ersten Gegenstück 34. Der zweite Bereich 92 ist derart ausgestaltet, dass das Aufnahmeelemente 52 entlang der gradlinigen Bahn 66 in den zweiten Bereich 90 hineingleiten kann. Das Hineingleiten ist in Fig. 5 anhand des Pfeils 64 veranschaulicht. Das Aufnahmeelemente 52 befindet sich derart im Eingriff mit dem ersten Gegenstück 34, dass die Mittelachse 54 des ersten Aufnahmeelements 52 mit dem ersten Mittelpunkt 96 zusammenfällt und das erste Aufnahmeelement 52 derart definiert in der ersten Aussparung 34 anliegt, dass das erste Aufnahmeelement 52 in der ersten Aussparung 34 rotiert werden kann. Mit anderen Worten bildet das erste Aufnahmeelement 52 dann zusammen mit der der ersten Aussparung 34 ein Drehgelenkt.

Eine Rotationsbewegung des Endeffektors um die Mittelachse 54 des ersten Aufnahmeelements 52 ist somit möglich. Durch die starre Verbindung der Aufnahmeelemente 52, 52' verläuft die Bewegung des zweiten Aufnahmeelements 52' auf einer Kreisbahn 68 um den ersten Mittelpunkt 96. Der Radius der Kreisbahn 68 ist der Abstand a zwischen den Mittelachsen 54, 54' des ersten und des zweiten Aufnahmeelements 52, 52'. Die Öffnung 35' weist in Fig. 5a nach unten und weist eine ausreichende Breite auf, sodass das Aufnahmeelement 52' auf der Kreisbahn 68 in den ersten Bereich 90' der Aussparung 34' bewegt werden kann. Im Abschnitt der Kreisbahn kann die Aussparung 34' aber auch einen Krümmungsradius entsprechend der Kreisbahn 68 aufweisen.

Wenn die Mittelachsen 54, 54' der Aufnahmeelemente 52, 52' mit den jeweiligen Mittelpunkten 96, 98 der Gegenstücke 34, 34' zusammenfallen, greifen die Aufnahmeelemente 54, 54' in die Aussparungen 34, 34' ein und das Bauteil 32 ist von der Handhabungseinrichtung 46 aufgenommen. Insbesondere weist die zweite Aussparung 34' eine Innenkontur auf, die während der Bewegung des zweiten Aufnahmeelements 52' in der zweiten Aussparung 34' mit der Außenkontur des zweiten Aufnahmeelements 52' zusammenwirkt, sodass eine Kontaktkraft zwischen dem zweiten Aufnahmeelement 52' und der zweiten Aussparung 34' zunimmt, je näher die Mittelachse 54' des zweiten Aufnahmeelements 52' dem zweiten Mittelpunkt 98 kommt. Auf diese Weise kann das Aufnehmen des Bauteils 32 mittels Formschluss durch einen Kraftschluss ergänzt werden.

In Fig. 5b handelt es sich um eine ähnliche Ausgestaltung der Gegenstücke 34, 34' wie in Fig. 4. In dieser Ausführungsform ist es nicht zwangsweise erforderlich, dass die Aussparungen 34, 34' halbkreisförmig und die Aufnahmeelemente 52, 52' zylindrisch ausgestaltet sind, solange sich die Konturen entsprechen und zum ineinander Eingreifen eignen.

In Fig. 5b weisen die Öffnungen 35, 35' der Gegenstücke, bzw. Aussparungen 34, 34' in dieselbe Richtung. Mit anderen Worten können die Aufnahmeelemente 52, 52' aus derselben Richtung in die Aussparungen 34, 34' hineingleiten. Das Hineingleiten ist anhand der Pfeile 64 dargestellt. Die Bewegungen des ersten und des zweiten Aufnahmeelements 52, 52' erfolgen in Fig. 5b auf gleichverlaufenden, parallelen, geradlinigen Bahnen 66. Die Bahnen 66 können aber auch, anstatt geradlinig, gekrümmt sein.

Der zweite Bereich 92, 92' erstreckt sich dabei entlang eines Abschnitts der Bahn 66, sodass beim Hineingleiten das erste Aufnahmeelement 52 in die erste Aussparung 34 eingreift und das zweite Aufnahmeelement 52' in die zweite Aussparung 34' eingreift. Die Aufnahmeelemente 52, 52' befinden sich im Eingriff mit den Gegenstücken 34, 34', wenn die Mittelachse 54 des ersten Aufnahmeelements 52 mit dem ersten Mittelpunkt 96 zusammenfällt und die Mittelachse 54' des zweiten Aufnahmeelements 52' mit dem zweiten Mittelpunkt 98 zusammenfällt.

Befinden sich die Aufnahmeelemente 52, 52' in der zweiten Position (vgl. gestrichelte Darstellung in Fig. 5a, b), befinden sich die Aufnahmeelemente 52, 52' in den Gegenstücken 34, 34' in Anlage und sind in Kontakt mit dem Gegenstücken 34, 34'. Durch den Kontakt befinden sich die Aufnahmeelemente 52, 52' und die Gegenstücke 34, 34' mittels Formschluss im Eingriff miteinander. Der Formschluss wirkt derart, dass jedes Aufnahmeelement 52, 52' in mindestens eine Richtung durch Kontakt mit dem Gegenstück 34, 34' mit diesem bewegungsgekoppelt ist. Sind die Aufnahmeelemente 52, 52' in der zweiten Position angeordnet, ist das Bauteil aufgenommen. Sind die Aufnahmeelemente 52, 52' in der zweiten Position angeordnet, kann der Endeffektor mittels der Aufnahmeelemente 52, 52' in jede Richtung eine Bewegung auf das Bauteil 32 übertragen, in der die Aufnahmeelemente 52, 52' mit den Gegenstücken 34, 34' durch Kontakt bewegungsgekoppelt sind. Auf diese Weise werden der Endeffektor 50 (nicht dargestellt) und das Bauteil 32 lösbar miteinander verbunden, bzw. gekoppelt.

Sind die Aufnahmeelemente 52, 52' in der ersten Position (siehe Fig. 5b die Aufnahmeelemente 52, 52' sind mit durchgezogener Linie dargestellt) angeordnet, ist das Bauteil 32 freigegeben. Das Freigeben kann insbesondere in umgekehrter Weise wie das Aufnehmen erfolgen.

Es wird darauf hingewiesen, dass die gezeigten Aussparungen 34, 34' und Bahnen 66, 68 lediglich Beispiele darstellen. Es gibt zahlreiche Möglichkeiten der Ausgestaltung. Insbesondere kann zumindest eine der Aussparungen 34, 34' und eine entsprechende Bahn labyrinthartig ausgestaltet sein. In diesem Fall kann eine Bewegungsabfolge des Endeffektors 50 zum Aufnehmen des Bauteils 32 komplexer werden, um ein unbeabsichtigtes Freigeben des Bauteils 32 zu verhindern oder zu erschweren. Insbesondere können auch mehr als zwei Aufnahmeelemente und Gegenstücke zum Einsatz kommen.

Fig. 6 zeigt eine dritte Ausführungsform des Isolatorsystems 10. Das Isolatorsystem der dritten Ausführungsform entspricht im Wesentlichen dem Isolatorsystem 10 der ersten und zweiten Ausführungsform aus Fig. 1 und 2. Gleiche Elemente sind mit gleichen Bezugszeichen gekennzeichnet und werden nicht näher erläutert. In Fig. 6 sind nur die Stationen 36b, das Hilfswerkzeug 74, sowie der Endeffektor 50 mit einem aufgenommen Bauteil 32 im Innenraum 14 des Isolators 12 dargestellt. Das restliche System kann insbesondere dem Isolatorsystem 10 aus Fig. 2 entsprechen. Auch wenn nicht dargestellt, kann das Isolatorsystem 10 eine Steuereinrichtung 56, insbesondere entsprechend der ersten oder der zweiten Ausführungsform, aufweisen die insbesondere den Aktor 38 der zweiten Station 36b' und/oder der ersten Station 36b steuern kann.

In der vorliegenden Ausführungsform kann beispielsweise der Aktor 38 einer zweiten Station 36b' dazu eingerichtet sein, eine Arretierungseinrichtung 70 einer ersten Station 36b zu lösen, um das Koppeln des Bauteils 32 mit der ersten Station 36b zu ermöglichen und wenn das Bauteil 32 mit der ersten Station 36b gekoppelt ist, die Arretierungseinrichtung 70 zu arretieren, um das Koppeln des Bauteils 32 mit der ersten Station 36b zu sichern. Im vorliegenden Beispiel ist das Hilfswerkzeug 74 an der zweiten Station 36b' befestigt, sodass das Hilfswerkzeug 74 mittels einer Bewegung des Aktors 38 der zweiten Station 36b' bewegt werden kann, um die Arretierungseinrichtung 70 der ersten Station 36b zu lösen oder zu arretieren. Mit anderen Worten, um den Zustand der Arretierung zu schalten. Grundsätzlich kann aber auch vorgesehen sein, dass der Aktor 38 mit seinem bewegbaren Teil ohne das Hilfswerkzeug 74 mit der Arretierungseinrichtung 70 wechselwirkt. Alternativ kann es auch vorgesehen sein, dass der Aktor 38 mittels eines Bauteils 32' mit der Arretierungseinrichtung 70 wechselwirkt, wobei das Bauteil 32' dann anstelle des Hilfswerkzeugs 74 an der zweiten Station 36b' eingebaut ist. Mit anderen Worten kann eine Relativbewegung zwischen dem Hilfswerkzeug 74 bzw. Bauteil 32' und der Arretierungseinrichtung 70 bereitgestellt werden, um die Arretierungseinrichtung 70 zu bedienen. Die Relativbewegung kann, wie zuvor beschrieben, auch durch den Aktor 38 der ersten Station 36b und/oder durch den Aktor 38 der zweiten Station 36' bereitgestellt werden. Das Hilfswerkzeug 74 kann insbesondere in der gleichen Weise wie in Fig. 2 gezeigt zugeführt und eingebaut werden.

Das Hilfswerkzeug 74 ist in der dritten Ausführungsform als Kontaktstift ausgebildet, der einen Schalter 72 der Arretierungseinrichtung 70 zum Schalten der Arretierungseinrichtung 70 betätigen kann. Der Schalter 72 kann beispielsweise an der Unterseite der Arretierungseinrichtung 70 angeordnet sein. Hierzu kann das Hilfswerkzeug 74 mittels des Aktors 38 bewegt werden. Der Aktor 38 der zweiten Station 36b' ist in Fig. 6 als linear ausfahrbarere Zylinder ausgebildet. Entsprechend kann eine Bewegung des Hilfswerkzeugs 74 realisiert werden, die anhand des Pfeils 76 dargestellt ist. In gleicher Weise könnte aber auch eine Bewegung der Arretierungseinrichtung 70 mittels des Aktors 38 der ersten Station 36b realisiert werden, die ebenfalls anhand des Pfeils 76 veranschaulicht werden kann. Wechselwirkt der Aktor 38 der zweiten Station 36b', wie zuvor beschrieben, anstelle des Hilfswerkzeugs 74 mit seinem bewegbaren Teil oder alternativ mittels eines Bauteils 32' mit der Arretierungseinrichtung 70, wird der Schalter 72 über eine Fläche des bewegbaren Teils des Aktors 38 oder alternativ eine Fläche des Bauteils 32' betätigt. Auch hierbei kann die Relativbewegung durch eine Bewegung des Aktors 38 der zweiten Station 36b' und/oder einer Bewegung des Aktors 38 der ersten Station 36b erfolgen.

Ist der Schalter 72 mittels des Hilfswerkzeugs 74 betätigt, ist die Arretierungseinrichtung 70 gelöst. Dann kann das Bauteil 32 mit der ersten Station 36b gekoppelt werden. Hierzu kann das Bauteil 32 ein stangenförmiges Koppelelement 78 als Koppelpartner aufweisen, der zum Koppeln in einen entsprechenden als Aufnahme 78' ausgestalteten Koppelpartner der Station 36b eingeführt werden kann (die Bewegung zum Einführen wird anhand des Pfeils 79 veranschaulicht). Vorliegend weist eine Befestigungsvorrichtung 40 die Aufnahme 78' auf.

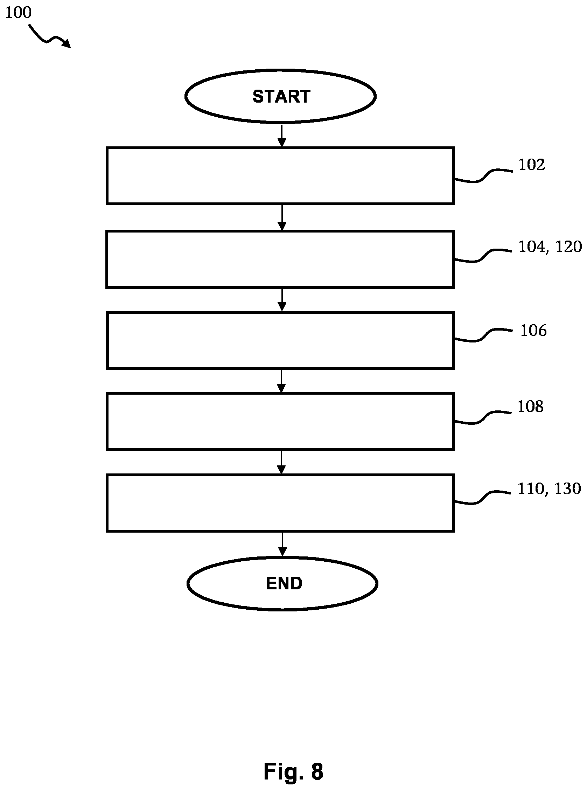

Das Koppeln kann derart erfolgen, dass das Bauteil 32 mittels des Zusammenwirkens der sich entsprechenden Koppelpartner 78, 78' in einer definierten Lage und Ausrichtung relativ zu der Station 36b ausgerichtet und mittels der Arretierungseinrichtung 70 fixiert ist. Die Bewegung zum Koppeln ist in Fig. 6 anhand des Pfeils 79 dargestellt. Das Handhaben des Bauteils 32 während des Koppelns erfolgt mittels des Endeffektors 50 durch die Handhabungseinrichtung 46 (nicht dargestellt). Die Handhabungseinrichtung 46 hat das Bauteil 32 während des Handhabens in der in Fig. 4 beschriebenen Weise aufgenommen. Das Koppeln kann insbesondere gemäß dem Verfahren 100 erfolgen, das nachfolgend in Fig. 8 beschrieben ist.

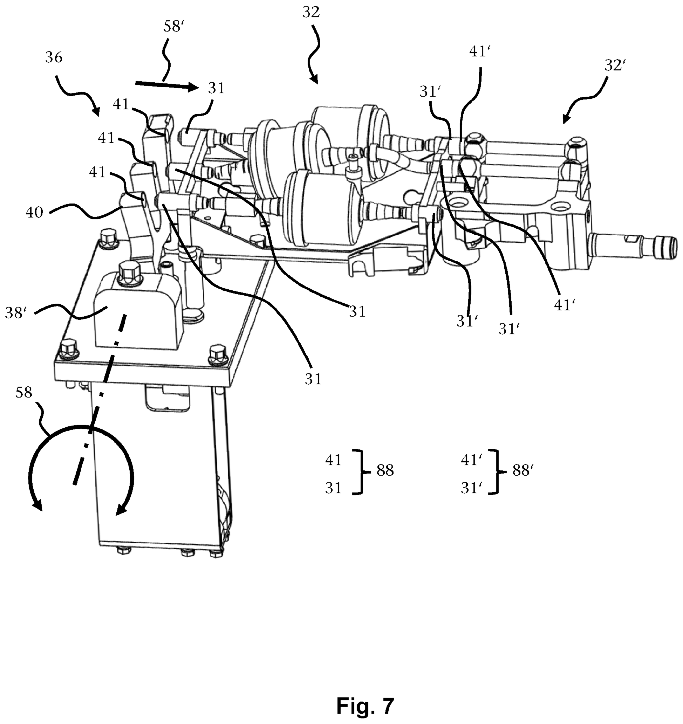

Fig. 7 zeigt eine isometrische Ansicht einer vierten Ausführungsform eines Isolatorsystems 10 (nicht dargestellt sind die Handhabungseinrichtung, der Isolator und das Transfersystem). Das Isolatorsystem der vierten Ausführungsform entspricht im Wesentlichen dem Isolatorsystem 10 der Ausführungsformen aus Fig. 1 und 2. Gleiche Elemente sind mit gleichen Bezugszeichen gekennzeichnet und werden nicht näher erläutert. Auch wenn nicht dargestellt, kann das Isolatorsystem 10 eine Steuereinrichtung 56 insbesondere entsprechend der der ersten oder zweiten Ausführungsform aufweisen, die den Aktor 38' steuern kann.

In der vorliegenden Ausführungsform kann beispielsweise der Aktor 38' einer Station 36 dazu eingerichtet sein, durch eine Bewegung (siehe beispielsweise die Schwenkbewegung, die anhand des Pfeils 58 dargestellt ist) eine Fluidpfadverbindung 88 zwischen einem Fluidanschluss 41 der Station und einem Fluidanschluss 31 des Bauteils 32 herzustellen. Es kann sich aber auch um einen Aktor 38 mit einer linearen Bewegung handeln. Die Bewegung kann eine Bewegung der Befestigungsvorrichtung 40 bewirken (siehe beispielsweise die Bewegung, die anhand des Pfeils 58' dargestellt ist), sodass der Aktor dazu eingerichtet ist, die Befestigungsvorrichtung 40 gegen das Bauteil 32 zu drücken, sodass die Fluidanschlüsse 31, 41 in Wirkverbindung treten und die Fluidpfadverbindung 88 herstellen, insbesondere wobei zumindest eine Dichtung 89 die Fluidpfadverbindung 88 zwischen den Fluidanschlüssen 31, 41 abdichtet.

Im Rahmen dieser Ausgestaltung der Aspekte kann das Bauteil 32 auch im gekoppelten Zustand dazu eingerichtet sein, mittels einer Bewegung der Befestigungseinrichtung 40 bewegt zu werden. Mit anderen Worten muss das Bauteil 32 im gekoppelten Zustand nicht vollständig fixiert sein und kann mindestens einen Freiheitsgrad aufweisen. Die Bewegbarkeit des Bauteils durch das Andrücken ist dabei jedoch begrenzt, sodass das Bauteils 32 beispielsweise durch Bewegen gegen ein weiteres Bauteil 32' einklemmbar ist. Alternativ kann das Bauteil zwischen der Befestigungseinrichtung 40 und einem festen Anschlag oder einer weitere Station 36' einklemmbar sein. Durch das Andrücken kann eine Fixierung des Bauteils erreicht werden. Insbesondere kann durch das Andrücken eine gegenseitige Zentrierung der Fluidanschlüssen 31, 41 bereitgestellt werden.

In Fig. 7 ist dargestellt, dass auf diese Weise eine Fluidpfadverbindung 88 zwischen den Fluidanschlüssen 31, 41 und eine weitere Fluidpfadverbindung 88' zwischen den Fluidanschlüssen 31', 41' herstellbar ist. Durch die Fluidpfadverbindungen 88, 88' können die Fluidpfade der Station 36 und des weiteren Bauteils 32' mittels der Fluidpfade des Bauteils 32 verbunden sein.

Die Dichtung 89 (nicht dargestellt) kann beispielsweise eine O-Ringdichtung oder ein konusförmiges Dichtelement sein. Die Dichtung kann an dem Fluidanschluss 31, 31' und/oder an dem Fluidanschluss 41, 41' angeordnet sein.

Fig. 8 zeigt eine schematische Ansicht einer ersten Ausführungsform eines Verfahrens 100 zum Bereitstellen eines Verarbeitungssystems 30 in einer Umgebung mit beschränktem Zugang, insbesondere einem Isolator 12, eines Barrieresystems, insbesondere Isolatorsystems 10, in seiner Gesamtheit mit der Bezugsziffer 100 bezeichnet. Das Verfahren 100 kann insbesondere mittels des Isolatorsystems 10 nach einer der zuvor beschriebenen Ausführungsform durchgeführt werden.

In einem ersten Schritt 102 des Verfahrens 100 wird das zumindest eine Bauteil 32 für das Verarbeitungssystem 30 mittels der Zuführvorrichtung 24 in den Isolator 12 zugeführt.

In einem weiteren Schritt 104 des Verfahrens 100 wird das zumindest eine Bauteil 32 mittels einer in der Umgebung 12 angeordneten Handhabungseinrichtung 46 des Barrieresystems 10, vorzugsweise einem Handhabungsroboter, aufgenommen.

Der Schritt des Aufnehmens 104 umfasst des Weiteren einen Schritt des Einführens 120 eines Endeffektors 50 der Handhabungseinrichtung 46. Der Endeffektor 50 weist dabei zumindest, zwei voneinander beabstandete Aufnahmeelemente 52, 52' auf. Die Handhabungseinrichtung 46 ist dazu eingerichtet, den Endeffektor 50 derart zu bewegen, dass die Aufnahmeelemente 52, 52' in Gegenstücke 34, 34' des Bauteils 32 eingreifen, um das Bauteil 32 aufzunehmen.

In einem weiteren Schritt 106 des Verfahrens 100 wird das zumindest eine aufgenommene Bauteil 32 innerhalb der Umgebung 12 zwischen der Zuführvorrichtung 24 und einer in der Umgebung 12 angeordneten Station 36 des Barrieresystems 10 mittels der Handhabungseinrichtung 46 transferiert.

In einem weiteren Schritt 108 des Verfahrens 100 wird das zumindest eine Bauteil 32 mit der Station 36 mittels der Handhabungseinrichtung 46 gekoppelt, um das Bauteil 32 einzubauen.

In einem weiteren Schritt 110 des Verfahrens 100 wird das zumindest eine Bauteil 32 mittels der Handhabungseinrichtung 46 freigegeben.

Der Schritt des Freigebens (110) umfasst des Weiteren einen Schritt des Ausführens 130 des Endeffektors 50, wobei die Handhabungseinrichtung 46 dazu eingerichtet ist, den Endeffektor 50 derart zu bewegen, dass die Aufnahmeelemente 52, 52' und die Gegenstücke 34, 34' des Bauteils 32 voneinander getrennt werden, um das Bauteil 32 freizugeben. Insbesondere kann der Schritt des Ausführens 130 genau umgekehrt wie der Schritt des Einführens 120 erfolgen.

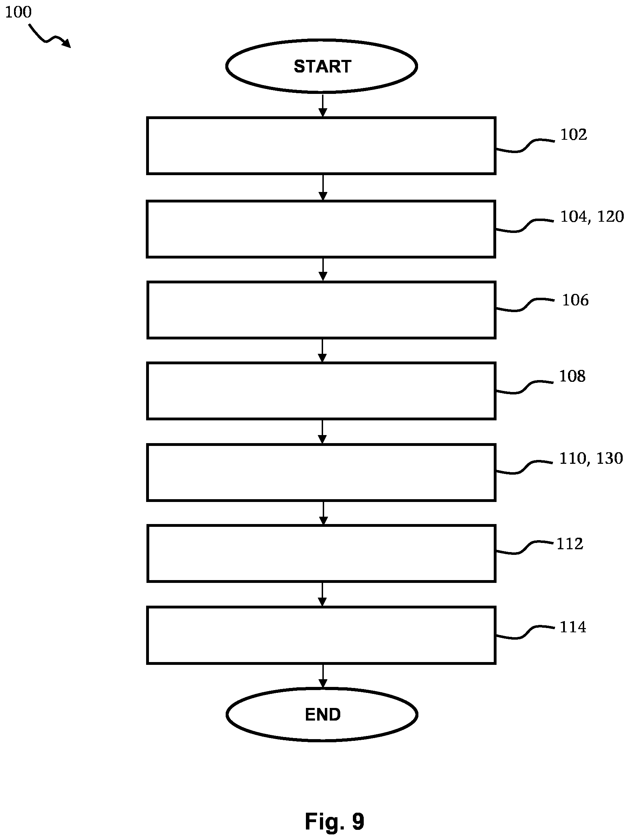

Fig. 9 zeigt eine schematische Ansicht einer zweiten Ausführungsform des Verfahrens 100. Die Schritte 102, 104, 106, 108 und 110 des Verfahrens 100 können in gleicher Weise ausgeführt werden, wie in der ersten Ausführungsform des Verfahrens 100.

In einem weiteren Schritt 112 des Verfahrens 100 wird das mit der Station gekoppelte Bauteil 32 von der Station 36 mittels der Handhabungseinrichtung 46 entkoppelt, um das Bauteil auszubauen. Während des Entkoppelns 112 muss das Bauteil 32 von der Handhabungseinrichtung 46 aufgenommen sein. Zum Aufnahmen des Bauteils 32 kann der Schritt 104 vor dem Schritt 112 durchgeführt werden.

In einem weiteren Schritt 114 des Verfahrens 100 wird das ausgebaute Bauteil 32 mittels Zuführvorrichtung 24 aus der Umgebung mit beschränktem Zugang 12. Zuvor muss das Bauteil zur Zuführvorrichtung 24 transferiert und auf der Zuführvorrichtung 24 werden. Zum Transferieren und zum Freigeben können die Schritte 106 und anschließend 110 vor dem Schritt 114 durchgeführt werden. Insbesondere kann das Bauteil vor dem Freigeben mittels der Handhabungseinrichtung 46 mit der Zuführvorrichtung 24 gekoppelt werden.

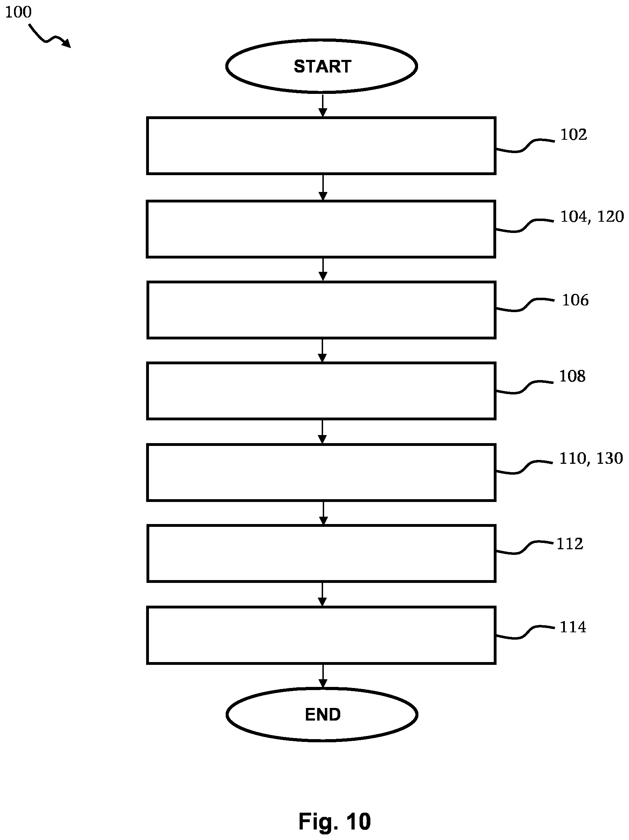

Fig. 10 zeigt eine schematische Ansicht einer dritten Ausführungsform des Verfahrens 100. Die Schritte 102, 104, 106, 108, 110, 112 und 114 des Verfahrens 100 können in gleicher Weise ausgeführt werden, wie in der ersten Ausführungsform des Verfahrens 100. Die Schritte 112 und 114 sind optional.

Die Schritte 120 und 130 werden dabei derart ausgeführt, dass die Aufnahmeelemente 52, 52' ausschließlich aufgrund der Bewegung des Endeffektors 50 in die Gegenstücke 34, 34' des Bauteils 32 eingreifen und dass die Aufnahmeelemente 52, 52 und die Gegenstücke 34, 34' des Bauteils 32 ausschließlich aufgrund der Bewegung des Endeffektors 50 voneinander getrennt werden. Die Aufnahmeelemente 52, 52' sind unbeweglich ausgestaltet.

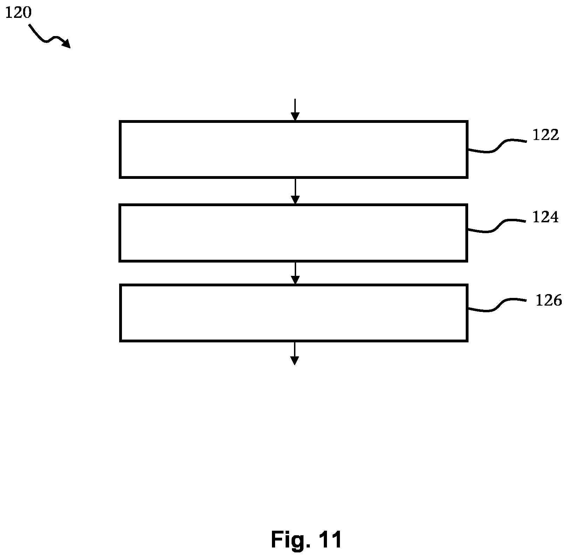

Fig. 11 zeigt eine schematische Ansicht der Bewegungsschritte des Schritts des Einführens 120 einer vierten Ausführungsform des Verfahrens 100. Der Schritt des Einführens 120 stellt eine Bewegungsabfolge dar.

In einem ersten Schritt 122 der Bewegungsabfolge des Einführens 120 wird der Endeffektor 50 bewegt, sodass zumindest zwei der Aufnahmeelemente 52, 52' jeweils zumindest abschnittsweise in eine Tiefenrichtung ausgehend von einer Oberfläche 94 des Bauteils 32 bewegt werden, wobei jedes Aufnahmeelement 52, 52' die Oberfläche 94 im Bereich des jeweiligen Gegenstücks 34, 34' passiert. Die Gegenstücke 34, 34' des zumindest einen Bauteils 32 sind als Aussparungen 34, 34' in dem Bauteil 32 oder als Aussparungen 34, 34' in einem Adapter 33, der an dem zumindest einen Bauteil 32 fixiert oder fixierbar ist, ausgebildet. Eine erste Aussparung 34 ist eine im Wesentlichen halbkreisförmige Aussparung 34 mit einem Kreisdurchmesser 97 und definiert einen ersten Mittelpunkt 96. Des Weiteren weist die erste Aussparung 34 eine radiale Öffnung 35 auf, deren Breite mindestens gleich dem Kreisdurchmesser 97 der Aussparung 34 ist.

Eine zweite Aussparung 34' ist eine, insbesondere im Wesentlichen halbkreisförmige, Aussparung 34', die einen zweiten Mittelpunkt 98 definiert, wobei der zweite Mittelpunkt 98 von dem ersten Mittelpunkt 96 in einem Abstand a beabstandet ist. Die zweite, insbesondere halbkreisförmige, Aussparung 34' stellt einen ersten Bereich 90' der zweiten Aussparung 34' dar. Die zweite Aussparung 34' weist des Weiteren einen zweiten Bereich 92' auf, der mit dem ersten Bereich 90' verbunden ist, und der dazu eingerichtet ist, eine Bewegung des zweiten Aufnahmeelements 52', innerhalb der zweiten Aussparung 34', von dem zweiten Bereich 92' in den ersten Bereich 90' zu ermöglichen.

Mit anderen Worten stellt der erste Schritt 122 der Bewegungsabfolge des Einführens 120 eine Zustellbewegung dar. Es versteht sich von selbst, dass wenn eines der Aufnahmeelemente 52, 52' an einem Endabschnitt 60 einen Vorsprung 62 aufweist, die Zustellbewegung außerhalb des ersten Bereichs 90, 90' der Aussparung 34, 34' erfolgen muss, da ansonsten Vorsprung 62 nicht in eine Hinterschneidung 63 hineingleiten werden kann.

In einem zweiten Schritt 124 der Bewegungsabfolge des Einführens 120 wird der Endeffektor 50 bewegt, vorzugsweise geradlinig bewegt, sodass das erste Aufnahmeelement 52 in die erste Aussparung 34 eingreift und eine Mittelachse 54 des ersten Aufnahmeelements 52 mit dem ersten Mittelpunkt 96 zusammenfällt. Nach dem zweiten Schritt 124 liegt das erste Aufnahmeelement 52 derart definiert in der ersten Aussparung 34 an, dass das erste Aufnahmeelement 52 in der ersten Aussparung 34 rotiert werden kann. Mit anderen Worten bildet das erste Aufnahmeelement 52 dann zusammen mit der der ersten Aussparung 34 ein Drehgelenkt (vgl. hierzu auch Fig. 5a).

In einem dritten Schritt 126 der Bewegungsabfolge des Einführens 120 wird der Endeffektor 50 bewegt, vorzugsweise rotatorisch, um die Mittelachse 54 des ersten Aufnahmeelements 52, sodass die Bewegung des zweiten Aufnahmeelements 52' in der zweiten Aussparung 34' von dem zweiten Bereich 92' in den ersten Bereich 90' auf einer Kreisbahn 68, deren Mittelpunkt mit dem ersten Mittelpunkt 96 zusammenfällt, verläuft. Dabei erstreckt sich der zweite Bereich 92' entlang eines Abschnitts der Bahn 68. Die Bewegung endet, wenn eine Mittelachse 54' des zweiten Aufnahmeelements 52' mit dem zweiten Mittelpunkt 98 zusammenfällt. Ist das der Fall, ist das Bauteil 32 von der Handhabungseinrichtung 46 aufgenommen.

Weisen die Aufnahmeelemente 52, 52' die Vorsprünge 62 und die Aussparungen 34, 34' die entsprechenden Hinterschneidungen 63 auf, ist bei den Schritten 124 und 126 sicherzustellen, dass die Vorsprünge 62 in die Hinterschneidungen 63 hineingleiten (vgl. hierzu auch das Hineingleiten, das in Fig. 4 anhand der Pfeile 64 dargestellt ist).

Insbesondere kann die Bewegungsabfolge des Schritts des Einführens 120 umgekehrt ablaufen, um den Endeffektor 50 auszuführen und das Bauteil 32, wenn es von der Handhabungseinrichtung 46 aufgenommen ist, freizugeben.

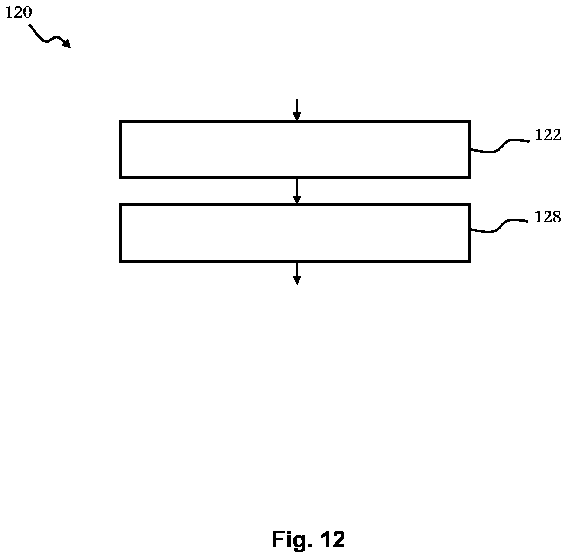

Fig. 12 zeigt eine schematische Ansicht der Bewegungsschritte des Schritts des Einführens 120 einer fünften Ausführungsform des Verfahrens 100. Der Schritt des Einführens 120 stellt eine Bewegungsabfolge dar.

Ein erster Schritt 122 der Bewegungsabfolge des Einführens 120 gemäß der fünften Ausführungsform kann entsprechend dem Schritt 122 der Bewegungsabfolge des Einführens 120 gemäß der vierten Ausführungsform erfolgen.

In einem weiteren Schritt 128 der Bewegungsabfolge des Einführens 120 wird der Endeffektor 50 bewegt, sodass die Bewegungen des ersten und des zweiten Aufnahmeelements 52, 52' auf gleichverlaufenden, parallelen Bahnen 66 erfolgen. Die Bahnen 66 können gradlinig oder gekrümmt sein, wobei sich der zweite Bereich 92, 92' entlang eines Abschnitts der Bahn 66 erstreckt. Der Endeffektor 50 wird des Weiteren derart bewegt, sodass das erste Aufnahmeelement 52 in die erste Aussparung 34 eingreift und das zweite Aufnahmeelement 52' in die zweite Aussparung 34' eingreift. Die Bewegung endet, wenn eine Mittelachse 54 des ersten Aufnahmeelements 52 mit dem ersten Mittelpunkt 96 zusammenfällt und eine Mittelachse 54' des zweiten Aufnahmeelements 52' mit dem zweiten Mittelpunkt 98 zusammenfällt. Ist das der Fall, ist das Bauteil 32 von der Handhabungseinrichtung 46 aufgenommen.

Weisen die Aufnahmeelemente 52, 52' die Vorsprünge 62 und die Aussparungen 34, 34' die entsprechenden Hinterschneidungen 63 auf, ist bei dem Schritt 128 sicherzustellen, dass die Vorsprünge 62 in die Hinterschneidungen 63 hineingleiten (vgl. hierzu auch das Hineingleiten, das in Fig. 4 anhand der Pfeile 64 dargestellt ist).

Insbesondere kann die Bewegungsabfolge des Schritts des Einführens 120 umgekehrt ablaufen, um den Endeffektor 50 auszuführen und das Bauteil 32, wenn es von der Handhabungseinrichtung 46 aufgenommen ist, freizugeben.

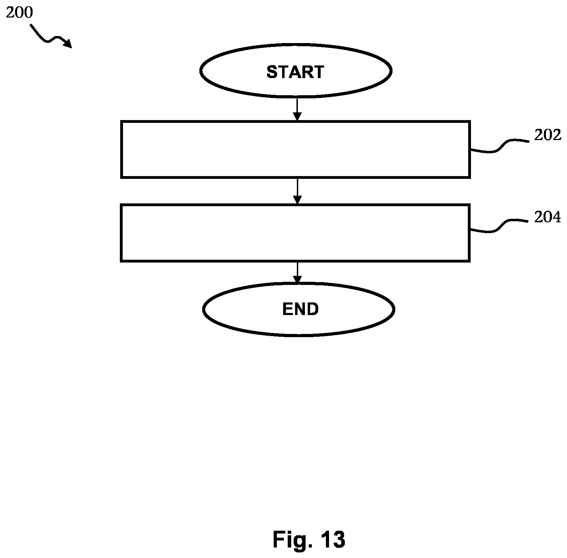

Fig. 13 zeigt eine schematische Ansicht einer ersten Ausführungsform eines Verfahrens 200 zum Koppeln eines Bauteils 32 für ein Verarbeitungssystem 30 eines Barrieresystems, insbesondere Isolatorsystems 10 in einer Umgebung mit beschränktem Zugang, insbesondere in einem Isolator 12, des Isolatorsystems 10.

In einem ersten Schritt 202 des Verfahrens 200 wird ein Aktor 38 einer Station 36 des Barrieresystems 10 mittels einer Steuereinrichtung 56 des Barrieresystems 10 gesteuert, sodass zumindest eine Befestigungsvorrichtung 40 der Station 36 in eine zum Koppeln mit dem Bauteil 32 vordefinierte Position bewegt wird.

In einem zweiten Schritt 204 des Verfahrens 200 wird das Bauteil 32 mit der Station 36 mittels einer Bewegung einer Handhabungseinrichtung 46 des Barrieresystems 10 gekoppelt, wobei die Handhabungseinrichtung 46 das Bauteil 32 aufgenommen hat.

Ein Beispiel für die vordefinierte Position kann Fig. 2 entnommen werden (vgl. die vordefinierte Position der Station 36c in Fig. 2).

Das Verfahren 200 kann des Weiteren Schritte des Verfahrens 100 aufweisen. Insbesondere kann das Aufnehmen des Bauteils 32 mittels des Schritts 104 des Verfahrens 100 erfolgen.

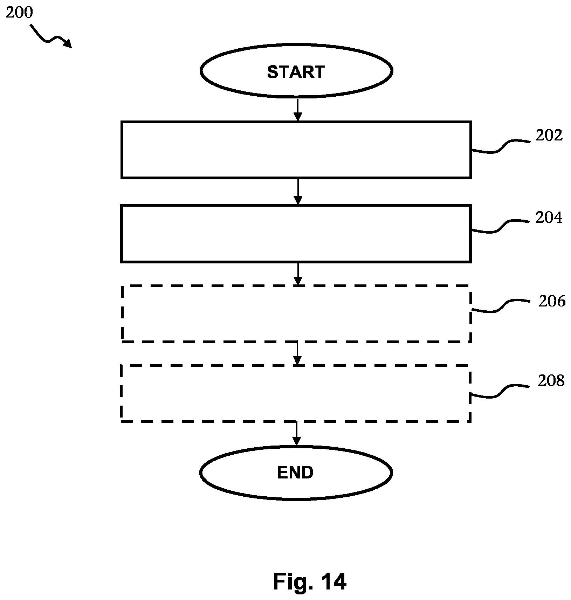

Fig. 14 zeigt eine schematische Ansicht einer zweiten und einer dritten Ausführungsform des Verfahrens 200. Die Schritte 202 und 204 des Verfahrens 200 können hierbei in gleicher Weise ausgeführt werden, wie in der ersten Ausführungsform des Verfahrens 200.

Gemäß der zweiten Ausführungsform wird in einem weiteren Schritt 206 des Verfahrens 200 der Aktor 38, 38' der Station 36, 36c mittels der Steuereinrichtung 56 gesteuert, sodass das Bauteil 32 in eine Betriebsposition, verbracht wird, wobei die Betriebsposition eine Position ist, in der das Bauteil 32 in dem Verarbeitungssystem 30 eingesetzt wird. Um das Bauteil 32 in die Betriebsposition zu verbringen, kann beispielsweise eine Bewegung in Richtung des Pfeils 58 (siehe Fig. 2) erfolgen. Der Schritt 206 folgt nach den Schritten 202 und 204.

Gemäß der dritten Ausführungsform wird in einem weiteren Schritt 208 des Verfahrens 200 eine Fluidpfadverbindung 88 zwischen einem Fluidanschluss 41 der Station 36 und einem Fluidanschluss 31 des Bauteils 32 hergestellt, indem die Befestigungsvorrichtung 40 gegen das Bauteil 32, insbesondre mittels des Schritts 206, angedrückt wird, sodass die Fluidanschlüsse 31, 41 in Wirkverbindung treten und die Fluidpfadverbindung 88 herstellen. Der Schritt 208 folgt nach den Schritten 202 und 204. Insbesondere kann dem Schritt 208 der Schritt 206 vorausgehen bzw. der Schritt 208 kann mittels des Schritt 206 durchgeführt werden. Insbesondere kann das die dritte Ausführungsform des Verfahrens 200 mit der vierten Ausführungsform des Isolatorsystems 10 ausgeführt werden.

Das Andrücken der Befestigungsvorrichtung 40 gegen das Bauteil 32 erfolgt in einer, vorzugsweise parallel zu dem Fluidanschluss 31, Bewegung, die in Fig. 7 mit dem Pfeil 58' gekennzeichnet ist. Insbesondere kann dabei zumindest eine Dichtung 89 (nicht dargestellt) die Fluidpfadverbindung 88 zwischen den Fluidanschlüssen 31, 41 abdichten. Beispielsweise kann eine O-Ringdichtung 89 oder ein konusförmiges Dichtelement 89 verwendet werden. Die Dichtung 89 kann an dem Fluidanschluss 41 und/oder an dem Fluidanschluss 31 angeordnet sein.

Insbesondere wenn das Bauteil 32 mittels des Schritts 206 in die Betriebsposition verbracht wird, kann beispielsweise eine Schwenkbewegung in Richtung des Pfeils 58 (siehe Fig. 7) erfolgen. Bei dieser Bewegung kann es sich um die gleiche Bewegung handeln, die bereits in Fig. 2 mit dem Pfeil 58 gekennzeichnet wurde. Insbesondere kann die Bewegung in die Richtung 58' aus der Schwenkbewegung des Aktors 38' in der Richtung 58 resultieren.

Im Rahmen der dritten Ausführungsform des Verfahrens 200 kann der Schritt 204 bereits dann ein Koppeln des Bauteils 32 mit der Station 36 bewirken, wenn das Bauteil 32 mittels einer Bewegung der Handhabungseinrichtung 46 des Barrieresystems 10 in einer definierten Position und Lage im Bewegungsbereich des Aktors 38' abgelegt und freigegeben ist. Zum Freigeben kann insbesondere der Schritt 110 des Verfahrens 100 verwendet werden. In der definierten Position und Lage kann das Bauteil 32 bewegbar sein, sodass das Bauteil 32 durch eine Bewegung des Aktors 38' (siehe beispielhaft der Pfeil 58 in Fig. 7) bzw. die Bewegung der Befestigungsvorrichtung 40 (siehe den Pfeil 58' in Fig. 7) in dem Schritt des Herstellens 208 der Fluidpfadverbindung 88 bewegt wird.

Das Bauteil 32 kann somit im Schritt 208 durch die Bewegung 58, 58' derart bewegt werden, sodass es gegen ein weiteres Bauteil 32' (siehe auch Fig. 7) oder eine weitere Station 36' gedrückt wird. Insbesondere kann das Bauteil 32 dabei zwischen der Befestigungsvorrichtung 40 der Station 36 und dem weiteren Bauteil 32' oder der weiteren Station 36' eingeklemmt werden. Insbesondere kann dann durch das Andrücken ein zweiter Fluidanschluss 31' des Bauteils 32, der insbesondere mit dem ersten Fluidanschluss 31 des Bauteils 32 mittels eines Fluidpfades verbunden ist, an einen weiteren Fluidanschluss 41' der weiteren Station 36' oder des weiteren Bauteils 32' gedrückt werden, sodass auch diese Fluidanschlüsse 31', 41' in Wirkverbindung treten und eine weitere Fluidpfadverbindung 88' bereitstellen. Insbesondere kann auch hier zumindest eine Dichtung 89 die Fluidpfadverbindung 88' zwischen den Fluidanschlüssen 31', 41' abdichten. Somit kann dann eine Fluidpfadverbindung 88" zwischen dem Fluidanschluss 41 der Station 36 und dem weiteren Fluidanschluss 41'weiteren Station 36' oder des weiteren Bauteils 32' hergestellt werden. Mit anderen Worten ist dann das Bauteil 32 zwischen dem Fluidanschluss 41 der Station und dem weiteren Fluidanschluss 41'angeordnet und verbindet diese mittels eines Fluidpfads. Durch das Andrücken kann eine Fixierung des Bauteils erreicht werden. Insbesondere kann das Andrücken derart durchgeführt werden, dass eine gegenseitige Zentrierung der Fluidanschlüssen 31, 41 erreicht wird.

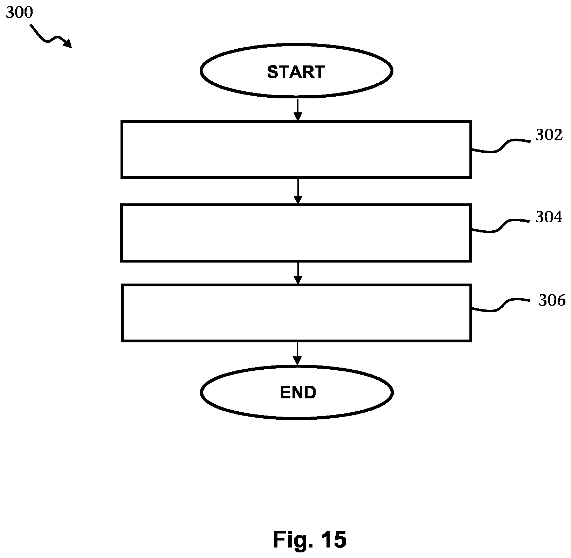

Fig. 15 zeigt eine schematische Ansicht einer erste Ausführungsform eines weiteren Verfahrens 300 zum Koppeln eines Bauteils 32 für ein Verarbeitungssystem 30 eines Barrieresystems, insbesondere Isolatorsystems 10 in einer Umgebung mit beschränktem Zugang, insbesondere in einem Isolator 12, des Isolatorsystems 10.

In einem ersten Schritt 302 des Verfahrens 300 wird eine Arretierungseinrichtung 70 einer ersten Station 36 des Barrieresystems 10 mittels einer Bewegung eines Aktors 38 einer zweiten Station 36' und/oder mittels einer Bewegung eines Aktors 38 der ersten Station 36 des Barrieresystems 10 gelöst, um das Koppeln des Bauteils 32 mit der ersten 36 Station zu ermöglichen. Insbesondere kann hiermit auch ein Entkoppelt des Bauteils 32 ermöglicht werden, wenn das Bauteil 32 bereits mit der Station 36 gekoppelt ist. Ein Beispiel für die Arretierungseinrichtung 70, die erste Station 36, 36b und den Aktor 38 der zweiten Station 36', 36b' ist in Fig. 6 gezeigt. Insbesondere kann die Arretierungseinrichtung 70 gelöst werden, indem der Aktor 38 der zweiten Station 36', 36b' in Kontakt mit der Arretierungseinrichtung 70 kommt. Die Bewegung kann in Richtung des Pfeils 76 erfolgen.

In einem weiteren Schritt 304 des Verfahrens 300 wird das Bauteil 32 mit der ersten Station 36 mittels einer Bewegung einer Handhabungseinrichtung 46 des Barrieresystems 10 gekoppelt, wobei die Handhabungseinrichtung 46 das Bauteil 32 aufgenommen hat. Das Koppeln kann insbesondere gemäß dem Schritt 108 des Verfahrens 100 durchgeführt werden. Das Aufnehmen kann insbesondere gemäß dem Schritt 104 des Verfahrens 100 durchgeführt werden.

In einem weiteren Schritt 306 des Verfahrens 300 wird anschließend an den Schritt 304 die Arretierungseinrichtung 40 mittels einer Bewegung des Aktors 38 der zweiten Station 36' und/oder mittels einer Bewegung des Aktors 38 der ersten Station 36 arretiert, um das Koppeln des Bauteils 32 mit der ersten Station 36 zu sichern. Insbesondere kann die Arretierungseinrichtung 70 arretiert werden, indem der Aktor 38 und die Arretierungseinrichtung 70 relativ voneinander wegbewegt werden. Die Bewegung kann in Richtung des Pfeils 76 erfolgen.

Das Verfahren 300 kann insbesondere weitere Schritte des Verfahrens 100 aufweisen.

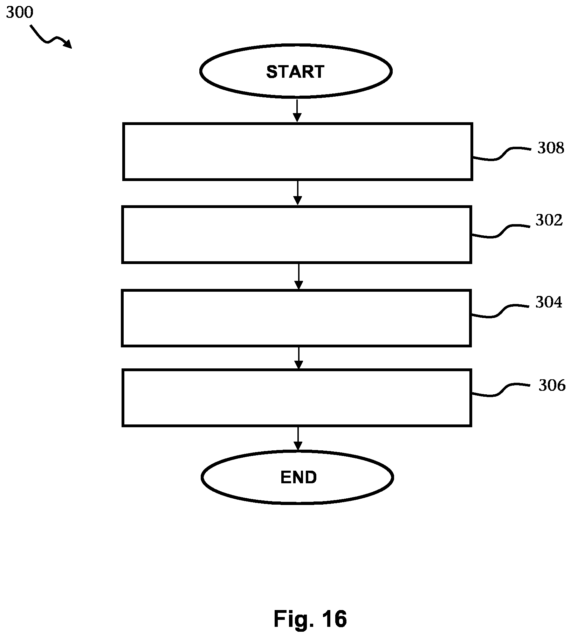

Fig. 16 zeigt eine schematische Ansicht einer zweiten Ausführungsform des Verfahrens 300. Die Schritte 302, 304 und 306 des Verfahrens 300 können in gleicher Weise ausgeführt werden, wie in der ersten Ausführungsform des Verfahrens 300.

In einem weiteren Schritt 308 des Verfahrens 300 wird ein Hilfswerkzeug 74 mittels der Handhabungseinrichtung 46 an der zweiten Station 36' befestigt, wobei das Hilfswerkzeug 74 dazu eingerichtet ist, mittels einer Bewegung des Aktors 38 der zweiten Station 36' und/oder mittels einer Bewegung des Aktors 38 der ersten Station 36 relativ zu der Arretierungseinrichtung 70 bewegt zu werden, um die Arretierungseinrichtung 70 zu lösen oder zu arretieren. Insbesondere kann die Arretierungseinrichtung 70 gelöst werden, indem das Hilfswerkzeug 74 in Kontakt mit der Arretierungseinrichtung 70 bewegt wird. Insbesondere kann die Arretierungseinrichtung 70 arretiert werden, indem das Hilfswerkzeug 74 von der Arretierungseinrichtung 70 wegbewegt wird. Die Bewegungen können in Richtung des Pfeils 76 (siehe Fig. 6) erfolgen. Der Schritt 308 erfolgt vor den Schritten 302 und 306.

Fig. 17 zeigt eine schematische Ansicht einer ersten Ausführungsform eines Verfahrens zum Initiieren einer Handhabung zumindest eines Bauteils 32 für ein Verarbeitungssystem 30 eines Barrieresystems, insbesondere Isolatorsystems 10 in einer Umgebung mit beschränktem Zugang, insbesondere in einem Isolator 12, des Isolatorsystems 10.

In einem ersten Schritt 402 des Verfahrens 400 wird eine Ausgangsposition des zumindest einen Bauteils 32, relativ zu einer Handhabungseinrichtung 46 und relativ zu einer Station 36 des Barrieresystems 10 definiert, indem eine Koordinateninitiierungseinrichtung 80 des Barrieresystems 10 mit einer Zuführvorrichtung 24 des Barrieresystems 10 wechselwirkt. Ein Beispiel für die Koordinateninitiierungseinrichtung 80 ist in Fig. 2 gezeigt. Die Ausgangsposition kann eine Position und/oder eine Lage in einem definierten Koordinatensystem 82 (siehe Fig. 2) sein.

Insbesondere kann dem Schritt 402 der Schritt des Zuführens 102 zumindest eines Bauteils 32 mittels der Zuführvorrichtung 24 des Verfahrens 100 vorausgehen. Das Verfahren 400 kann zudem weitere Schritte des Verfahrens 100 aufweisen.

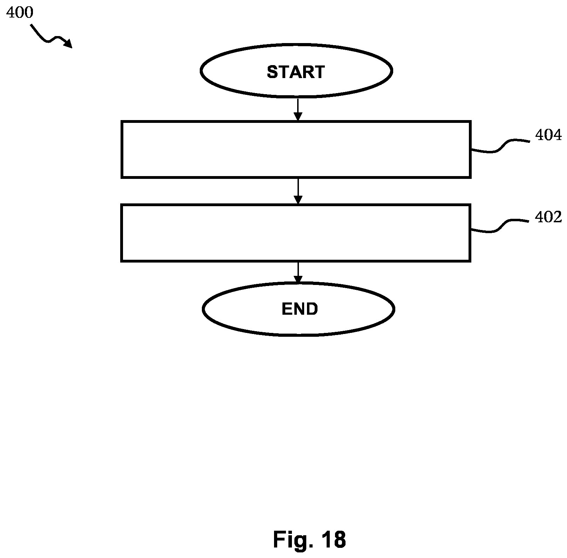

Fig. 18 zeigt eine schematische Ansicht einer zweiten Ausführungsform des Verfahrens 400. Der Schritt 402 des Verfahrens 400 kann in gleicher Weise ausgeführt werden, wie in der ersten Ausführungsform des Verfahrens 400.

In einem weiteren Schritt 404 des Verfahrens 400 wird, wenn die Koordinateninitiierungseinrichtung 80 an einem Aktor 38 einer weiteren Station 36d des Barrieresystems 10 befestigt ist, die Koordinateninitiierungseinrichtung 80 mittels des Aktors 38 bewegt, um die Koordinateninitiierungseinrichtung 80 in Kontakt mit der Zuführvorrichtung 24 zu bringen. Die Bewegung kann in Richtung des Pfeils 84 in Fig. 2 erfolgen. Der Schritt 404 wird vor dem Schritt 402 ausgeführt.

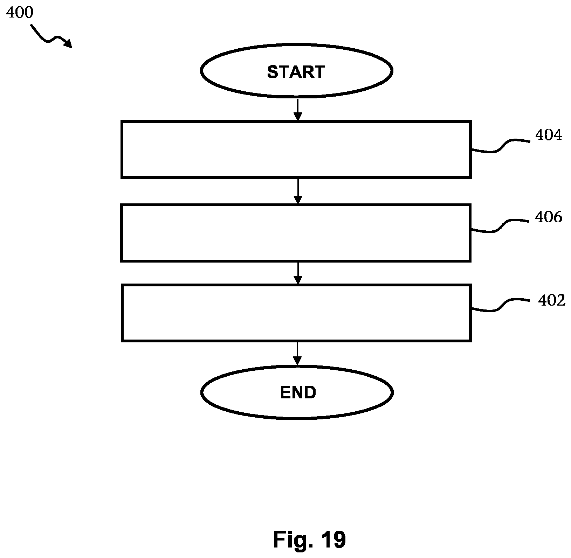

Fig. 19 zeigt eine schematische Ansicht einer dritten Ausführungsform des Verfahrens 400. Die Schritte 402 und 404 des Verfahrens 400 können in gleicher Weise ausgeführt werden, wie in der zweiten Ausführungsform des Verfahrens 400.

In einem weiteren Schritt 406 des Verfahrens 400 wird die Zuführvorrichtung 24 mittels der Koordinateninitiierungseinrichtung 80 fixiert, um eine Position und eine Lage der Zuführvorrichtung 24 zu sichern. Der Schritt 406 wird nach oder zeitgleich mit dem Schritt 404 und vor dem Schritt 402 durchgeführt.

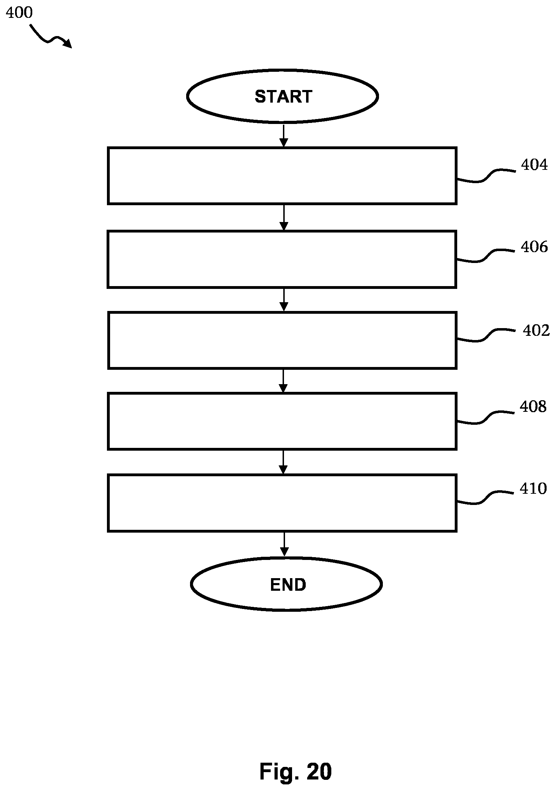

Fig. 20 zeigt eine schematische Ansicht einer vierten Ausführungsform des Verfahrens 400. Die Schritte 402, 404 und 406 des Verfahrens 400 können in gleicher Weise ausgeführt werden, wie in der dritten Ausführungsform des Verfahrens 400.

In einem weiteren Schritt 408 des Verfahrens 400 wird eine Information über die Ausgangsposition des zumindest einen Bauteils 32 von der Koordinateninitiierungseinrichtung 80 an eine Steuereinrichtung 56 des Barrieresystem 10 zum Steuern der Handhabungseinrichtung 46 übermittelt.

In einem weiteren Schritt 410 des Verfahrens 400 wird die Handhabungseinrichtung 46, insbesondere ausschließlich, basierend auf der Information gesteuert, um das zumindest eine Bauteil 32 aufzunehmen und/oder zu orientieren und/oder zu positionieren und/oder einzubauen. Mit anderen Worten wird das zumindest eine Bauteil 32 basierend auf der Information mittels der Handhabungseinrichtung 46 gehandhabt. Insbesondere kann das Verfahren 400 hierbei Schritte des Verfahrens 100 zum Handhaben des zumindest einen Bauteils 32 aufweisen. Insbesondere kann das Verfahren 400 hierbei des Weiteren Schritte der Verfahren 200 und 300 aufweisen.

Des Weiteren weist die vorliegende Offenbarung Ausführungsformen gemäß der folgenden Klauseln auf:
Klausel 1. Barrieresystem, insbesondere Isolatorsystem (10), wobei das Barrieresystem (10) eine Umgebung mit beschränktem Zugang, insbesondere einen Isolator (12); ein Transfersystem (16) mit einer Zuführvorrichtung (24) zum Zuführen zumindest eines Bauteils (32) für ein Verarbeitungssystem (30) in die Umgebung (12); eine in der Umgebung (12) angeordnete Station (36) und eine in der Umgebung (12) angeordnete Handhabungseinrichtung (46), vorzugsweise ein Handhabungsroboter, aufweist, wobei die Handhabungseinrichtung (46) dazu eingerichtet ist, ein mittels der Zuführvorrichtung (24) in die Umgebung (12) zugeführtes Bauteil (32) aufzunehmen und zwischen der Zuführvorrichtung (24) und der Station (36) zu transferieren und das Bauteil (32) mit der Station (36) zu koppeln, um das Bauteil (32) einzubauen, oder ein Bauteil (32) von der Station (36) zu entkoppeln, um das Bauteil (32) auszubauen, dadurch gekennzeichnet, dass die Handhabungseinrichtung (46) einen Endeffektor (50) aufweist, wobei der Endeffektor (50) zumindest zwei, voneinander beabstandete Aufnahmeelemente (52) aufweist, wobei die Handhabungseinrichtung (46) dazu eingerichtet ist, den Endeffektor (50) derart zu bewegen, dass die Aufnahmeelemente (52) in die Gegenstücke (34) des Bauteils (32) eingreifen, um das Bauteil (32) aufzunehmen und den Endeffektor (50) derart zu bewegen, dass die Aufnahmeelemente (52) und die Gegenstücke (34) des Bauteils (32) voneinander getrennt werden, um das Bauteil (32) freizugeben.
Klausel 2. Barrieresystem (10) nach Klausel 1, wobei die Aufnahmeelemente (52) unbeweglich ausgestaltet sind, wobei die Handhabungseinrichtung (46) dazu eingerichtet ist, den Endeffektor (50) derart zu bewegen, dass die Aufnahmeelemente (52) ausschließlich aufgrund der Bewegung des Endeffektors (50) in die Gegenstücke (34) des Bauteils (32) eingreifen oder dass die Aufnahmeelemente (52) und die Gegenstücke (34) des Bauteils (32) ausschließlich aufgrund der Bewegung des Endeffektors (50) voneinander getrennt werden.
Klausel 3. Barrieresystem (10) nach Klausel 1 oder 2, wobei das Barrieresystem (10) des Weiteren eine Steuereinrichtung (56) aufweist, die dazu ausgebildet ist, wenn das Bauteil (32) von der Handhabungseinrichtung (46) aufgenommen ist, ein Koppeln des Bauteils (32) mit der Station (36), durch eine Bewegung eines Aktors (38) der Station (36) zu unterstützen, wobei die Steuereinrichtung (56) dazu den Aktor (38) derart steuert, sodass zumindest eine Befestigungsvorrichtung (40) der Station (36) in eine zum Koppeln mit dem Bauteil (32) vordefinierte Position bewegt wird, und insbesondere wenn das Bauteil (32) mit der Station (36) gekoppelt ist, den Aktor (38) derart steuert, sodass das Bauteil (32) in eine Betriebsposition verbracht wird.
Klausel 4. Barrieresystem (10) nach einer der Klauseln 1 bis 3, wobei ein Aktor (38) einer zweiten Station (36') und/oder ein Aktor (38) einer ersten Station (36) des Barrieresystems (10) dazu eingerichtet ist, eine Arretierungseinrichtung (70) der ersten Station (36) des Barrieresystems (10) zu lösen, um das Koppeln des Bauteils (32) mit der ersten Station (36) zu ermöglichen und wenn das Bauteil (32) mit der ersten Station (36) gekoppelt ist, die Arretierungseinrichtung (70) zu arretieren, um das Koppeln des Bauteils (32) mit der ersten Station (36) zu sichern.
Klausel 5. Barrieresystem (10) nach Klausel 4, wobei ein Hilfswerkzeug (74) an der zweiten Station (36') befestigt oder mittels der Handhabungseinrichtung (46) befestigbar ist, wobei das Hilfswerkzeug (74) dazu eingerichtet ist, mittels einer Bewegung des Aktors (38) der zweiten Station (36') und/oder mittels einer Bewegung des Aktors (38) der ersten Station (36) relativ zu der Arretierungseinrichtung (70) bewegt zu werden, um die Arretierungseinrichtung (70) der ersten Station (36) zu lösen oder zu arretieren.
Klausel 6. Barrieresystem (10) nach einer der Klauseln 1 bis 5, wobei das Barrieresystem (10) des Weiteren eine Koordinateninitiierungseinrichtung (80) aufweist, wobei die Koordinateninitiierungseinrichtung (80) dazu eingerichtet ist, mit der Zuführvorrichtung (24) wechselzuwirken, um eine Ausgangsposition des zumindest einen Bauteils (32), relativ zu der Handhabungseinrichtung (46) und relativ zu einer Station (36) zu definieren.
Klausel 7. Barrieresystem (10) nach Klausel 6, wobei die Koordinateninitiierungseinrichtung (80) an einem Aktor (38) einer weiteren Station (36") befestigt oder mittels der Handhabungseinrichtung (46) befestigbar ist, wobei der Aktor (38) eingerichtet ist, die Koordinateninitiierungseinrichtung (80) zu bewegen, um die Koordinateninitiierungseinrichtung (80) in Kontakt mit der Zuführvorrichtung (24) zu bringen.
Klausel 8. Barrieresystem (10) nach Klausel 6 oder 7, wobei die Koordinateninitiierungs-einrichtung (80) dazu eingerichtet ist, die Zuführvorrichtung (24) zu fixieren, um eine Position und eine Lage der Zuführvorrichtung (24) zu sichern.
Klausel 9. Barrieresystem (10) nach einer der Klauseln 6 bis 8, wobei das Barrieresystem (10) eine Steuereinrichtung (56) zum Steuern der Handhabungseinrichtung (46) aufweist, wobei die Steuereinrichtung (56) dazu ausgebildet ist, eine Information über die Ausgangsposition des zumindest einen Bauteils (32) von der Koordinateninitiierungseinrichtung (80) zu erhalten, um die Handhabungseinrichtung (46), insbesondere ausschließlich, basierend auf der Information zu steuern, um das zumindest eine Bauteil (32) aufzunehmen und/oder zu orientieren und/oder zu positionieren und/oder einzubauen.
Klausel 10. Bauteil (32) für ein Verarbeitungssystem (30) eines Barrieresystems, insbesondere Isolatorsystems (10), insbesondere nach einer der Klauseln 1 bis 9, wobei das Bauteil (32) Gegenstücke (34) zum Eingreifen von Aufnahmeelementen (52) eines Endeffektors (50) einer Handhabungseinrichtung (46) des Barrieresystems (10) aufweist, wobei die Gegenstücke (34) des Bauteils (32) als Aussparungen (34) in dem Bauteil (32) oder als Aussparungen (34) in einem Adapter (33), der an dem Bauteil (32) fixiert oder fixierbar ist, ausgebildet sind, dadurch gekennzeichnet, dass eine erste Aussparung (34) eine im Wesentlichen halbkreisförmige Aussparung mit einem Kreisdurchmesser (97) ist und die einen ersten Mittelpunkt (96) definiert und eine radiale Öffnung (35) aufweist, deren Breite mindestens dem Kreisdurchmesser (97) der ersten Aussparung (34) entspricht und eine zweite, insbesondere im Wesentlichen halbkreisförmige, Aussparung (34') einen zweiten Mittelpunkt (98) definiert, wobei der zweite Mittelpunkt (98) von dem ersten Mittelpunkt (96) in einem Abstand (a) beabstandet ist, wobei die zweite, insbesondere halbkreisförmige, Aussparung (34') einen ersten Bereich (90') der zweiten Aussparung (34') darstellt und wobei die zweite Aussparung (34') einen zweiten Bereich (92') aufweist, der mit dem ersten Bereich (90') verbunden ist, und wobei der zweite Bereich (92') dazu eingerichtet ist, eine Bewegung eines der Aufnahmeelemente (52), innerhalb der zweiten Aussparung (34'), entlang einer Bahn (66, 68) von dem zweiten Bereich (92') in den ersten Bereich (90') zu ermöglichen, wobei sich der zweite Bereich (92') entlang eines Abschnitts der Bahn (66, 68) erstreckt, insbesondere wobei die zweite Aussparung (34') in dem zweiten Bereich (92') eine größere Breite aufweist, als im ersten Bereich (90') und wobei das Bauteil (32) des Weiteren dazu eingerichtet ist, mit einer in einem Isolator (12) des Barrieresystems (10) angeordneten Station (36) des Barrieresystems (10) koppelbar zu sein.
Klausel 11. Bauteil (32) nach Klausel 10, wobei die Bahn (66) in der zweiten Aussparung (34') von dem zweiten Bereich (92') in den ersten Bereich (90') eine gradlinige Bahn (66) ist.
Klausel 12. Bauteil (32) nach Klausel 10, wobei die Bahn (68) in der zweiten Aussparung (34') von dem zweiten Bereich (92') in den ersten Bereich (90') eine Kreisbahn (68) ist, deren Mittelpunkt mit dem ersten Mittelpunkt (96) zusammenfällt.
Klausel 13. Bauteil (32) nach einer der Klauseln 10 bis 12, wobei die erste und/oder die zweite Aussparung (34, 34') Hinterschneidungen (63) aufweisen kann, die jeweils dazu eingerichtet sind, mit einem Vorsprung (62) eines der Aufnahmeelemente (52) ineinanderzugreifen, um das Aufnahmeelement (52) in einer axialen Richtung des Aufnahmeelements (52) zu sichern.
Klausel 14. Bauteil (32) nach einer der Klauseln 10 bis 13, wobei zumindest eines der Gegenstücke (34) in einem Bereich der, insbesondere halbkreisförmigen, Aussparung (34) derart ausgestaltet ist, dass sich, wenn ein Aufnahmeelement (52) in die Aussparung (34) eingreift, eine Passung zwischen der Aussparung (34) und dem Aufnahmeelement (52) ergibt, wobei die Passung bevorzugt eine Spielpassung ist und wobei die Aussparung (34) eine Tiefe aufweist, die zu einer Breite, insbesondere dem Kreisdurchmesser (97), in einem Verhältnis zwischen 1:1 und 1,6:1, bevorzugt zwischen 1,2:1 und 1,5:1, besonders bevorzugt zwischen 1,2:1 und 1,4:1 steht, sodass sich, wenn das Bauteil (32) von den Aufnahmeelementen (52) aufgenommen ist, ein Verkanten zwischen dem zumindest einen der Gegenstücke (34) und dem jeweiligen Aufnahmeelement (52) ergibt, um eine Relativbewegung zwischen den Gegenstücken (34) und den Aufnahmeelementen (52) zu erschweren.
Klausel 15. System (80) mit einem Barrieresystem (10) nach einer der Klauseln 1 bis 9 und zumindest einem Bauteil (32) nach einer der Klauseln 10 bis 14.
Klausel 16. Verfahren (100) zum Bereitstellen eines Verarbeitungssystems (30) eines Barrieresystems, insbesondere Isolatorsystems (10), insbesondere nach einer der Klauseln 1 bis 9, in einer Umgebung mit beschränktem Zugang des Barrieresystems (10), insbesondere einem Isolator (12), mit den folgenden Schritten:
   - Zuführen (102) zumindest eines Bauteils (32), insbesondere nach einer der Klauseln 10 bis 14, für das Verarbeitungssystem (30) in die Umgebung (12) mittels einer Zuführvorrichtung (24) des Barrieresystems (10);
   - Aufnehmen (104) des zumindest einen Bauteils (32) mittels einer in der Umgebung (12) angeordneten Handhabungseinrichtung (46) des Barrieresystems (10), vorzugsweise einem Handhabungsroboter;
   - Transferieren (106) des zumindest einen aufgenommenen Bauteils (32) innerhalb der Umgebung (12) zwischen der Zuführvorrichtung (24) und einer in der Umgebung (12) angeordneten Station (36) des Barrieresystems (10) mittels der Handhabungseinrichtung (46);
   - Koppeln (108) des zumindest einen Bauteils (32) mit der Station (36) mittels der Handhabungseinrichtung (46), um das Bauteil (32) einzubauen; und
   - Freigeben (110) des zumindest einen Bauteils (32) mittels der Handhabungseinrichtung (46),
   wobei das Verfahren (100) dadurch gekennzeichnet ist, dass der Schritt des Aufnehmens (104) einen Schritt des Einführens (120) eines Endeffektors (50) der Handhabungseinrichtung (46) umfasst, wobei der Endeffektor (50) zumindest, zwei voneinander beabstandete Aufnahmeelemente (52) aufweist, wobei die Handhabungseinrichtung (46) dazu eingerichtet ist, den Endeffektor (50) derart zu bewegen, dass die Aufnahmeelemente (52) in Gegenstücke (34) des Bauteils (32) eingreifen, um das Bauteil (32) aufzunehmen; und der Schritt des Freigebens (110) einen Schritt des Ausführens (130) des Endeffektors (50) umfasst, wobei die Handhabungseinrichtung (46) dazu eingerichtet ist, den Endeffektor (50) derart zu bewegen, dass die Aufnahmeelemente (52) und die Gegenstücke (34) des Bauteils (32) voneinander getrennt werden, um das Bauteil (32) freizugeben.
Klausel 17. Verfahren (100) nach Klausel 16, wobei das Verfahren des Weiteren die folgenden Schritte aufweist:
   - Entkoppeln (112) des mit der Station (36) gekoppelten Bauteils (32) von der Station (36) mittels der Handhabungseinrichtung (46), um das Bauteil (32) auszubauen, wobei das Bauteil (32) von der Handhabungseinrichtung (46) aufgenommen ist; und
   - Ausschleusen (114) des ausgebauten Bauteils (32) mittels Zuführvorrichtung (24) aus der Umgebung mit beschränktem Zugang (12).
Klausel 18. Verfahren (100) nach Klausel 16 oder 17 wobei die Schritte des Einführens (120) und Ausführens (130) des Endeffektors (50) derart ausgeführt werden, dass die Aufnahmeelemente (52) ausschließlich aufgrund der Bewegung des Endeffektors (50) in die Gegenstücke (34) des Bauteils (32) eingreifen und dass die Aufnahmeelemente (52) und die Gegenstücke (34) des Bauteils (32) ausschließlich aufgrund der Bewegung des Endeffektors (50) voneinander getrennt werden, wobei die Aufnahmeelemente (52) unbeweglich ausgestaltet sind.
Klausel 19. Verfahren (100) nach einer der Klauseln 16 bis 18, wobei der Schritt des Einführens (120) eine Bewegungsabfolge folgender nacheinander ausgeführter Bewegungsschritte ist:
   - Erstes Bewegen (122) des Endeffektors (50), sodass zumindest zwei der Aufnahmeelemente (52) jeweils zumindest abschnittsweise in eine Tiefenrichtung ausgehend von einer Oberfläche (94) des Bauteils (32) bewegt werden, wobei jedes Aufnahmeelement (52) die Oberfläche (94) im Bereich des jeweiligen Gegenstücks (34) passiert und wobei die Gegenstücke (34) des zumindest einen Bauteils (32) als Aussparungen (34) in dem Bauteil (32) oder als Aussparungen (34) in einem Adapter (33), der an dem zumindest einen Bauteil (32) fixiert oder fixierbar ist, ausgebildet sind, wobei eine erste Aussparung (34) eine im Wesentlichen halbkreisförmige Aussparung mit einem Kreisdurchmesser (97) ist und die einen ersten Mittelpunkt (96) definiert und eine radiale Öffnung (35) aufweist, deren Breite mindestens gleich dem Kreisdurchmesser (97) der ersten Aussparung (34) ist, und eine zweite, insbesondere im Wesentlichen halbkreisförmige, Aussparung (34') einen zweiten Mittelpunkt (98) definiert, wobei der zweite Mittelpunkt (98) von dem ersten Mittelpunkt (96) in einem Abstand (a) beabstandet ist, wobei die zweite, insbesondere halbkreisförmige, Aussparung (34') einen ersten Bereich (90') der zweiten Aussparung (34') darstellt und wobei die zweite Aussparung (34') einen zweiten Bereich (92') aufweist, der mit dem ersten Bereich (90') verbunden ist, und der dazu eingerichtet ist, eine Bewegung eines der Aufnahmeelemente (52), innerhalb der zweiten Aussparung (34'), von dem zweiten Bereich (92') in den ersten Bereich (90') zu ermöglichen;
   - Zweites Bewegen (124) des Endeffektors (50), vorzugsweise geradliniges Bewegen des Endeffektors (50), sodass ein erstes Aufnahmeelement (52) in die erste Aussparung (34) eingreift und eine Mittelachse (54) des ersten Aufnahmeelements (52) mit dem ersten Mittelpunkt (96) zusammenfällt; und
   - Drittes Bewegen (126) des Endeffektors (50), vorzugsweise rotatorisches Bewegen des Endeffektors (50), um die Mittelachse (54) des ersten Aufnahmeelements (52), sodass die Bewegung eines zweiten Aufnahmeelements (52') in der zweiten Aussparung (34') von dem zweiten Bereich (92') in den ersten Bereich (90') auf einer Kreisbahn (68), deren Mittelpunkt mit dem ersten Mittelpunkt (96) zusammenfällt, verläuft, wobei sich der zweite Bereich (92') entlang eines Abschnitts der Bahn (68) erstreckt, wobei die Bewegung endet, wenn eine Mittelachse (54') des zweiten Aufnahmeelements (52') mit dem zweiten Mittelpunkt (98) zusammenfällt.
Klausel 20. Verfahren (100) nach einer der Klauseln 16 bis 18, wobei der Schritt des Einführens (120) eine Bewegungsabfolge folgender nacheinander ausgeführter Bewegungsschritte ist:
   - Erstes Bewegen (122) des Endeffektors (50), sodass zumindest zwei der Aufnahmeelemente (52) jeweils zumindest abschnittsweise in eine Tiefenrichtung ausgehend von einer Oberfläche (94) des Bauteils (32) bewegt werden, wobei jedes Aufnahmeelement (52) die Oberfläche (94) im Bereich des jeweiligen Gegenstücks (34) passiert und wobei die Gegenstücke (34) des zumindest einen Bauteils (32) als Aussparungen (34) in dem Bauteil (32) oder als Aussparungen (34) in einem Adapter (33), der an dem zumindest einen Bauteil (32) fixiert oder fixierbar ist, ausgebildet sind, wobei eine erste Aussparung (34) eine im Wesentlichen halbkreisförmige Aussparung mit einem Kreisdurchmesser (97) ist und die einen ersten Mittelpunkt (96) definiert und eine radiale Öffnung (35) aufweist, deren Breite mindestens gleich dem Kreisdurchmesser (97) der ersten Aussparung (34) ist, und eine zweite, insbesondere im Wesentlichen halbkreisförmige, Aussparung (34') einen zweiten Mittelpunkt (98) definiert, wobei der zweite Mittelpunkt (98) von dem ersten Mittelpunkt (96) in einem Abstand (a) beabstandet ist, wobei die zweite, insbesondere halbkreisförmige, Aussparung (34') einen ersten Bereich (90') der zweiten Aussparung (34') darstellt und wobei die zweite Aussparung (34') einen zweiten Bereich (92') aufweist, der mit dem ersten Bereich (90') verbunden ist, und der dazu eingerichtet ist, eine Bewegung eines der Aufnahmeelemente (52), innerhalb der zweiten Aussparung (34'), von dem zweiten Bereich (92') in den ersten Bereich (90') zu ermöglichen; und
   - Weiteres Bewegen (128) des Endeffektors (50), sodass die Bewegungen eines ersten Aufnahmeelements (52) und eines zweiten Aufnahmeelements (52') auf gleichverlaufenden, parallelen Bahnen (66) erfolgen, wobei die Bahnen (66) gradlinig oder gekrümmt sind, wobei sich der zweite Bereich (92, 92') entlang eines Abschnitts der Bahn (66) erstreckt und sodass das erste Aufnahmeelement (52) in die erste Aussparung (34) eingreift und das zweite Aufnahmeelement (52') in die zweite Aussparung (34') eingreift, wobei die Bewegung endet, wenn eine Mittelachse (54) des ersten Aufnahmeelements (52) mit dem ersten Mittelpunkt (96) zusammenfällt und eine Mittelachse (54') des zweiten Aufnahmeelements (52') mit dem zweiten Mittelpunkt (98) zusammenfällt.
Klausel 21. Verfahren (200) zum Koppeln eines Bauteils (32), insbesondere nach einer der Klauseln 10 bis 14, für ein Verarbeitungssystem (30) eines Barrieresystems, insbesondere Isolatorsystems (10), insbesondere nach einer der Klauseln 1 bis 8, oder eines Systems (80) nach Klausel 15, in einer Umgebung mit beschränktem Zugang, insbesondere in einem Isolator (12), des Barrieresystems (10), mit den folgenden Schritten:
   - Steuern (202) eines Aktors (38) einer Station (36) des Barrieresystems (10) mittels einer Steuereinrichtung (56) des Barrieresystems (10), sodass zumindest eine Befestigungsvorrichtung (40) der Station (36) in eine zum Koppeln mit dem Bauteil (32) vordefinierte Position bewegt wird; und
   - Koppeln (204) des Bauteils (32) mit der Station (36) mittels einer Bewegung einer Handhabungseinrichtung (46) des Barrieresystems (10), wobei die Handhabungseinrichtung (46) das Bauteil (32) aufgenommen hat.
Klausel 22. Verfahren (200) nach Klausel 21, wobei, wenn das Bauteil (32) mit der Station (36) gekoppelt ist, das Verfahren des Weiteren den folgenden Schritt aufweist:
   - Steuern (206) des Aktors (38) der Station (36) mittels der Steuereinrichtung (56), sodass das Bauteil (32) in eine Betriebsposition, verbracht wird, wobei die Betriebsposition eine Position ist, in der das Bauteil (32) in dem Verarbeitungssystem (30) eingesetzt wird.
Klausel 23. Verfahren (200) nach Klausel 21 oder 22, wobei, wenn das Bauteil (32) mit der Station (36) gekoppelt ist, das Verfahren des Weiteren den folgenden Schritt aufweist:
   - Herstellen (208) einer Fluidpfadverbindung (88) zwischen einem Fluidanschluss (41) der Station (36) und einem Fluidanschluss (31) des Bauteils (32), indem die Befestigungsvorrichtung (40) gegen das Bauteil (32), insbesondre mittels des Schritts 206, angedrückt wird, sodass die Fluidanschlüsse (31, 41) in Wirkverbindung treten und die Fluidpfadverbindung (88) herstellen, insbesondere wobei zumindest eine Dichtung (89) die Fluidpfadverbindung (88) zwischen den Fluidanschlüssen (31, 41) abdichtet.
Klausel 24. Verfahren (300) zum Koppeln eines Bauteils (32), insbesondere nach einer der Klauseln 10 bis 14, für ein Verarbeitungssystem (30) eines Barrieresystems, insbesondere Isolatorsystems (10), insbesondere nach einer der Klauseln 1 bis 8, oder eines Systems (80) nach Klausel 15, in einer Umgebung mit beschränktem Zugang, insbesondere in einem Isolator (12), des Barrieresystems (10), mit den folgenden Schritten:
   - Lösen (302) einer Arretierungseinrichtung (70) einer ersten Station (36) des Barrieresystems (10) mittels einer Bewegung eines Aktors (38) einer zweiten Station (36') und/oder mittels einer Bewegung eines Aktors (38) der ersten Station (36) des Barrieresystems (10), um das Koppeln des Bauteils (32) mit der ersten Station (36) zu ermöglichen;
   - Koppeln (304) des Bauteils (32) mit der ersten Station (36) mittels einer Bewegung einer Handhabungseinrichtung (46) des Barrieresystems (10), wobei die Handhabungseinrichtung (46) das Bauteil (32) aufgenommen hat; und anschließend
   - Arretieren (306) der Arretierungseinrichtung (70) mittels einer Bewegung des Aktors (38) der zweiten Station (36') und/oder mittels einer Bewegung des Aktors (38) der ersten Station (36), um das Koppeln des Bauteils (32) mit der ersten Station (36) zu sichern.
Klausel 25. Verfahren (300) nach Klausel 24, wobei das Verfahren des Weiteren den folgenden Schritt aufweist:
   - Befestigen (308) eines Hilfswerkzeugs (74) mittels der Handhabungseinrichtung (46) an der zweiten Station (36'), wobei das Hilfswerkzeug (74) dazu eingerichtet ist, mittels einer Bewegung des Aktors (38) der zweiten Station (36') und/oder mittels einer Bewegung des Aktors (38) der ersten Station (36) relativ zu der Arretierungseinrichtung (70) bewegt zu werden, um die Arretierungseinrichtung (70) zu lösen oder zu arretieren, wobei der Schritt des Befestigens (308) vor den Schritten des Lösens (302) und des Arretierens (306) erfolgt.
Klausel 26. Verfahren (400) zum Initiieren einer Handhabung zumindest eines Bauteils (32), insbesondere nach einer der Klauseln 10 bis 14, für ein Verarbeitungssystem (30) eines Barrieresystems, insbesondere Isolatorsystems (10), insbesondere nach einer der Klauseln 1 bis 8, oder eines Systems (80) nach Klausel 15, in einer Umgebung mit beschränktem Zugang, insbesondere in einem Isolator (12), des Barrieresystems (10), mit den folgenden Schritten:
   - Definieren (402) einer Ausgangsposition des zumindest einen Bauteils (32), relativ zu einer Handhabungseinrichtung (46) und relativ zu einer Station (36) des Barrieresystems (10), indem eine Koordinateninitiierungseinrichtung (80) des Barrieresystems (10) mit einer Zuführvorrichtung (24) des Barrieresystems (10) wechselwirkt.
Klausel 27. Verfahren (400) nach Klausel 26, wobei, wenn die Koordinateninitiierungseinrichtung (80) an einem Aktor (38) einer weiteren Station (36") des Barrieresystems (10) befestigt ist, das Verfahren des Weiteren einen Schritt des Bewegens (404) der Koordinateninitiierungseinrichtung (80) mittels des Aktors (38) aufweist, um die Koordinateninitiierungseinrichtung (80) in Kontakt mit der Zuführvorrichtung (24) zu bringen.
Klausel 28. Verfahren (400) nach Klausel 26 oder 27, wobei das Verfahren des Weiteren einen Schritt des Fixierens (406) der Zuführvorrichtung mittels der Koordinateninitiierungseinrichtung (80) aufweist, um eine Position und eine Lage der Zuführvorrichtung (24) zu sichern.
Klausel 29. Verfahren (400) nach einer der Klauseln 26 bis 28, wobei das Verfahren des Weiteren die folgenden Schritte aufweist:
   - Übermitteln (408) einer Information über die Ausgangsposition des zumindest einen Bauteils (32) von der Koordinateninitiierungseinrichtung (80) an eine Steuereinrichtung (56) des Barrieresystem (10) zum Steuern der Handhabungseinrichtung (46); und
   - Steuern (410) der Handhabungseinrichtung (46), insbesondere ausschließlich, basierend auf der Information, um das zumindest eine Bauteil (32) aufzunehmen und/oder zu orientieren und/oder zu positionieren und/oder einzubauen.

## Patentansprüche

1. Bauteil (32) für ein Verarbeitungssystem (30) eines Barrieresystems, insbesondere Isolatorsystems (10), insbesondere nach einem der Ansprüche 1 bis 9, wobei das Bauteil (32) Gegenstücke (34) zum Eingreifen von Aufnahmeelementen (52) eines Endeffektors (50) einer Handhabungseinrichtung (46) des Barrieresystems (10) aufweist, wobei die Gegenstücke (34) des Bauteils (32) als Aussparungen (34) in dem Bauteil (32) oder als Aussparungen (34) in einem Adapter (33), der an dem Bauteil (32) fixiert oder fixierbar ist, ausgebildet sind, **dadurch gekennzeichnet, dass** eine erste Aussparung (34) eine im Wesentlichen halbkreisförmige Aussparung mit einem Kreisdurchmesser (97) ist und die einen ersten Mittelpunkt (96) definiert und eine radiale Öffnung (35) aufweist, deren Breite mindestens dem Kreisdurchmesser (97) der ersten Aussparung (34) entspricht und eine zweite, insbesondere im Wesentlichen halbkreisförmige, Aussparung (34') einen zweiten Mittelpunkt (98) definiert, wobei der zweite Mittelpunkt (98) von dem ersten Mittelpunkt (96) in einem Abstand (a) beabstandet ist, wobei die zweite, insbesondere halbkreisförmige, Aussparung (34') einen ersten Bereich (90') der zweiten Aussparung (34') darstellt und wobei die zweite Aussparung (34') einen zweiten Bereich (92') aufweist, der mit dem ersten Bereich (90') verbunden ist, und wobei der zweite Bereich (92') dazu eingerichtet ist, eine Bewegung eines der Aufnahmeelemente (52), innerhalb der zweiten Aussparung (34'), entlang einer Bahn (66, 68) von dem zweiten Bereich (92') in den ersten Bereich (90') zu ermöglichen, wobei sich der zweite Bereich (92') entlang eines Abschnitts der Bahn (66, 68) erstreckt, insbesondere wobei die zweite Aussparung (34') in dem zweiten Bereich (92') eine größere Breite aufweist, als im ersten Bereich (90') und wobei das Bauteil (32) des Weiteren dazu eingerichtet ist, mit einer in einem Isolator (12) des Barrieresystems (10) angeordneten Station (36) des Barrieresystems (10) koppelbar zu sein.

2. Bauteil (32) nach Anspruch 1, wobei die Bahn (66) in der zweiten Aussparung (34') von dem zweiten Bereich (92') in den ersten Bereich (90') eine gradlinige Bahn (66) ist.

3. Bauteil (32) nach Anspruch 1, wobei die Bahn (68) in der zweiten Aussparung (34') von dem zweiten Bereich (92') in den ersten Bereich (90') eine Kreisbahn (68) ist, deren Mittelpunkt mit dem ersten Mittelpunkt (96) zusammenfällt.

4. Bauteil (32) nach einem der Ansprüche 1 bis 3, wobei die erste und/oder die zweite Aussparung (34, 34') Hinterschneidungen (63) aufweisen kann, die jeweils dazu eingerichtet sind, mit einem Vorsprung (62) eines der Aufnahmeelemente (52) ineinanderzugreifen, um das Aufnahmeelement (52) in einer axialen Richtung des Aufnahmeelements (52) zu sichern.

5. Bauteil (32) nach einem der Ansprüche 1 bis 4, wobei zumindest eines der Gegenstücke (34) in einem Bereich der, insbesondere halbkreisförmigen, Aussparung (34) derart ausgestaltet ist, dass sich, wenn ein Aufnahmeelement (52) in die Aussparung (34) eingreift, eine Passung zwischen der Aussparung (34) und dem Aufnahmeelement (52) ergibt, wobei die Passung bevorzugt eine Spielpassung ist und wobei die Aussparung (34) eine Tiefe aufweist, die zu einer Breite, insbesondere dem Kreisdurchmesser (97), in einem Verhältnis zwischen 1:1 und 1,6:1, bevorzugt zwischen 1,2:1 und 1,5:1, besonders bevorzugt zwischen 1,2:1 und 1,4:1 steht, sodass sich, wenn das Bauteil (32) von den Aufnahmeelementen (52) aufgenommen ist, ein Verkanten zwischen dem zumindest einen der Gegenstücke (34) und dem jeweiligen Aufnahmeelement (52) ergibt, um eine Relativbewegung zwischen den Gegenstücken (34) und den Aufnahmeelementen (52) zu erschweren.

6. System (80) mit einem Barrieresystem (10), insbesondere Isolatorsystem (10), und zumindest einem Bauteil (32) nach einem der Ansprüche 1 bis 5, wobei das Barrieresystem (10) eine Umgebung mit beschränktem Zugang, insbesondere einen Isolator (12); ein Transfersystem (16) mit einer Zuführvorrichtung (24) zum Zuführen zumindest eines Bauteils (32) für ein Verarbeitungssystem (30) in die Umgebung (12); eine in der Umgebung (12) angeordnete Station (36) und eine in der Umgebung (12) angeordnete Handhabungseinrichtung (46), vorzugsweise ein Handhabungsroboter, aufweist, wobei die Handhabungseinrichtung (46) dazu eingerichtet ist, ein mittels der Zuführvorrichtung (24) in die Umgebung (12) zugeführtes Bauteil (32) aufzunehmen und zwischen der Zuführvorrichtung (24) und der Station (36) zu transferieren und das Bauteil (32) mit der Station (36) zu koppeln, um das Bauteil (32) einzubauen, oder ein Bauteil (32) von der Station (36) zu entkoppeln, um das Bauteil (32) auszubauen, **dadurch gekennzeichnet, dass** die Handhabungseinrichtung (46) einen Endeffektor (50) aufweist, wobei der Endeffektor (50) zumindest zwei, voneinander beabstandete Aufnahmeelemente (52) aufweist, wobei die Handhabungseinrichtung (46) dazu eingerichtet ist, den Endeffektor (50) derart zu bewegen, dass die Aufnahmeelemente (52) in die Gegenstücke (34) des Bauteils (32) eingreifen, um das Bauteil (32) aufzunehmen und den Endeffektor (50) derart zu bewegen, dass die Aufnahmeelemente (52) und die Gegenstücke (34) des Bauteils (32) voneinander getrennt werden, um das Bauteil (32) freizugeben.

7. Verfahren (100) zum Bereitstellen eines Verarbeitungssystems (30) eines Barrieresystems, insbesondere Isolatorsystems (10), in einer Umgebung mit beschränktem Zugang des Barrieresystems (10), insbesondere einem Isolator (12), mit den folgenden Schritten:
- Zuführen (102) zumindest eines Bauteils (32), insbesondere nach einem der Ansprüche 10 bis 14, für das Verarbeitungssystem (30) in die Umgebung (12) mittels einer Zuführvorrichtung (24) des Barrieresystems (10);
- Aufnehmen (104) des zumindest einen Bauteils (32) mittels einer in der Umgebung (12) angeordneten Handhabungseinrichtung (46) des Barrieresystems (10), vorzugsweise einem Handhabungsroboter;
- Transferieren (106) des zumindest einen aufgenommenen Bauteils (32) innerhalb der Umgebung (12) zwischen der Zuführvorrichtung (24) und einer in der Umgebung (12) angeordneten Station (36) des Barrieresystems (10) mittels der Handhabungseinrichtung (46);
- Koppeln (108) des zumindest einen Bauteils (32) mit der Station (36) mittels der Handhabungseinrichtung (46), um das Bauteil (32) einzubauen; und
- Freigeben (110) des zumindest einen Bauteils (32) mittels der Handhabungseinrichtung (46),
wobei das Verfahren (100) **dadurch gekennzeichnet ist, dass** der Schritt des Aufnehmens (104) einen Schritt des Einführens (120) eines Endeffektors (50) der Handhabungseinrichtung (46) umfasst, wobei der Endeffektor (50) zumindest, zwei voneinander beabstandete Aufnahmeelemente (52) aufweist, wobei die Handhabungseinrichtung (46) dazu eingerichtet ist, den Endeffektor (50) derart zu bewegen, dass die Aufnahmeelemente (52) in Gegenstücke (34) des Bauteils (32) eingreifen, um das Bauteil (32) aufzunehmen; und der Schritt des Freigebens (110) einen Schritt des Ausführens (130) des Endeffektors (50) umfasst, wobei die Handhabungseinrichtung (46) dazu eingerichtet ist, den Endeffektor (50) derart zu bewegen, dass die Aufnahmeelemente (52) und die Gegenstücke (34) des Bauteils (32) voneinander getrennt werden, um das Bauteil (32) freizugeben, wobei der Schritt des Einführens (120) eine Bewegungsabfolge folgender nacheinander ausgeführter Bewegungsschritte ist:
- Erstes Bewegen (122) des Endeffektors (50), sodass zumindest zwei der Aufnahmeelemente (52) jeweils zumindest abschnittsweise in eine Tiefenrichtung ausgehend von einer Oberfläche (94) des Bauteils (32) bewegt werden, wobei jedes Aufnahmeelement (52) die Oberfläche (94) im Bereich des jeweiligen Gegenstücks (34) passiert und wobei die Gegenstücke (34) des zumindest einen Bauteils (32) als Aussparungen (34) in dem Bauteil (32) oder als Aussparungen (34) in einem Adapter (33), der an dem zumindest einen Bauteil (32) fixiert oder fixierbar ist, ausgebildet sind, wobei eine erste Aussparung (34) eine im Wesentlichen halbkreisförmige Aussparung mit einem Kreisdurchmesser (97) ist und die einen ersten Mittelpunkt (96) definiert und eine radiale Öffnung (35) aufweist, deren Breite mindestens gleich dem Kreisdurchmesser (97) der ersten Aussparung (34) ist, und eine zweite, insbesondere im Wesentlichen halbkreisförmige, Aussparung (34') einen zweiten Mittelpunkt (98) definiert, wobei der zweite Mittelpunkt (98) von dem ersten Mittelpunkt (96) in einem Abstand (a) beabstandet ist, wobei die zweite, insbesondere halbkreisförmige, Aussparung (34') einen ersten Bereich (90') der zweiten Aussparung (34') darstellt und wobei die zweite Aussparung (34') einen zweiten Bereich (92') aufweist, der mit dem ersten Bereich (90') verbunden ist, und der dazu eingerichtet ist, eine Bewegung eines der Aufnahmeelemente (52), innerhalb der zweiten Aussparung (34'), von dem zweiten Bereich (92') in den ersten Bereich (90') zu ermöglichen;
- Zweites Bewegen (124) des Endeffektors (50), vorzugsweise geradliniges Bewegen des Endeffektors (50), sodass ein erstes Aufnahmeelement (52) in die erste Aussparung (34) eingreift und eine Mittelachse (54) des ersten Aufnahmeelements (52) mit dem ersten Mittelpunkt (96) zusammenfällt; und
- Drittes Bewegen (126) des Endeffektors (50), vorzugsweise rotatorisches Bewegen des Endeffektors (50), um die Mittelachse (54) des ersten Aufnahmeelements (52), sodass die Bewegung eines zweiten Aufnahmeelements (52') in der zweiten Aussparung (34') von dem zweiten Bereich (92') in den ersten Bereich (90') auf einer Kreisbahn (68), deren Mittelpunkt mit dem ersten Mittelpunkt (96) zusammenfällt, verläuft, wobei sich der zweite Bereich (92') entlang eines Abschnitts der Bahn (68) erstreckt, wobei die Bewegung endet, wenn eine Mittelachse (54') des zweiten Aufnahmeelements (52') mit dem zweiten Mittelpunkt (98) zusammenfällt.

8. Verfahren (100) zum Bereitstellen eines Verarbeitungssystems (30) eines Barrieresystems, insbesondere Isolatorsystems (10), in einer Umgebung mit beschränktem Zugang des Barrieresystems (10), insbesondere einem Isolator (12), mit den folgenden Schritten:
- Zuführen (102) zumindest eines Bauteils (32), insbesondere nach einem der Ansprüche 10 bis 14, für das Verarbeitungssystem (30) in die Umgebung (12) mittels einer Zuführvorrichtung (24) des Barrieresystems (10);
- Aufnehmen (104) des zumindest einen Bauteils (32) mittels einer in der Umgebung (12) angeordneten Handhabungseinrichtung (46) des Barrieresystems (10), vorzugsweise einem Handhabungsroboter;
- Transferieren (106) des zumindest einen aufgenommenen Bauteils (32) innerhalb der Umgebung (12) zwischen der Zuführvorrichtung (24) und einer in der Umgebung (12) angeordneten Station (36) des Barrieresystems (10) mittels der Handhabungseinrichtung (46);
- Koppeln (108) des zumindest einen Bauteils (32) mit der Station (36) mittels der Handhabungseinrichtung (46), um das Bauteil (32) einzubauen; und
- Freigeben (110) des zumindest einen Bauteils (32) mittels der Handhabungseinrichtung (46),
wobei das Verfahren (100) **dadurch gekennzeichnet ist, dass** der Schritt des Aufnehmens (104) einen Schritt des Einführens (120) eines Endeffektors (50) der Handhabungseinrichtung (46) umfasst, wobei der Endeffektor (50) zumindest, zwei voneinander beabstandete Aufnahmeelemente (52) aufweist, wobei die Handhabungseinrichtung (46) dazu eingerichtet ist, den Endeffektor (50) derart zu bewegen, dass die Aufnahmeelemente (52) in Gegenstücke (34) des Bauteils (32) eingreifen, um das Bauteil (32) aufzunehmen; und der Schritt des Freigebens (110) einen Schritt des Ausführens (130) des Endeffektors (50) umfasst, wobei die Handhabungseinrichtung (46) dazu eingerichtet ist, den Endeffektor (50) derart zu bewegen, dass die Aufnahmeelemente (52) und die Gegenstücke (34) des Bauteils (32) voneinander getrennt werden, um das Bauteil (32) freizugeben, wobei der Schritt des Einführens (120) eine Bewegungsabfolge folgender nacheinander ausgeführter Bewegungsschritte ist:
- Erstes Bewegen (122) des Endeffektors (50), sodass zumindest zwei der Aufnahmeelemente (52) jeweils zumindest abschnittsweise in eine Tiefenrichtung ausgehend von einer Oberfläche (94) des Bauteils (32) bewegt werden, wobei jedes Aufnahmeelement (52) die Oberfläche (94) im Bereich des jeweiligen Gegenstücks (34) passiert und wobei die Gegenstücke (34) des zumindest einen Bauteils (32) als Aussparungen (34) in dem Bauteil (32) oder als Aussparungen (34) in einem Adapter (33), der an dem zumindest einen Bauteil (32) fixiert oder fixierbar ist, ausgebildet sind, wobei eine erste Aussparung (34) eine im Wesentlichen halbkreisförmige Aussparung mit einem Kreisdurchmesser (97) ist und die einen ersten Mittelpunkt (96) definiert und eine radiale Öffnung (35) aufweist, deren Breite mindestens gleich dem Kreisdurchmesser (97) der ersten Aussparung (34) ist, und eine zweite, insbesondere im Wesentlichen halbkreisförmige, Aussparung (34') einen zweiten Mittelpunkt (98) definiert, wobei der zweite Mittelpunkt (98) von dem ersten Mittelpunkt (96) in einem Abstand (a) beabstandet ist, wobei die zweite, insbesondere halbkreisförmige, Aussparung (34') einen ersten Bereich (90') der zweiten Aussparung (34') darstellt und wobei die zweite Aussparung (34') einen zweiten Bereich (92') aufweist, der mit dem ersten Bereich (90') verbunden ist, und der dazu eingerichtet ist, eine Bewegung eines der Aufnahmeelemente (52), innerhalb der zweiten Aussparung (34'), von dem zweiten Bereich (92') in den ersten Bereich (90') zu ermöglichen; und
- Weiteres Bewegen (128) des Endeffektors (50), sodass die Bewegungen eines ersten Aufnahmeelements (52) und eines zweiten Aufnahmeelements (52') auf gleichverlaufenden, parallelen Bahnen (66) erfolgen, wobei die Bahnen (66) gradlinig oder gekrümmt sind, wobei sich der zweite Bereich (92, 92') entlang eines Abschnitts der Bahn (66) erstreckt und sodass das erste Aufnahmeelement (52) in die erste Aussparung (34) eingreift und das zweite Aufnahmeelement (52') in die zweite Aussparung (34') eingreift, wobei die Bewegung endet, wenn eine Mittelachse (54) des ersten Aufnahmeelements (52) mit dem ersten Mittelpunkt (96) zusammenfällt und eine Mittelachse (54') des zweiten Aufnahmeelements (52') mit dem zweiten Mittelpunkt (98) zusammenfällt.

9. Verfahren (100) nach Anspruch 7 oder 8, wobei das Verfahren des Weiteren die folgenden Schritte aufweist:
- Entkoppeln (112) des mit der Station (36) gekoppelten Bauteils (32) von der Station (36) mittels der Handhabungseinrichtung (46), um das Bauteil (32) auszubauen, wobei das Bauteil (32) von der Handhabungseinrichtung (46) aufgenommen ist; und
- Ausschleusen (114) des ausgebauten Bauteils (32) mittels Zuführvorrichtung (24) aus der Umgebung mit beschränktem Zugang (12).

10. Verfahren (100) nach einem der Ansprüche 7 bis 9 wobei die Schritte des Einführens (120) und Ausführens (130) des Endeffektors (50) derart ausgeführt werden, dass die Aufnahmeelemente (52) ausschließlich aufgrund der Bewegung des Endeffektors (50) in die Gegenstücke (34) des Bauteils (32) eingreifen und dass die Aufnahmeelemente (52) und die Gegenstücke (34) des Bauteils (32) ausschließlich aufgrund der Bewegung des Endeffektors (50) voneinander getrennt werden, wobei die Aufnahmeelemente (52) unbeweglich ausgestaltet sind.
